# EUROPEAN PATENT APPLICATION

(11) **EP 4 307 708 A1**
(43) Date of publication of application: **17.01.2024**
(21) Application number: 22787254.6
(22) Date of filing: 14.02.2022
(51) Int. Cl.: H04Q 11/00

(54) **IDENTIFICATION METHOD, RELATED DEVICE, AND IDENTIFICATION SYSTEM**

(30) Priority: 16.04.2021 CN 202110414166; 21.07.2021 CN 202110826536; 10.12.2021 CN 202111510724
(71) Applicant: Huawei Technologies Co., Ltd., Shenzhen, Guangdong 518129 (CN)
(72) Inventor: LIN, Huafeng, Shenzhen, Guangdong 518129 (CN); ZHOU, Enyu, Shenzhen, Guangdong 518129 (CN); LI, Shu, Shenzhen, Guangdong 518129 (CN); ZENG, Xiaofei, Shenzhen, Guangdong 518129 (CN)
(74) Representative: Maiwald GmbH
(86) International application number: PCT/CN2022/076151
(87) International publication number: WO 2022/218024

(57) **Abstract**

Embodiments of the present invention provide an identification method, a related device, and an identification system, to effectively improve accuracy and efficiency of establishing a correspondence between an identifier of a port of an optical splitter and an identifier of an optical network device. The identification method is applied to an optical splitter, the optical splitter includes a splitting module and a light guide module, and the method includes: The splitting module receives a target optical signal from an optical network device through a target socket; the splitting module transmits a first optical signal to the light guide module; an out-light surface of the light guide module displays the first optical signal, where the out-light surface is located on the surface of the box and is close to the target socket, and a display status of the first optical signal corresponds to the optical network device.

## Description

This application claims priority to Chinese Patent Application No. 202110414166.8, filed with the China National Intellectual Property Administration on April 16, 2021 and entitled "IDENTIFICATION METHOD, RELATED DEVICE, AND IDENTIFICATION SYSTEM", and the priority to Chinese Patent Application No. 202110826536.9 filed with the China National Intellectual Property Administration on July 21, 2021 and entitled "IDENTIFICATION METHOD, RELATED DEVICE, AND IDENTIFICATION SYSTEM", and priority to Chinese Patent Application No. 202111510724.7, filed with the China National Intellectual Property Administration on December 10, 2021 and entitled "IDENTIFICATION METHOD, RELATED DEVICE, AND IDENTIFICATION SYSTEM", which are incorporated herein by reference in their entireties.

### TECHNICAL FIELD

This application relates to the field of optical fiber communication, and in particular, to an identification method, a related device, and an identification system.

### BACKGROUND

In conventional technologies, when a connection between a port of an optical splitter and an optical network unit (optical network unit, ONL1) is established through an optical cable, a correspondence between the port of the optical splitter and the ONU needs to be automatically bound to a network management device. Therefore, a first identifier needs to be set on an optical fiber connector at either end of the optical cable, a second identifier needs to be set on the port of the optical splitter, and a third identifier needs to be set on the ONU.

A terminal device photographs the optical splitter to obtain a first photo, and the network management device establishes a correspondence between the first identifier and the second identifier based on the first photo. The terminal device then photographs the ONU to obtain a second photo, and the network management device establishes a correspondence between the first identifier and the third identifier based on the second photo. Therefore, the network management device may create a correspondence between the second identifier of the port of the optical splitter and the third identifier of the ONU.

However, in a process of creating the correspondence between the port of the optical splitter and the ONU, an engineering person needs to take photos at the optical splitter and the ONU separately, to obtain photos at the optical splitter and the ONU separately, and record the first identifier of the optical cable into the network management device. As a result, efficiency of establishing the correspondence by the network management device is low, and manual input is error-prone. In addition, the first identifier on the optical cable is prone to falling off, and consequently the correspondence cannot be created.

### SUMMARY

Embodiments of the present invention provide an identification method, a related device, and an identification system, to effectively improve accuracy and efficiency of establishing a correspondence between an identifier of a port of an optical splitter and an identifier of an optical network device.

A first aspect of embodiments of the present invention provides an identification method. The method is applied to an optical splitting system, the optical splitting system includes a splitting module and a light guide module, and the method includes: The splitting module receives a first target optical signal from an optical network device through a target socket, where the target socket is one of a plurality of sockets included on a surface of a box of the optical splitting system; the splitting module transmits a first optical signal to the light guide module, where the first optical signal is a partial optical signal of the first target optical signal; and an out-light surface of the light guide module displays the first optical signal, where the out-light surface is located on the surface of the box and is close to the target socket, and a display status of the first optical signal corresponds to the optical network device.

It can be learned that through the identification method described in this aspect, an identifier of an optical network device connected to each of the plurality of sockets included by the box can be obtained, and efficiency and accuracy of creating a correspondence between an identifier of the socket and the identifier of the optical network device can be improved. In addition, identifiers of optical network devices connected to different sockets can be determined on a side of the optical splitting system based on different display statuses displayed on different out-light surfaces, and an operation and maintenance engineer does not need to obtain the identifiers of the optical network devices at the optical network devices, thereby improving efficiency and accuracy of creating a first target correspondence.

Based on the first aspect, in an optional implementation, identifiers of all sockets and all out-light surfaces included on the surface of the box are located within a photographing range of a camera of a terminal device.

It can be learned that as described in this aspect, when the identifiers of all the sockets and all the out-light surfaces included on the surface of the box are located within the photographing range of the camera of the terminal device, the operation and maintenance engineer may obtain the identifiers of the sockets and the identifiers of the optical network devices by recording the surface of the box of the optical splitting system through the camera of the terminal device, thereby improving accuracy and efficiency of creating a correspondence between the identifiers of the sockets and the identifiers of the optical network devices.

Based on the first aspect, in an optional implementation, the splitting module is a branch optical splitting system, and before the splitting module transmits a first optical signal to the light guide module, the method further includes: The branch optical splitting system performs optical splitting on the first target optical signal to obtain the first optical signal, where the first optical signal includes a partial optical signal of an identification optical signal, and a display status of the identification optical signal corresponds to the optical network device.

Based on the first aspect, in an optional implementation, the splitting module is a demultiplexer, and before the splitting module transmits a first optical signal to the light guide module, the method further includes: The demultiplexer demultiplexes the first target optical signal to obtain the first optical signal, where the first optical signal is an identification optical signal, and a display status of the identification optical signal corresponds to the optical network device.

Based on the first aspect, in an optional implementation, the display status of the first optical signal is at least one of the following: a state of switching between on and off of the first optical signal in a transmission period, duration in which the first optical signal is in an on state each time in the transmission period, an interval between two adjacent times that the first optical signal is in an on state in the transmission period, or a color displayed by the first optical signal.

Based on the first aspect, in an optional implementation, the display status of the first optical signal corresponds to an identifier and/or a type of the optical network device. The type of the optical network device may be whether the optical network device belongs to an enterprise domain or a home domain. The optical network device belonging to the enterprise domain means that the optical network device is used by an enterprise user, and the optical network device belonging to the home domain means that the optical network device is used by a home user.

Based on the first aspect, in an optional implementation, the optical splitting system further includes a branch optical splitter, the branch optical splitter includes the splitting module, and before the splitting module transmits a first optical signal to the light guide module, the method further includes: The branch optical splitter performs optical splitting on the first target optical signal to obtain the first optical signal, where the first optical signal includes a partial optical signal of an identification optical signal, and a display status of the identification optical signal corresponds to the optical network device.

Based on the first aspect, in an optional implementation, the optical splitting system further includes a branch demultiplexer, the branch demultiplexer includes the splitting module, the splitting module is a demultiplexer, and before the splitting module transmits a first optical signal to the light guide module, the method further includes: The demultiplexer demultiplexes the first target optical signal to obtain the first optical signal, where the first optical signal is an identification optical signal, and a display status of the identification optical signal corresponds to the optical network device.

A second aspect of embodiments of the present invention provides an identification method. The method is applied to an optical network device, and the optical network device includes a processing module and a light-emitting component. The method includes: The processing module performs encoding in a preset encoding manner to obtain an identification electrical signal, where the preset encoding manner corresponds to the optical network device; the light-emitting component converts the identification electrical signal from the processing module into an identification optical signal, where a display status of the identification optical signal corresponds to the optical network device; and the light-emitting component sends the identification optical signal to an optical splitting system.

It can be learned that through the method described in this aspect, the optical network device sends the identification optical signal to the optical splitting system, so as to indicate an identifier of the optical network device based on the display status of the identification optical signal, and obtain the identifier of the optical network device based on the display status of the identification optical signal in the optical splitting system. It can be learned that as described in this aspect, in a process of obtaining the identifier of the optical network device, the identifier of the optical network device and an identifier of a socket can be directly obtained from the optical splitting system instead of from the optical network device, thereby improving efficiency of creating a correspondence between the identifier of the optical network device and the identifier of the socket.

Based on the second aspect, in an optional implementation, the optical network device includes one light-emitting component, and that the light-emitting component converts the identification electrical signal from the processing module into the identification optical signal includes: The light-emitting component converts the identification electrical signal into a first identification optical signal having a first wavelength.

Based on the second aspect, in an optional implementation, the optical network device includes a service light-emitting component and a combiner, and before the light-emitting component sends the identification optical signal to the optical splitting system, the method further includes: The combiner combines a service optical signal and the first identification optical signal to form a first target optical signal, where the combiner is in a location where an optical path of the service optical signal emitted by the service light-emitting component intersects an optical path of the first identification optical signal emitted by the light-emitting component. That the light-emitting component sends the identification optical signal to the optical splitting system includes: The light-emitting component sends the first target optical signal to the optical splitting system.

It can be learned that through the method described in this aspect, the correspondence between the identifier of the socket in the optical splitting system and the identifier of the optical network device can be established, without interrupting transmission of the service optical signal of the optical network device, thereby effectively avoiding interruption of transmission of the service optical signal, and improving efficiency of transmission of the service optical signal.

Based on the second aspect, in an optional implementation, the optical network device includes a plurality of light-emitting components, including at least a first light-emitting component and a second light-emitting component. That the light-emitting component converts the identification electrical signal from the processing module into the identification optical signal includes: The first light-emitting component converts a first identification electrical signal from the processing module into a second identification optical signal having a second wavelength; and the second light-emitting component converts a second identification electrical signal from the processing module into a third identification optical signal having a third wavelength, where the second wavelength and the third wavelength are different from each other, and at a same moment, only one of the first light-emitting component and the second light-emitting component is in an on state.

It can be learned that as described in this aspect, the optical network device includes a plurality of light-emitting components. In a scenario in which a quantity of optical network devices connected to the optical splitting system is large, the optical splitting system includes a large quantity of out-light surfaces corresponding to different optical network devices. In order to enable display statuses of different out-light surfaces to correspond to different optical network devices, a large quantity of out-light surfaces need to have different display statuses. In the case that the optical splitting system is connected to a large quantity of optical network devices, that different display statuses of different optical network devices are displayed on respective corresponding out-light surfaces can be ensured by disposing a plurality of light-emitting components on the optical network device side, thereby effectively ensuring accuracy of establishing a correspondence between an identifier of a socket of the optical splitting system and an identifier of an optical network device.

Based on the second aspect, in an optional implementation, the optical network device includes a service light-emitting component, a first combiner, and a second combiner. Before the light-emitting component sends the identification optical signal to the optical splitting system, the method further includes: The first combiner combines a service optical signal and the second identification optical signal to form a combined optical signal, where the first combiner is in a location where an optical path of the service optical signal emitted by the service light-emitting component intersects an optical path of the second identification optical signal emitted by the first light-emitting component; and the second combiner combines the combined optical signal and the third identification optical signal to form a first target optical signal, where the second combiner is in a location where an optical path of the combined optical signal emitted by the first combiner intersects an optical path of the third identification optical signal emitted by the second light-emitting component. That the light-emitting component sends the identification optical signal to the optical splitting system includes: The light-emitting component sends the first target optical signal to the optical splitting system.

It can be learned that through the method described in this aspect, the correspondence between the identifier of the socket in the optical splitting system and the identifier of the optical network device can be established, without interrupting transmission of the service optical signal of the optical network device, thereby effectively avoiding interruption of transmission of the service optical signal, and improving efficiency of transmission of the service optical signal.

Based on the second aspect, in an optional implementation, the optical network device includes only one light-emitting component, and the method further includes: The processing module sends a service electrical signal carrying a service to the light-emitting component; and the light-emitting component converts the service electrical signal into a service optical signal. That the light-emitting component sends the identification optical signal to the optical splitting system includes: The light-emitting component sends the identification optical signal and the service optical signal to the optical splitting system in a time division mode.

It can be learned that as described in this aspect, a light-emitting component dedicated to sending an identification optical signal does not need to be disposed inside the optical network device, and a structure of an existing optical network device does not need to be changed. Therefore, it can be ensured that the light-emitting component included in the optical network device can transmit a service optical signal to the optical splitting system, and can further transmit an identification optical signal to the optical splitting system. Because the structure of the existing optical network device does not need to be changed, costs of applying the method described in this aspect are reduced, efficiency of creating a correspondence between an identifier of an optical network device and an identifier of a socket is improved, workload of an operation and maintenance engineer is greatly reduced, and difficulty of performing operation and maintenance on an identification system is reduced.

Based on the second aspect, in an optional implementation, a frequency of a jumpy bit included in the identification optical signal in a transmission period is less than or equal to a frame rate of a camera, the camera is configured to record a video that includes a surface of a box of the optical splitting system, and the surface of the box is configured to display the identification optical signal.

It can be learned that when the first optical signal displayed by the out-light surface includes the identification optical signal and the service optical signal, because the frame rate of the camera of the terminal device is far less than the frequency of the jumpy bit of the service optical signal, the camera of the terminal device cannot record a display status of the service optical signal, and can record only the display status of the identification optical signal. The service optical signal displayed by the out-light surface does not interfere with the display status of the identification optical signal displayed by the out-light surface, thereby effectively improving accuracy of obtaining the display status of the identification optical signal by the terminal device.

Based on the second aspect, in an optional implementation, the display status of the identification optical signal corresponds to an identifier and/or a type of the optical network device.

A third aspect of embodiments of the present invention provides an identification method. The method is applied to an electronic device, and the method includes: The electronic device obtains a display status of a first optical signal, where the first optical signal is a partial optical signal of a first target optical signal, and the first target optical signal is an optical signal from an optical network device; the electronic device obtains a corresponding identifier of the optical network device based on the display status of the first optical signal; and the electronic device obtains an identifier of a target socket, where the target socket is one of a plurality of sockets included on a surface of a box of an optical splitting system, the identifier of the target socket is for creating a first target correspondence, the first target correspondence includes a correspondence between the identifier of the optical network device and the identifier of the target socket.

For details of descriptions of the advantageous effects described in this aspect, refer to the first aspect or the second aspect. Details are not described again.

Based on the third aspect, in an optional implementation, an out-light surface configured to display the first optical signal is located on the surface of the box, the target socket is located close to the out-light surface, and the first target optical signal is an optical signal received by the optical splitting system from the optical network device through the target socket.

Based on the third aspect, in an optional implementation, an out-light surface configured to display the first optical signal is located on an outer surface of an optical fiber connector, the optical fiber connector is inserted into the target socket, and the first target optical signal is an optical signal transmitted by the optical fiber connector.

It can be learned that as described in this aspect, the out-light surface may be located on the outer surface of the optical fiber connector. Because a splitting module and a light guide module do not need to be disposed in the optical splitting system, a quantity of components included in the optical splitting system is reduced, integration of passive components in the optical splitting system is improved, and operation and maintenance of the optical splitting system are simplified.

Based on the third aspect, in an optional implementation, that the electronic device obtains a display st • atus of a first optical signal includes: The electronic device obtains a video; the electronic device obtains the display status of the first optical signal from the video. That the electronic device obtains an identifier of a target socket includes: The electronic device obtains the identifier of the target socket from the video.

Based on the third aspect, in an optional implementation, the terminal device performs video recording on the surface of the box, to obtain a video including the surface of the box.

Based on the third aspect, in an optional implementation, the terminal device continuously photographs the surface of the box for a plurality of times to obtain a plurality of target photos, where each target photo includes the surface of the box, and a time interval between any two times of photographing is less than a preset time segment, thereby ensuring that the plurality of target photos can completely reflect the display status of the first optical signal, and that the electronic device obtains a display status of a first optical signal includes: The electronic device obtains the display status of the first optical signal from the plurality of target photos. That the electronic device obtains an identifier of a target socket includes: The electronic device obtains the identifier of the target socket from the plurality of target photos.

Based on the third aspect, in an optional implementation, the first optical signal is invisible light, the electronic device is the terminal device, the terminal device includes a visible light camera, the visible light camera is connected to an infrared detector, and that the electronic device obtains a video includes: The infrared detector converts the first optical signal into visible light; the infrared detector transmits the first optical signal presented as the visible light to the visible light camera; and the visible light camera records a display status of the first optical signal presented as the visible light to obtain the video.

Based on the third aspect, in an optional implementation, if the display status of the first optical signal is a steady-off state, the display status of the first optical signal is for indicating that the target socket is not connected to the optical network device or for indicating that the optical network device is in a non-operating state.

It can be learned that based on the method described in this aspect, a dumb resource socket can be determined from the surface of the box, so that an operation and maintenance engineer pulls out an optical cable from the dumb resource socket, thereby improving accuracy and efficiency of cleaning a dumb resource.

Based on the third aspect, in an optional implementation, the target socket is one of a plurality of sockets included on the surface of the box, and the target socket and the target status indication information satisfy a first identification condition, where the first identification condition may be one or more of the following:

The target socket is close to a location of a target out-light surface on the surface of the box, or the target out-light surface is located in a first orientation of the target socket on the surface of the box, where the electronic device decodes a display status of the target out-light surface to obtain the target status indication information.

Based on the third aspect, in an optional implementation, after the electronic device obtains the target socket from the video, the electronic device identifies the identifier of the target socket from the video, where the identifier of the target socket and the target socket satisfy a second identification condition, where the second identification condition may be one or more of the following:

The identifier of the target socket is close to a location of the target socket on the surface of the box, or the identifier of the target socket is located in a second orientation of the target socket on the surface of the box.

Based on the third aspect, in an optional implementation, the identifier of the target socket may be a two-dimensional code, a unique identifier, a bar code, or digital text information.

Based on the third aspect, in an optional implementation, the electronic device prestores an identification image, the electronic device stores a correspondence between location information of each socket and an identifier of the socket in the identification image. After the electronic device obtains the video, the method further includes: The electronic device obtains a target image included in the video, where the target image is one frame of image included in the video, the electronic device obtains, from the target image, target location information of the target socket in the target image, and the electronic device obtains the corresponding identifier of the target socket based on the target location information.

Based on the third aspect, in an optional implementation, the target out-light surface and the identifier of the target socket partially overlap.

Based on the third aspect, in an optional implementation, the electronic device determines, in a target image, an identifier that satisfies a third identification condition as an identifier of an optical splitting system, where the target image is one frame of images included in the video, and the third identification condition may be that the identifier of the optical splitting system is in a preset location on the surface of the box.

Based on the third aspect, in an optional implementation, the display status of the first optical signal corresponds to an identifier and/or a type of the optical network device.

A fourth aspect of embodiments of the present invention provides an optical splitting system. The optical splitting system includes a surface of a box, the surface of the box includes a plurality of sockets, and a target socket is one of the plurality of sockets included on the surface of the box. The optical splitting system further includes a splitting module and a light guide module. The splitting module is configured to receive a first target optical signal from an optical network device through the target socket and transmit the first optical signal to the light guide module, and the first optical signal is a partial optical signal of the first target optical signal; and an out-light surface of the light guide module is located on the surface of the box and is close to the target socket, the out-light surface is configured to display the first optical signal, a display status of the first optical signal corresponds to the optical network device, and an identifier of the target socket is located on the surface of the box and is close to the target socket.

For details of descriptions of the advantageous effects described in this aspect, refer to the first aspect to the third aspect. Details are not described again.

Based on the fourth aspect, in an optional implementation, the splitting module includes a splitter, a first input optical cable, and a first output port, and the first input optical cable is connected to the target socket; and the splitter is configured to receive the first target optical signal through the first input optical cable, the splitter is configured to perform optical splitting on the first target optical signal to obtain the first optical signal, the first optical signal includes a partial optical signal of an identification optical signal, a display status of the identification optical signal corresponds to the optical network device, and the light guide module is configured to receive the first optical signal through the first output port.

Based on the fourth aspect, in an optional implementation, the splitter is manufactured through fused tapering, and is manufactured using a planar waveguide technology or a semiconductor technology.

Based on the fourth aspect, in an optional implementation, the splitting module includes a demultiplexer, a second input optical cable, and a second output port. The second input optical cable is connected to the target socket. The demultiplexer is configured to receive the first target optical signal through the second input optical cable, and demultiplex the first target optical signal to obtain the first optical signal, where the first optical signal is an identification optical signal, a display status of the identification optical signal corresponds to the optical network device. The light guide module is configured to receive the first optical signal through the second output port.

Based on the fourth aspect, in an optional implementation, the demultiplexer may implement demultiplexing in a wavelength division multiplexing (wavelength division multiplexing, WDM) mode.

Based on the fourth aspect, in an optional implementation, the light guide module includes a light guide body, two end surfaces of the light guide body are an in-light surface and the out-light surface, the out-light surface passes through the box and is located on the surface of the box, and the light guide body is configured to receive the first optical signal through the in-light surface and is configured to transmit the first optical signal to the out-light surface.

Based on the fourth aspect, in an optional implementation, an outer surface of the out-light surface has a coating layer made of a fluorescent material, and the coating layer is configured to convert the first optical signal into a visible light signal.

Based on the fourth aspect, in an optional implementation, the display status of the first optical signal corresponds to an identifier and/or a type of the optical network device.

A fifth aspect of embodiments of the present invention provides an optical network device. The optical network device includes a processing module and a light-emitting component connected to the processing module. The processing module is configured to perform encoding in a preset encoding manner to obtain an identification electrical signal, where the preset encoding manner corresponds to the optical network device. The light-emitting component is configured to convert the identification electrical signal from the processing module into an identification optical signal, where a display status of the identification optical signal corresponds to the optical network device. The light-emitting component is further configured to send the identification optical signal to an optical splitting system.

For details of descriptions of the advantageous effects described in this aspect, refer to the foregoing aspects. Details are not described again.

Based on the fifth aspect, in an optional implementation, the optical network device includes one light-emitting component, and the light-emitting component is configured to convert the identification electrical signal into a first identification optical signal having a first wavelength.

Based on the fifth aspect, in an optional implementation, the optical network device includes a service light-emitting component and a combiner. The combiner is in a location where an optical path of the service optical signal emitted by the service light-emitting component intersects an optical path of the first identification optical signal emitted by the light-emitting component. The combiner is configured to combine a service optical signal and the first identification optical signal to form a first target optical signal, and send the first target optical signal to the optical splitting system.

Based on the fifth aspect, in an optional implementation, the optical network device includes a plurality of light-emitting components, including at least a first light-emitting component and a second light-emitting component that are connected to the processing module. The first light-emitting component is configured to convert a first identification electrical signal into a second identification optical signal having a second wavelength, and the second light-emitting component is configured to convert a second identification electrical signal into a third identification optical signal having a third wavelength, where the second wavelength and the third wavelength are different from each other. At a same moment, only one of the first light-emitting component and the second light-emitting component is in an on state.

Based on the fifth aspect, in an optional implementation, the optical network device includes a service light-emitting component, a first combiner, and a second combiner. The first combiner is in a location where an optical path of the service optical signal emitted by the service light-emitting component intersects an optical path of the second identification optical signal emitted by the first light-emitting component. The second combiner is in a location where an optical path of the combined optical signal emitted by the first combiner intersects an optical path of the third identification optical signal emitted by the second light-emitting component. The first combiner is configured to combine a service optical signal and the second identification optical signal to form a combined optical signal. The second combiner is configured to combine the combined optical signal and the third identification optical signal to form a first target optical signal, and the combiner is configured to send the first target optical signal to the optical splitting system.

Based on the fifth aspect, in an optional implementation, the display status of the identification optical signal corresponds to an identifier and/or a type of the optical network device.

A sixth aspect of embodiments of the present invention provides an optical fiber connector. The optical fiber connector includes a splitting module and a light guide module. The splitting module is configured to receive a first target optical signal from an optical network device and transmit the first optical signal to the light guide module, and the first optical signal is a partial optical signal of the first target optical signal; and an out-light surface of the light guide module is located on an outer surface of the optical fiber connector, the out-light surface is configured to display the first optical signal, and a display status of the first optical signal corresponds to the optical network device.

For details of descriptions of the advantageous effects described in this aspect, refer to the foregoing aspects. Details are not described again.

A seventh aspect of embodiments of the present invention provides an identification system, including the optical splitting system according to any one of the foregoing fourth aspect, the optical network device according to any one of the foregoing fifth aspect, and an electronic device.

The electronic device is configured to obtain a display status of a first optical signal displayed by the optical splitting system, where the first optical signal is a partial optical signal of a first target optical signal, and the first target optical signal is an optical signal from the optical network device.

The electronic device is configured to obtain a corresponding identifier of the optical network device based on the display status of the first optical signal.

The electronic device is configured to obtain an identifier of a target socket, where the target socket is one of a plurality of sockets included on a surface of a box of an optical splitting system, the identifier of the target socket is for creating a first target correspondence, the first target correspondence includes a correspondence between the identifier of the optical network device and the identifier of the target socket.

For details of descriptions of the advantageous effects described in this aspect, refer to the foregoing aspects. Details are not described again.

An eighth aspect of embodiments of the present invention provides an identification system, including the optical network device according to any one of the foregoing fifth aspect, the optical fiber connector according to the foregoing sixth aspect, an optical splitting system, and an electronic device. The optical fiber connector is inserted into a target socket of the optical splitting system, and the target socket is one of a plurality of sockets included on a surface of a box of the optical splitting system;
the electronic device is configured to obtain a display status of a first optical signal displayed by the optical fiber connector, where the first optical signal is a partial optical signal of a first target optical signal, and the first target optical signal is an optical signal from the optical network device;
the electronic device is configured to obtain a corresponding identifier of the optical network device based on the display status of the first optical signal; and
the electronic device is configured to obtain an identifier of a target socket, where the target socket is one of a plurality of sockets included on a surface of a box of an optical splitting system, the identifier of the target socket is for creating a first target correspondence, the first target correspondence includes a correspondence between the identifier of the optical network device and the identifier of the target socket.

A ninth aspect of embodiments of the present invention provides an identification method. The method is applied to an optical splitting system, and the optical splitting system includes a splitting module and a light guide module. The method includes: The splitting module receives a first target optical signal from an optical network device through a target socket, where the target socket is one of a plurality of sockets included on a surface of a box of the optical splitting system; the splitting module transmits a first optical signal to the light guide module, where the first optical signal is a partial optical signal of the first target optical signal; and an out-light surface of the light guide module displays the first optical signal, where a display status of the first optical signal corresponds to the optical network device.

Based on the ninth aspect, in an optional implementation, the splitting module includes a branch optical splitting system. Before the splitting module transmits a first optical signal to the light guide module, the method further includes: The branch optical splitting system performs optical splitting on the first target optical signal to obtain the first optical signal, where the first optical signal includes a partial optical signal of an identification optical signal, and a display status of the identification optical signal corresponds to the optical network device.

Based on the ninth aspect, in an optional implementation, the splitting module includes a demultiplexer. Before the splitting module transmits a first optical signal to the light guide module, the method further includes: The demultiplexer demultiplexes the first target optical signal to obtain the first optical signal, where the first optical signal is an identification optical signal, and a display status of the identification optical signal corresponds to the optical network device.

Based on the ninth aspect, in an optional implementation, the display status of the first optical signal in a target time segment includes at least one of the following: an on state that the first optical signal is in, an off state that the first optical signal is in, a state of switching between on and off of the first optical signal, duration in which the first optical signal is in an on state each time, duration in which the first optical signal is in an off state each time, an interval between two adjacent times that the first optical signal is in an on state, or a color displayed by the first optical signal.

Based on the ninth aspect, in an optional implementation, the display status of the first optical signal corresponds to an identifier and/or a type of the optical network device.

A tenth aspect of embodiments of the present invention provides an identification method. The method is applied to an optical network device, and the optical network device includes a processing module and a light-emitting component. The method includes: The processing module encodes an identifier and/or a type of the optical network device in a preset encoding manner to obtain an identification electrical signal, where the identification electrical signal corresponds to the identifier and/or the type of the optical network device; the light-emitting component converts the identification electrical signal from the processing module into an identification optical signal, where a display status of the identification optical signal corresponds to the identifier and/or the type of the optical network device; and the light-emitting component converts the identification electrical signal into an identification optical signal through electro-optical conversion, and sends the identification optical signal to an optical splitting system.

Based on the tenth aspect, in an optional implementation, the light-emitting component includes an identification light-emitting component, and that the light-emitting component converts the identification electrical signal into an identification optical signal through electro-optical conversion includes: The identification light-emitting component converts the identification electrical signal into a first identification optical signal having a first wavelength.

Based on the tenth aspect, in an optional implementation, the light-emitting component further includes a service light-emitting component, the optical network device further includes a combiner, and that the light-emitting component converts the identification electrical signal into an identification optical signal through electro-optical conversion, and sends the identification optical signal to an optical splitting system includes: The service light-emitting component transmits a service optical signal; the combiner combines the service optical signal and the first identification optical signal from the identification light-emitting component to form a first target optical signal; and the optical network device outputs the first target optical signal to the optical splitting system.

Based on the tenth aspect, in an optional implementation, the light-emitting component includes a plurality of identification light-emitting components, including at least a first identification light-emitting component and a second identification light-emitting component. That the light-emitting component converts the identification electrical signal into an identification optical signal through electro-optical conversion includes: The first identification light-emitting component converts a first identification electrical signal from the processing module into a second identification optical signal having a second wavelength; and the second identification light-emitting component converts a second identification electrical signal from the processing module into a third identification optical signal having a third wavelength, where the second wavelength and the third wavelength are different from each other.

Based on the tenth aspect, in an optional implementation, the light-emitting component further includes a service light-emitting component, the optical network device further includes a first combiner and a second combiner, and that the light-emitting component converts the identification electrical signal into an identification optical signal through electro-optical conversion, and sends the identification optical signal to an optical splitting system includes: The first combiner combines the second identification optical signal from the first identification light-emitting component and a service optical signal to form a combined optical signal; the second combiner combines the combined optical signal and the third identification optical signal from the second identification light-emitting component to form a first target optical signal; and the optical network device sends the first target optical signal to the optical splitting system.

Based on the tenth aspect, in an optional implementation, the light-emitting component includes a service light-emitting component, and the method further includes: The processing module converts service data into a service electrical signal; the service light-emitting component converts the service electrical signal into a service optical signal; the service light-emitting component converts the identification electrical signal into the identification optical signal; and the service light-emitting component sends the identification optical signal and the service optical signal to the optical splitting system in a time division mode.

Based on the tenth aspect, in an optional implementation, a bit change frequency of the identification optical signal is less than or equal to a frame rate of a camera, and the camera is configured to record the display status of the identification optical signal.

An eleventh aspect of embodiments of the present invention provides an identification method. The method is applied to an electronic device, and the method includes: The electronic device obtains a display status of a first optical signal, where the first optical signal is a partial optical signal of a first target optical signal, and the first target optical signal is an optical signal from an optical network device; the electronic device obtains a corresponding identifier and/or type of the optical network device based on the display status of the first optical signal; and the electronic device obtains an identifier of a target socket, where the target socket is one of a plurality of sockets included on a surface of a box of an optical splitting system, the identifier of the target socket is for creating a first target correspondence, the first target correspondence includes a correspondence between the identifier of the optical network device and the identifier of the target socket, and/or the first target correspondence includes a correspondence between the type of the optical network device and the identifier of the target socket.

Based on the eleventh aspect, in an optional implementation, an out-light surface configured to display the first optical signal is located on the surface of the box, and the first target optical signal is an optical signal received by the optical splitting system from the optical network device through the target socket.

Based on the eleventh aspect, in an optional implementation, an out-light surface configured to display the first optical signal is located on an outer surface of an optical fiber connector, the optical fiber connector is connected to the target socket, and the first optical signal is an optical signal that is received from the optical network device and that is transmitted by the optical fiber connector.

Based on the eleventh aspect, in an optional implementation, that the electronic device obtains a display status of a first optical signal includes: The electronic device obtains a video; the electronic device obtains the display status of the first optical signal from the video; and the electronic device obtains the identifier and/or the type of the optical network device from the display status of the first optical signal. That the electronic device obtains an identifier of a target socket includes: The electronic device obtains the identifier of the target socket from the video.

Based on the eleventh aspect, in an optional implementation, the first optical signal is invisible light, the electronic device is a terminal device, the terminal device is connected to an infrared detector, and that the electronic device obtains a video includes: The infrared detector records the display status of the first optical signal to obtain the video.

Based on the eleventh aspect, in an optional implementation, if the display status of the first optical signal is a steady-off state, the steady-off state is for indicating that the target socket is not connected to the optical network device or the optical network device is in a non-operating state.

Based on the eleventh aspect, in an optional implementation, the method further includes: The electronic device obtains a second target correspondence, where the second target correspondence includes a correspondence between information about an optical line terminal and the optical splitting system, the electronic device obtains, based on a display status of a second target optical signal displayed at the optical splitting system, a correspondence between the optical splitting system and the information about the optical line terminal, and the second target optical signal is an optical signal from the optical line terminal; the electronic device obtains a third target correspondence, where the third target correspondence includes a correspondence between the optical network device and the information about the optical line terminal; and the electronic device creates a fourth target correspondence based on the first target correspondence, the second target correspondence, and the third target correspondence, where the fourth target correspondence includes a correspondence between the information about the optical line terminal, the optical splitting system, and the optical network device.

Based on the eleventh aspect, in an optional implementation, the information about the optical line terminal includes one or more of the following: a geographic location, an equipment room identifier, a rack number, a subrack number, line card number, a slot number, a port number, a type, or an identifier.

A twelfth aspect of embodiments of the present invention provides an optical splitting system. The optical splitting system includes a surface of a box, the surface of the box includes a plurality of sockets, and a target socket is one of the plurality of sockets included on the surface of the box. The optical splitting system further includes a splitting module and a light guide module. The splitting module is configured to receive a first target optical signal from an optical network device through the target socket and transmit the first optical signal to the light guide module, and the first optical signal is a partial optical signal of the first target optical signal; and an out-light surface of the light guide module is configured to display the first optical signal, and a display status of the first optical signal corresponds to an identifier and/or a type of the optical network device.

Based on the twelfth aspect, in an optional implementation, the splitting module is located in a branch optical splitter configured to perform optical splitting on the first target optical signal, or the splitting module is located in a branch demultiplexer configured to demultiplex the first target optical signal.

Based on the twelfth aspect, in an optional implementation, the splitting module includes a splitter, a first input optical cable, and a first output port, and the first input optical cable is connected to the target socket. The splitter is configured to receive the first target optical signal through the first input optical cable, and perform optical splitting on the first target optical signal to obtain the first optical signal, where the first optical signal includes a partial optical signal of an identification optical signal, a display status of the identification optical signal corresponds to the identifier and/or the type of the optical network device. The light guide module is configured to receive the first optical signal through the first output port.

Based on the twelfth aspect, in an optional implementation, the splitting module includes a demultiplexer, a second input optical cable, and a second output port, and the second input optical cable is connected to the target socket. The demultiplexer is configured to receive the first target optical signal through the second input optical cable, and demultiplex the first target optical signal to obtain the first optical signal, where the first optical signal is an identification optical signal, and a display status of the identification optical signal corresponds to the identifier and/or the type of the optical network device. The light guide module is configured to receive the first optical signal through the second output port.

Based on the twelfth aspect, in an optional implementation, the light guide module includes a light guide body, two end surfaces of the light guide body are an in-light surface and the out-light surface, the out-light surface passes through the box and is located on the surface of the box, and the light guide body is configured to receive the first optical signal through the in-light surface and is configured to transmit the first optical signal to the out-light surface.

Based on the twelfth aspect, in an optional implementation, the splitting module includes a light-transmitting sleeve sleeved on an outer peripheral surface of an input optical cable, the first target optical signal transmitted by the input optical cable is for illuminating the light-transmitting sleeve, and the illuminated light-transmitting sleeve transmits the first optical signal to the light guide module; or the splitting module includes a grating, where the grating is configured to separate the first optical signal from the first target optical signal, or the splitting module includes a light guide cable in a bent state, where the light guide optical cable in the bent state is configured to separate the first optical signal from the first target optical signal.

Based on the twelfth aspect, in an optional implementation, an outer surface of the out-light surface has a coating layer made of a fluorescent material, and the coating layer is configured to convert the first optical signal into a visible light signal.

A thirteenth aspect of embodiments of the present invention provides an optical network device. The optical network device includes a processing module and a light-emitting component connected to the processing module. The processing module is configured to encode an identifier and/or a type of the optical network device in a preset encoding manner to obtain an identification electrical signal, where the identification electrical signal corresponds to the identifier and/or the type of the optical network device. The light-emitting component is configured to convert the identification electrical signal from the processing module into an identification optical signal, where a display status of the identification optical signal corresponds to the identifier and/or the type of the optical network device. The light-emitting component is further configured to convert the identification electrical signal into an identification optical signal through electro-optical conversion, and send the identification optical signal to an optical splitting system.

Based on the thirteenth aspect, in an optional implementation, the light-emitting component includes an identification light-emitting component, configured to convert the identification electrical signal into a first identification optical signal having a first wavelength.

Based on the thirteenth aspect, in an optional implementation, the light-emitting component further includes a service light-emitting component, and the optical network device further includes a combiner. The service light-emitting component is configured to transmit a service optical signal. The combiner is configured to combine the service optical signal and the first identification optical signal from the identification light-emitting component to form a first target optical signal, and further configured to output the first target optical signal to the optical splitting system.

Based on the thirteenth aspect, in an optional implementation, the light-emitting component includes a plurality of identification light-emitting components, including at least a first identification light-emitting component and a second identification light-emitting component that are connected to the processing module. The first identification light-emitting component is configured to convert a first identification electrical signal from the processing module into a second identification optical signal having a second wavelength, and the second identification light-emitting component is configured to convert a second identification electrical signal from the processing module into a third identification optical signal having a third wavelength, where the second wavelength and the third wavelength are different from each other.

Based on the thirteenth aspect, in an optional implementation, the light-emitting component further includes a service light-emitting component, and the optical network device further includes a first combiner and a second combiner. The first combiner is configured to combine the second identification optical signal from the first identification light-emitting component and a service optical signal to form a combined optical signal. The second combiner is configured to combine the combined optical signal and the third identification optical signal from the second identification light-emitting component to form a first target optical signal; and the second combiner is configured to output the first target optical signal to the optical splitting system.

Based on the thirteenth aspect, in an optional implementation, the light-emitting component includes a service light-emitting component, and the processing module is configured to convert service data into a service electrical signal; and the service light-emitting component is configured to: convert the service electrical signal into a service optical signal; convert the identification electrical signal into the identification optical signal; and send the identification optical signal and the service optical signal to the optical splitting system in a time division mode.

A fourteenth aspect of embodiments of the present invention provides an optical fiber connector. The optical fiber connector includes a splitting module and a light guide module. The splitting module is configured to receive a first target optical signal from an optical network device and transmit the first optical signal to the light guide module, and the first optical signal is a partial optical signal of the first target optical signal; and an out-light surface of the light guide module is located on an outer surface of the optical fiber connector, the out-light surface is configured to display the first optical signal, and a display status of the first optical signal corresponds to an identifier and/or a type of the optical network device.

A fifteenth aspect of embodiments of the present invention provides an electronic device, including a processing module and a memory. The processing module is configured to read and execute a computer program stored in the memory, to perform the method according to any one of the eleventh aspect.

A sixteenth aspect of embodiments of the present invention provides an identification system, including the optical splitting system according to any one of the twelfth aspect, the optical network device according to any one of the thirteenth aspect, and the electronic device according to the fifteenth aspect.

A seventeenth aspect of embodiments of the present invention provides an identification system, including the optical fiber connector according to the fourteenth aspect, the optical network device according to any one of the thirteenth aspect, and the electronic device according to the fifteenth aspect.

An eighteenth aspect of embodiments of the present invention provides an identification method, applied to an identification system. The identification system includes an optical network device, an optical line terminal, and an electronic device; and further includes N optical splitting systems sequentially connected between the optical line terminal and the optical network device. The electronic device creates a first target correspondence, where the first target correspondence includes a correspondence between identifiers and/or types of the N optical splitting systems and an identifier and/or a type of the optical network device, and the electronic device creates the first target correspondence based on the method according to any one of the eleventh aspect. The electronic device obtains a second target correspondence, where the second target correspondence includes a correspondence between information about the optical line terminal and the N optical splitting systems, the electronic device obtains, based on a display status of a second target optical signal displayed at each of the optical splitting systems, a correspondence between each of the optical splitting systems and the information about the optical line terminal, and the second target optical signal is an optical signal from the optical line terminal. The electronic device obtains a third target correspondence, where the third target correspondence includes a correspondence between the optical network device and the information about the optical line terminal. The electronic device creates a fourth target correspondence based on the first target correspondence, the second target correspondence, and the third target correspondence, where the fourth target correspondence includes a correspondence between the information about the optical line terminal, the N optical splitting systems, and the optical network device.

Based on the eighteenth aspect, in an optional implementation, the information about the optical line terminal includes one or more of the following: a geographic location, an equipment room identifier, a rack number, a subrack number, line card number, a slot number, a port number, a type, or an identifier.

### BRIEF DESCRIPTION OF DRAWINGS

FIG. 1 is an example diagram of a structure of an embodiment of an optical fiber communications system according to this application;
FIG. 2 is an example diagram of a structure of a first embodiment of an identification system according to this application;
FIG. 3 is an example diagram of a structure of a first embodiment of an optical network unit according to this application;
FIG. 4 is an example diagram of encoding of a first embodiment of a first identification optical signal according to this application;
FIG. 5 is an example diagram of an overall structure of a first embodiment an optical splitter according to this application;
FIG. 6a is an example diagram of a side-view structure of a first embodiment of an optical splitter according to this application;
FIG. 6b is an example diagram of an enlarged structure of a first embodiment of a branch optical splitter included in FIG. 6a;
FIG. 6c is an example diagram of a side-view structure of a second embodiment of an optical splitter according to this application;
FIG. 6d is an example diagram of a side-view structure of a third embodiment of an optical splitter according to this application;
FIG. 6e is an example diagram of a side-view structure of a fourth embodiment of an optical splitter according to this application;
FIG. 6f is an example diagram of a side-view structure of a fifth embodiment of an optical splitter according to this application;
FIG. 6g is an example diagram of a side-view structure of a sixth embodiment of an optical splitter according to this application;
FIG. 7a is an example diagram of a structure of a first embodiment of a first light guide module according to this application;
FIG. 7b is an example diagram of a structure of a second embodiment of a first light guide module according to this application;
FIG. 7c is an example diagram of a structure of a third embodiment of a first light guide module according to this application;
FIG. 8a(1) and FIG. 8a(2) are a step flowchart of a first embodiment of an identification method according to this application;
FIG. 8b is an example diagram of decoding a first identification optical signal according to this application;
FIG. 8c is an example diagram of encoding of an embodiment of a first target optical signal according to this application;
FIG. 9 is a step flowchart of a second embodiment of an identification method according to this application;
FIG. 10 is a step flowchart of a third embodiment of an identification method according to this application;
FIG. 11 is an example diagram of a structure of a second embodiment of an identification system according to this application;
FIG. 12 is an example diagram of encoding of a third embodiment of an identification electrical signal according to this application;
FIG. 13 is an example diagram of a structure of a second embodiment of an optical network unit according to this application;
FIG. 14 is an example diagram of encoding of a first embodiment of a first target optical signal according to this application;
FIG. 15 is an example diagram of a structure of a third embodiment of an identification system according to this application;
FIG. 16 is a step flowchart of an embodiment of cleaning a dumb resource socket according to this application;
FIG. 17 is an example diagram of an embodiment of an indication photo according to this application;
FIG. 18 is an example diagram of a structure of a fourth embodiment of an identification system according to this application;
FIG. 19 is an example diagram of a structure of a first embodiment a surface of a box of an optical splitter according to this application;
FIG. 20 is a step flowchart of a fourth embodiment of an identification method according to this application;
FIG. 21 is an example diagram of a structure of a fifth embodiment of an identification system according to this application;
FIG. 22 is an example diagram of a structure of a sixth embodiment of an identification system according to this application;
FIG. 23 is an example diagram of a structure of a first embodiment of an optical fiber connector according to this application; and
FIG. 24 is an example diagram of a structure of a second embodiment of an optical fiber connector according to this application.

### DESCRIPTION OF EMBODIMENTS

The following clearly and completely describes the technical solutions in embodiments of the present invention with reference to the accompanying drawings in embodiments of the present invention. Apparently, the described embodiments are merely some but not all of embodiments of the present invention. All other embodiments obtained by a person skilled in the art based on embodiments of the present invention without creative efforts shall fall within the protection scope of the present invention.

The term "and/or" in this application may be an association relationship for describing associated objects, and indicates that three relationships may exist. For example, A and/or B may indicate the following three cases: Only A exists, both A and B exist, and only B exists. In addition, the character "/" in this application generally represents that the associated object is in an "or" relationship. In the specification, claims, and accompanying drawings of this application, the terms "first", "second", and the like are intended to distinguish between similar objects but do not necessarily indicate a specific order or sequence. It should be understood that the objects used in such a way are interchangeable in proper circumstances, so that embodiments described herein can be implemented in other orders than the order illustrated or described herein. For example, a first target optical signal, a second target optical signal, a first optical signal, a second optical signal, and the like described in this application are merely used to differentiate between different optical signals. Any optical signal shown in this application may use any other name, provided that different optical signals can be differentiated.

An identification method provided in this application is applied to an optical fiber communication system. The optical fiber communication system can effectively improve accuracy and efficiency of establishing a correspondence between an identifier of a port of an optical splitter and an identifier of an optical network device. The following first describes the optical fiber communication system.

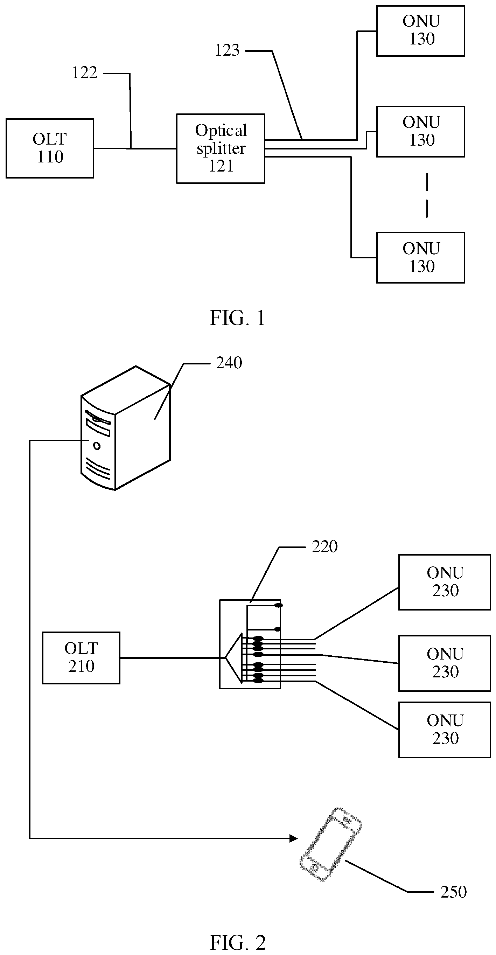

Refer to FIG. 1. FIG. 1 is an example diagram of a structure of an embodiment of an optical fiber communications system according to this application. It can be learned from FIG. 1 that an example in which an optical fiber communications system is a passive optical network (passive optical network, PON) system is used for description in this application.

The PON system includes an optical line terminal (optical line terminal, OLT) 110, and the OLT 110 is configured to provide a network-side interface for an optical access network (optical access network, OAN). The OLT 110 is connected to a network device (for example, a switch, a router, or the like) at an upper layer, and is connected to one or more optical distribution networks (optical distribution network, ODN) at a lower layer.

The ODN is divided into three parts: an optical splitter 121, a backbone optical cable 122 connected between the OLT 110 and the optical splitter 121, and a branch optical cable 123 connected between the optical splitter 121 and an ONU 130. The backbone optical cable 122 is configured to transmit an optical signal between the OLT 110 and the optical splitter 121, and the branch optical cable 123 is configured to transmit an optical signal between the optical splitter 121 and the ONU 130.

When the OLT 110 needs to transmit a downlink optical signal to the ONU 130, the ODN transmits the downlink optical signal from the OLT 110 to each ONU through the optical splitter 121. Similarly, when the ONUs 130 need to transmit uplink optical signals to the OLT 110, the ODN aggregates the uplink optical signals from the ONUs 130 through the optical splitter 121, and then transmits the aggregated uplink optical signals to the OLT 110.

The ONU 130 provides a user-side interface for the OAN and is connected to the ODN. If the ONU 130 also provides a user port function, for example, the ONU provides an Ethernet (Ethernet) user port or a plain old telephone service (plain old telephone service, POTS) user port, the ONU is referred to as an optical network terminal (optical network terminal, ONT). In this application, an ONU or an ONT is collectively referred to as an optical network unit ONU.

Based on the optical fiber communication device shown in FIG. 1, the following describes this application through embodiments.

### Embodiment 1

This embodiment provides an identification system. The identification system can accurately and efficiently create a first target correspondence, and can obtain, based on the first target correspondence, ONUs connected to ports of an optical splitter through optical cables.

The following describes a structure of an identification system provided in this application with reference to FIG. 2. FIG. 2 is an example diagram of a structure of a first embodiment of an identification system according to this application. For specific descriptions of an OLT 210, an optical splitter 220, and an ONU 230 included in the identification system described in this embodiment, refer to FIG. 1. Details are not described in this embodiment.

The identification system described in this embodiment further includes a terminal device 250 and a network management device 240. The terminal device 250 described in this embodiment may be any terminal that is conveniently carried by an engineering person and that has a camera. For example, the terminal device 250 may be a smartphone or a tablet computer, and the network management device 240 may be one or more computers capable of exchanging information with the terminal device 250, the OLT 210, and the ONU 230.

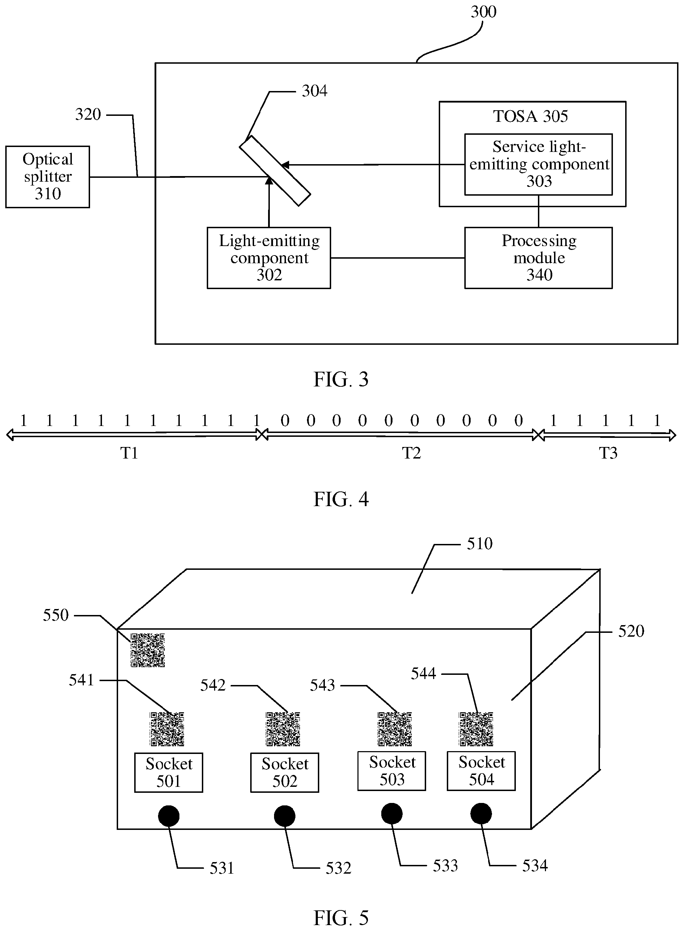

The following describes a structure of the ONU included in the identification system described in this embodiment with reference to FIG. 3. FIG. 3 is an example diagram of a structure of a first embodiment of an optical network unit according to this application.

The ONU 300 described in this embodiment includes a light-emitting component 302 and a transmitter optical subassembly (transmitter optical subassembly, TOSA) 305. The TOSA 305 may also be referred to as an optical transmitter. This embodiment is described through an example in which the light-emitting component 302 and the TOSA 305 are separately and independently disposed in the ONU 300. In another example, the light-emitting component 302 may alternatively be disposed in the TOSA 305, which is not specifically limited in this embodiment.

The ONU 300 described in this embodiment further includes a processing module 340 connected to the light-emitting component 302. The processing module 340 is configured to generate an identification electrical signal, and send the identification electrical signal to the light-emitting component 302. The light-emitting component 302 is configured to perform electrical-to-optical conversion on the identification electrical signal to obtain a first identification optical signal.

The first identification electrical signal described in this embodiment may be equipment serial number (SN) information or media access control (media access control, MAC) information. Because the SN information or the MAC information uniquely identifies the ONU, the first identification optical signal obtained by performing electrical-to-optical conversion on the identification electrical signal can also uniquely identify the ONU.

A form of the processing module 340 is not limited in this embodiment. For example, the processing module 340 may be one or more chips, or one or more integrated circuits. For example, the processing module 340 may be one or more field-programmable gate arrays (field-programmable gate array, FPGA), an application-specific integrated circuit (application-specific integrated circuit, ASIC), a system on chip (system on chip, SoC), a central processing unit (central processing unit, CPU), a network processor (network processor, NP), a micro controller unit (micro controller unit, MCU), a programmable logic device (programmable logic device, PLD) or another integrated chip, or any combination of the foregoing chips or processors, or the like. Details are not described again.

The light-emitting component 302 described in this embodiment is configured to convert an identification electrical signal from the processing module 340 into a first identification optical signal having a first wavelength, and the first identification optical signal having the first wavelength is a visible light signal. To convert an identification electrical signal into a visible light signal, the light-emitting component 302 described in this embodiment may be a light-emitting diode (light-emitting diode, LED) or a laser diode (laser diode, LD). A camera of the terminal device in this embodiment is a visible light camera, so as to ensure that when the first identification optical signal is displayed at an optical splitter, the visible light camera of the terminal device can successfully record a display status of the first identification optical signal.

This embodiment is described through an example in which the first identification optical signal emitted by the light-emitting component 302 is a visible light signal. In another example, the first identification optical signal emitted by the light-emitting component 302 may alternatively be invisible light, provided that the display status of the first identification optical signal can be successfully identified at the optical splitter.

The processing module 340 included in the ONU 300 in this embodiment is configured to send a service electrical signal to a service light-emitting component, and the service light-emitting component 303 is configured to convert the service electrical signal into a first service optical signal, where the service electrical signal is an electrical signal that carries a service to be transmitted to an OLT, and the first service optical signal is an optical signal that carries the service.

The service light-emitting component 303 is a diode for electrical-to-optical conversion. A specific type of the service light-emitting component 303 is not limited in this embodiment. For example, the service light-emitting component 303 may be an LD.

The identification system described in this embodiment is configured to display first identification optical signals from different ONUs at the optical splitter in different display statuses, so that different ONUs connected to different sockets can be easily identified at the optical splitter. Therefore, different ONUs need to be able to transmit first identification optical signals with different display statuses to the optical splitter.

The display status described in this embodiment may include at least one of a first display status and a second display status. An example in which the display status of the first identification optical signal includes the first display status and the second display status is used for description in this embodiment. The first display status may be one or more of the following:
a state of switching between on and off of the first identification optical signal in a transmission period, duration in which the first identification optical signal is in an on state each time in the transmission period, and an interval between two adjacent times that the first identification optical signal is in an on state in the transmission period, where the state of switching between on and off of the first identification optical signal in the transmission period is a quantity of times of switching between on and off and an order of switching between on and off of the first identification optical signal in the transmission period.

As described in this embodiment, that the first identification optical signal is in a switched-on (also briefly referred to as "on") state means that luminous intensity (luminous intensity) of the first identification optical signal is greater than or equal to a preset value, and that the first identification optical signal is in an off (also briefly referred to as "off") state means that the luminous intensity of the first identification optical signal is less than the preset value. The terminal device obtains a video by recording a surface of a box, and the terminal device may obtain luminous intensity of the first identification optical signal by analyzing the video. If the luminous intensity of the first identification optical signal is greater than or equal to the preset value, the terminal device determines that the display status of the first identification optical signal is the on state. If the luminous intensity of the first identification optical signal is less than the preset value, the terminal device determines that the display status of the first identification optical signal is the off state.

The display status of the first identification optical signal in this embodiment may alternatively be understood as that the display status of the first identification optical signal in a target time segment includes at least one of the following:
an on state that the first identification optical signal is in, an off state that the first identification optical signal is in, a state of switching between on and off of the first identification optical signal, duration in which the first identification optical signal is in an on state each time, duration in which the first identification optical signal is in an off state each time, an interval between two adjacent times that the first identification optical signal is in an on state, or a color displayed by the first identification optical signal.

The target time segment in this example may be any time segment, or the target time segment is a time segment for which the foregoing transmission period lasts. This is not specifically limited.

The second display status described in this embodiment is a color displayed by the first identification optical signal.

In this embodiment, the ONU transmits first identification optical signals to the optical splitter in a plurality of consecutive transmission periods on a timeline, and the ONU transmits identical first identification optical signals to the optical splitter in different transmission periods, that is, first identification optical signals transmitted by the ONU to the optical splitter in different transmission periods have identical first display statuses and identical second display statuses, so as to improve a success rate of identifying the display status of the first identification optical signal.

The foregoing first display status is determined by an encoding manner of the processing module 340. The processing module 340 in this embodiment performs encoding in a preset encoding manner to obtain the identification electrical signal. The first identification optical signal formed by performing electrical-to-optical conversion on the identification electrical signal has the foregoing specific first display status.

Therefore, the preset encoding manner may be configured in the processing module 340 when the ONU leaves the factory, or the network management device 240 sends the preset encoding manner to the ONU 300 when the connection of the identification network shown in FIG. 2 is completed. The processing module 340 included in the ONU 300 may perform encoding in the preset encoding manner, to generate the identification electrical signal. Because the optical splitter needs to receive different first display statuses from different ONUs, the different ONUs need to perform encoding in different preset encoding manners to obtain different identification electrical signals.

The following describes the first identification optical signal in detail.

The first identification optical signal described in this embodiment is a plurality of consecutive bits, one transmission period includes at least two periods: a first period and a second period that are consecutive on a timeline, the first period includes a plurality of bits with a same value, the second period includes a plurality of bits with a same value, and the value of the bits transmitted in the first period is different from the value of the bits transmitted in the second period.

In this embodiment, an example in which a plurality of bits are transmitted in each of the first period and the second period is used as an example for description. In another example, only one bit may alternatively be transmitted in each of the first period and the second period. This is not specifically limited in this embodiment.

At the optical splitter, if a first display status corresponding to an optical signal received at a current moment is an on state, it is learned through decoding that a value of a bit received at the current moment is "1". If a first display status corresponding to an optical signal received at a current moment is an off state, it is learned through decoding that a value of a bit received at the current moment is "0".

For better understanding, refer to FIG. 4 for an example description. FIG. 4 is an example diagram of encoding of a first embodiment of a first identification optical signal according to this application.

As shown in FIG. 4, an example in which one transmission period includes three periods is used. It should be clarified that a quantity of periods included in one transmission period and duration of each period are not limited in this embodiment.

The transmission period includes a first period T1, a second period T2, and a third period T3. Specifically, if the transmission period is 100 seconds (s), duration of the first period T1 is 40s, duration of the second period T2 is 40s, and duration of the third period T3 is 20s. The first period T1 includes a plurality of bits whose values are " 1", the second period includes a plurality of bits whose values are "0", and the third period T3 includes a plurality of bits whose values are " 1 ".

At an optical splitter, when the optical splitter receives a first identification optical signal included in the first period T1, a display status of the first identification optical signal is on. When the optical splitter receives a first identification optical signal included in the second period T2, a display status of the first identification optical signal is off. When the optical splitter receives a first identification optical signal included in the third period T3, a display status of the first identification optical signal is on.

It can be learned that in this embodiment, duration of the first period T1 may be adjusted to change duration in which the first identification optical signal is in an on state in the first period T1, that is, longer duration of the first period T1 indicates longer duration in which the optical splitter is in the on state in the duration of the first period T1.

Similarly, in this embodiment, duration of the second period T2 may be adjusted to change duration in which the first identification optical signal is in an off state in the second period T2, that is, longer duration of the second period T2 indicates longer duration in which the optical splitter is in the off state in the duration of the second period T2. In addition, the duration of the second period T2 further determines an interval between two adjacent times that the optical splitter is in the on state (the interval is equal to the second period T2).

In this example, an example in which the transmission period includes the first period T1, the second period T2, and the third period T3 is used as an example for description. In another example, the transmission period may include less than three different periods, or may include more than three different periods. A quantity of different periods determines a quantity of times that first identification optical signals included in the transmission period switch between on and off at the optical splitter in the transmission period. For example, if the transmission period includes N consecutive different periods, where the N consecutive different periods means that there are N periods sorted based on a time sequence on a timeline and values of bits included in any two adjacent periods in the N periods are different, a quantity of times that first identification optical signals included in the N consecutive different periods included in the transmission period switch between on and off at the optical splitter is N-1.

It can be learned from the second display status shown above that, in this embodiment, the ONU may alternatively be identified through a color displayed by the first identification optical signal. To achieve this objective, light-emitting components 302 of different ONUs may convert identification electrical signals into first identification optical signals located in different wavelength ranges, so that the first identification optical signals formed through conversion by the different ONUs are displayed in different colors at the optical splitter. In this embodiment, an example in which the light-emitting component 302 converts the identification electrical signal into the first identification optical signal having the first wavelength is used for description, where the first identification optical signal having the first wavelength is a visible light signal. The light-emitting component 302 described in this embodiment may be an identification light-emitting component and/or a service light-emitting component. The service light-emitting component is a light-emitting component configured to emit a service optical signal.

For example, if the first wavelength ranges from 625 to 740 nanometers (nm), a color displayed by the first identification optical signal at the optical splitter is red. If the first wavelength ranges from 570 to 585 nm, a color displayed by the first identification optical signal at the optical splitter is yellow. The rest can be deduced by analogy.

The ONU further includes a combiner 304 inside. The combiner 304 described in this embodiment is in a location where an optical path of the first service optical signal emitted by the service light-emitting component 303 intersects an optical path of the first identification optical signal emitted by the light-emitting component 302. It can be learned that the combiner 304 can combine the first service optical signal and the first identification optical signal whose transmission directions are different, to form a first target optical signal.

It can be learned that through the identification system described in this embodiment, the correspondence between the identifier of the socket in the optical splitter and the identifier of the ONU can be established, without interrupting transmission of the service optical signal of the ONU, thereby effectively avoiding interruption of transmission of the service optical signal, and improving efficiency of transmission of the service optical signal.

A structure of the combiner 304 is not limited in this embodiment, provided that the combiner 304 can have a function of combining the first service optical signal and the first identification optical signal to form the first target optical signal. For example, the combiner 304 may be in a structure of a thin film filter. A principle of the thin film filter is to control light of different wavelengths to be transmitted or reflected for combination. It can be learned that if the combiner 304 is a thin film filter, it needs to be ensured that a wavelength of the first identification optical signal is different from a wavelength of the first service optical signal.

The combiner 304 may alternatively be in a structure of a polarizer, and the polarizer controls light in different polarization states to be transmitted or reflected for combination. It can be learned that if the combiner 304 is a polarizer, it needs to be ensured that a polarization state of the first identification optical signal is different from a polarization state of the first service optical signal.

The combiner 304 may alternatively be a coupler. The coupler is configured to combine optical power of the first identification optical signal and optical power of the first service optical signal to obtain the combined optical signal.

The following describes a manner of connecting the ONU and the optical splitter described in this embodiment.

As shown in FIG. 3, the ONU 300 and the optical splitter 310 are connected through a target optical cable 320. Two ends of the target optical cable 320 are respectively connected to a first optical fiber connector and a second optical fiber connector. The first optical fiber connector is inserted into a socket of an adaptable optical fiber connector on a surface of a box of the optical splitter 310. The second optical fiber connector is inserted into a socket of an adaptable optical fiber connector on the ONU 300. The first target optical signal sent by the combiner 304 is transmitted to the optical splitter through the target optical cable 320.

An optical fiber connector type is not limited in this embodiment. For example, the optical fiber connector type is any one of the following:
an optical fiber connector of a ferrule connector (ferrule connector, FC) type, an optical fiber connector of a square connector (square connector, SC) type, an optical fiber connector of a lucent connector (lucent connector, LC) type, an optical fiber connector of a straight tip (straight tip, ST) type, or an optical fiber connector of a fiber distributed data interface (fiber distributed data interface, IFDD) type.

A structure of the optical splitter is described as follows:

The following describes a structure of the optical splitter described in this embodiment with reference to FIG. 5. FIG. 5 is an example diagram of an overall structure of a first embodiment an optical splitter according to this application.

As shown in FIG. 5, it can be learned that the optical splitter described in this embodiment includes an outer housing 510 and a box 520 connected to the outer housing 510, and passive devices included by the optical splitter are disposed in an internal accommodating space formed by the outer housing 510 and the box 520.

A surface of the box 520 described in this embodiment includes a plurality of sockets, and the plurality of sockets are arranged in an array manner on the surface of the box 520. For example, the plurality of sockets are arranged in a manner of K rows and J columns on the surface of the box 520. Specific values of K and J are not limited in this embodiment, provided that K and J are positive integers greater than or equal to 1. A manner of arranging the plurality of sockets on the surface of the box 520 is not limited in this embodiment. For another example, the plurality of sockets on the surface of the box 520 are arranged in a circular shape, in a curved shape, in a triangular shape, or in a discrete manner as a whole.

Taking FIG. 5 as an example, the plurality of sockets included in the optical splitter are arranged in one row and four columns on the surface of the box 520, that is, sockets 501, 502, 503, and 504 are located in a same row. It should be clarified that this embodiment is described through an example in which the plurality of sockets included in the box 520 are arranged in a regular array. In another example, the plurality of sockets included by the box 520 may alternatively be arranged in a random manner.

The sockets included on the surface of the box 520 are sockets of the adaptable optical fiber connector, where the adaptable optical fiber connector is a PON interface. When each of two ends of the target optical cable is connected to an optical fiber connector, a first optical fiber connector connected to a first end of the target optical cable can be inserted into a socket of the adaptable optical fiber connector, so as to connect the optical cable and the socket.

This embodiment is described through an example in which a socket of the first optical fiber connector into which the target optical cable is inserted is the target socket 501, and the target socket may be any socket included on the surface of the box 520.

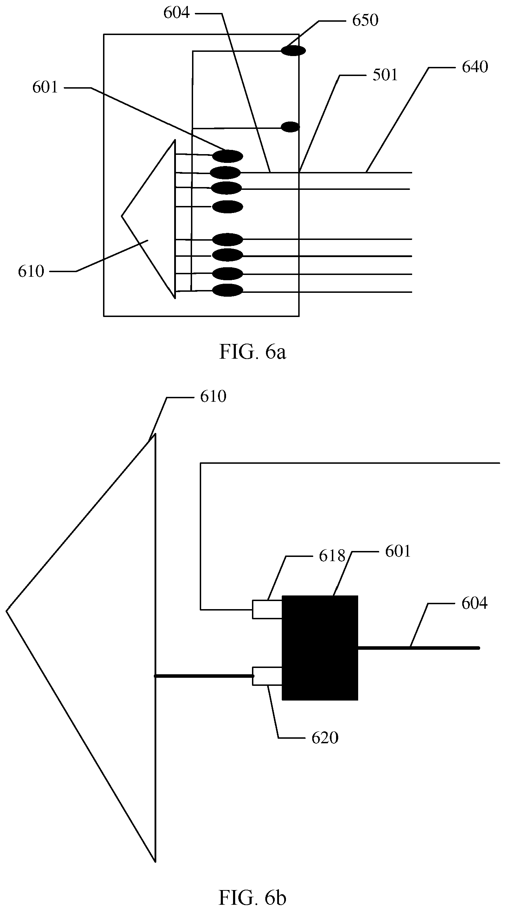

An internal structure of the optical splitter is described with reference to FIG. 6a. FIG. 6a is an example diagram of a side-view structure of a first embodiment of an optical splitter according to this application.

The optical splitter described in this embodiment includes a first splitting module. The following describes several optional structures of the first splitting module described in this embodiment.

### Structure 1

An example of the first splitting module shown in this structure is a branch optical splitter. To better clarify a structure of the branch optical splitter, FIG. 6a and FIG. 6b are combined. FIG. 6b is an example diagram of an enlarged structure of a branch optical splitter shown in FIG. 6a. The branch optical splitter includes a first splitter 601, and a first input optical cable 604, a first output port 618, and a third output port 620 that are connected to the first splitter 601, where the first input optical cable 604 described in this embodiment is connected to a target optical cable 640 through a target socket 501, so as to ensure that the first splitter 601 can receive a first target optical signal from an ONU.

The first splitter 601 in this embodiment can receive the first target optical signal from the ONU through the first input optical cable 604, and perform optical splitting on the first target optical signal to obtain a first optical signal and a second optical signal. The first splitter 601 described in this embodiment may be manufactured through fused tapering, or may be manufactured through a planar waveguide technology or a semiconductor technology. This is not specifically limited in this embodiment, provided that the first splitter 601 can divide the first target optical signal into two optical signals, that is, the first optical signal and the second optical signal after receiving the first target optical signal through the first input optical cable 604. The first splitter 601 sends the first optical signal to a first light guide module 650 through the first output port 618. The first light guide module 650 described in this embodiment is configured to receive the first optical signal from the first output port 618, and display a display status of the first optical signal on a surface of a box. The first splitter 601 sends the second optical signal to a coupler 610 through the third output port 620. It can be learned that in this manner, each of the first optical signal and the second optical signal includes a part of a first service optical signal and a part of a first identification optical signal that are from the ONU.

A relationship between optical power of the first optical signal and optical power of the second optical signal that are obtained by performing optical splitting is not limited in this embodiment. An example in which the optical power of the first optical signal is less than the optical power of the second optical signal is used for description in this embodiment. The second optical signal is transmitted to the coupler 610 through the third output port 620. Specifically, an optical cable may be connected between the third output port 620 and the coupler 610, and the third output port 620 transmits the second optical signal to the coupler 610 through the optical cable. The coupler 610 is configured to receive second optical signals from different ONUs, and combine the second optical signals from the different ONUs to form an uplink optical signal. The coupler 610 is connected to a backbone optical cable and transmits the uplink optical signal to an OLT through the backbone optical cable. The coupler 610 described in this embodiment may also be referred to as a multiplexer, a demultiplexer, an optical splitter, or the like, which is not specifically limited.

### Structure 2

The first splitting module shown in an example of the structure includes a first demultiplexer (Demultiplexer), and a second input optical cable, a second output port, and a fourth output port that are connected to the first demultiplexer. For descriptions of specific locations of the first demultiplexer, the second input optical cable, the second output port, and the fourth output port, refer to descriptions of specific locations of the first splitter 601, the first input optical cable 604, the first output port 618, and the third output port 620 shown in FIG. 6a. Details are not described in this structure.

The first demultiplexer described in this embodiment can receive a first target optical signal from an ONU through a second input optical cable, and demultiplex the first target optical signal to obtain a first optical signal and a second optical signal. The second optical signal is transmitted to a coupler through the fourth output port. For specific descriptions of the coupler, refer to the structure 1. Details are not described again.

Specifically, it can be learned from the foregoing description of the structure of the ONU that the ONU transmits, through the target optical cable, the first target optical signal including a first service optical signal and a first identification optical signal to an optical splitter. After receiving the first target optical signal, the first demultiplexer can demultiplex the first target optical signal, so as to obtain the first optical signal from the first target optical signal through demultiplexing, where the first optical signal is the first identification optical signal having a first wavelength.

It can be learned that a difference between the structure 1 and the structure 2 lies in that, in the manner 1, the first optical signal includes a part of the first service optical signal from the ONU and a part of the first identification optical signal, and the second optical signal also includes a part of the first service optical signal and a part of the first identification optical signal from the ONU. However, in the manner 2, the first optical signal is the first identification optical signal obtained from the first target optical signal through demultiplexing, and the second optical signal is the first service optical signal obtained from the first target optical signal through demultiplexing.

The first demultiplexer described in this embodiment may implement demultiplexing in a manner of wavelength division multiplexing (wavelength division multiplexing, WDM). For demultiplexing implemented in the WDM, refer to the following three demultiplexing manners:
wavelength division multiplexing at wavelengths such as 1310 nm and 1550 nm, coarse wavelength division multiplexing (coarse wavelength division multiplexing, CWDM), and dense wavelength division multiplexing (dense wavelength division multiplexing, DWDM).

### Structure 3

In the structure 1 and the structure 2, an optical splitting system for implementing optical splitting is located in a same optical splitter. It can be learned that the optical splitting system includes the coupler and the first splitting module shown in the foregoing embodiments that are located in a same outer housing. However, a coupler and a first splitting module shown in this structure are located in two different optical splitters. To be specific, the coupler is located in a main optical splitter, and the first splitting module is located in a branch optical splitter, that is, the main optical splitter and the branch optical splitter are located in two different outer housings.

An OLT, the main optical splitter, the branch optical splitter, and an ONU in this structure are sequentially connected. For descriptions of the OLT and the ONU, refer to the foregoing descriptions, and details are not described again.

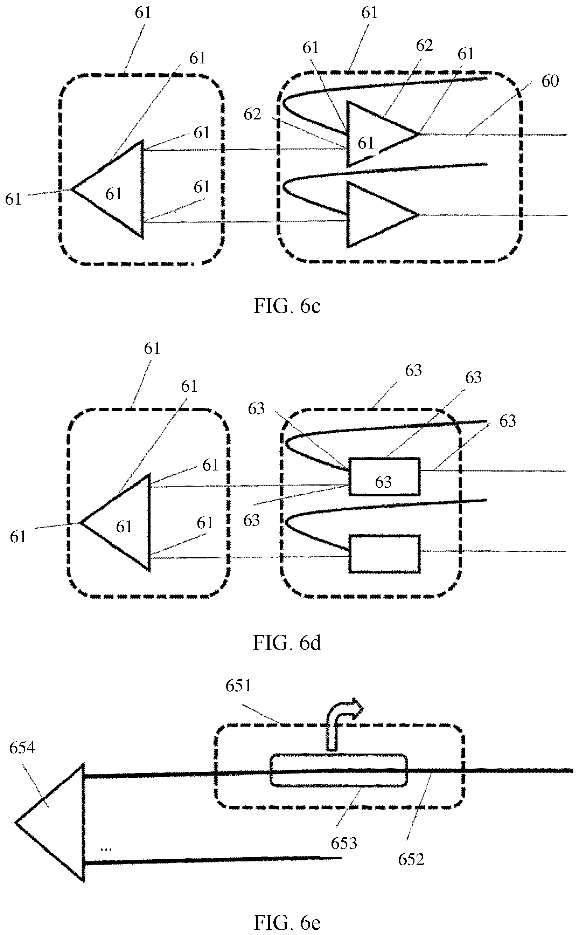

Specifically, as shown in FIG. 6c, the main optical splitter includes a first outer housing 611 and a coupler 613 located in the first outer housing 611. For specific descriptions of the coupler 613, refer to the foregoing descriptions. Details are not described again.

The coupler 613 described in this embodiment includes a first master port 614, a first slave port 615, and a first coupling region 616 located between the first master port 614 and the first slave port 615. The first master port 614 is connected to the OLT through an optical cable. The first slave port 615 is connected to the branch optical splitter through an optical cable. The first coupling region 616 is configured to receive, through first slave ports 615, second optical signals from ONUs, and perform combination to form a combined optical signal. The first master port 614 of the first coupling region 616 outputs the combined optical signal.

The branch optical splitter includes a second outer housing 612 and a first splitting module 621 located in the second outer housing 612, and the first splitting module 621 includes a second master port 617, a first output port 618, a third output port 620, and a second coupling region 619 located between the second master port 617 and the first output port 618, where the second coupling region 619 is also located between the second master port 617 and the third output port 620. The second master port 617 is connected to the foregoing first input optical cable 604, so as to ensure that the first splitting module 621 can receive the first target optical signal from the ONU.

The second coupling region 619 in this embodiment can receive the first target optical signal from the ONU through the first input optical cable 604, and perform optical splitting on the first target optical signal to obtain a first optical signal and a second optical signal. The second coupling region 619 may be manufactured through fused tapering, or may be manufactured through a planar waveguide technology or a semiconductor technology. For details, refer to the foregoing descriptions. This is not limited, provided that the second coupling region 619 can divide the first target optical signal into two optical signals, that is, the first optical signal and the second optical signal after receiving the first target optical signal through the first input optical cable 604.

It can be learned that in this manner, each of the first optical signal and the second optical signal includes a part of a first service optical signal and a part of a first identification optical signal that are from the ONU. For descriptions of the first optical signal and the second optical signal, refer to the foregoing descriptions, and details are not described again.

The second optical signal is transmitted to the main optical splitter through the third output port 620. It can be learned that the first slave port 615 and the third output port 620 included by the main optical splitter described in this embodiment are connected through an optical cable, so that the second optical signal can be sequentially transmitted to the first coupling region 616 through the third output port 620 and the first slave port 615. Then, the main optical splitter transmits the second optical signal to the OLT through the first master port 614. It can be learned that a box including a target socket and described in this embodiment is a box included by the branch optical splitter. For specific descriptions of the target socket, refer to the foregoing descriptions. Details are not described again.

A specific quantity of second coupling regions included by the branch optical splitter is not limited in this embodiment.

### Structure 4

In the structure 4, a coupler is located in a main optical splitter, and a first splitting module is located in a branch demultiplexer, that is, the main optical splitter and the branch demultiplexer are located in two different outer housings.

An OLT, the main optical splitter, the branch demultiplexer, and an ONU in this structure are sequentially connected. For descriptions of the OLT and the ONU, refer to the foregoing descriptions, and details are not described again.

Specifically, as shown in FIG. 6d, the main optical splitter includes a first outer housing 611 and a coupler 613 located in the first outer housing 611. The coupler 613 includes a first master port 614, a first slave port 615, and a first coupling region 616 located between the first master port 614 and the first slave port 615. For specific descriptions of the main optical splitter, refer to the structure 3. Details are not described again.

The branch demultiplexer described in this embodiment includes a third outer housing 631 and a first demultiplexer 632 located in the third outer housing 631, where the first demultiplexer 632 includes a demultiplexing region 633, and the demultiplexing region 633 is connected to each of a second input optical cable 630, a fourth output port 634, and a first output port 635. It can be learned that the demultiplexing region 633 is located between the second input optical cable 630 and the fourth output port 634, and the demultiplexing region 633 is located between the second input optical cable 630 and the first output port 635. The second input optical cable 630 is configured to receive the first target optical signal from the ONU. The demultiplexing region 633 can receive the first target optical signal from the ONU through the second input optical cable 630, and demultiplex the first target optical signal to obtain a first optical signal and a second optical signal. For specific descriptions of the first demultiplexer 632, refer to the foregoing structure 2. Details are not described again. It can be learned that after receiving the first target optical signal through the second input optical cable 630, the demultiplexing region 633 can demultiplex the first target optical signal into two optical signals, that is, the first optical signal and the second optical signal. For descriptions of the first optical signal and the second optical signal, refer to the foregoing structure 2, and details are not described again.

The second optical signal is transmitted to the main optical splitter through the fourth output port 634. It can be learned that the first slave port 615 and the fourth output port 634 included by the main optical splitter described in this embodiment are connected through an optical cable, so that the second optical signal can be sequentially transmitted to the first coupling region 616 through the fourth output port 634 and the first slave port 615. Then, the main optical splitter transmits the second optical signal to the OLT through the first master port 614. It can be learned that a box including a target socket and described in this embodiment is a box included by the branch demultiplexer. For specific descriptions of the target socket, refer to the foregoing descriptions. Details are not described again.

A specific quantity of demultiplexing regions included by the branch demultiplexer is not limited in this embodiment.

The foregoing structure is described through an example in which the first splitting module is a branch optical splitter or a branch demultiplexer, and is not limited. For a specific structure of the first splitting module described in this embodiment, alternatively refer to FIG. 6e.

A first splitting module 651 is connected to a coupler 654. The first splitting module 651 and the coupler 654 described in this embodiment may be located in a same outer housing, as shown in the foregoing structure 1 and structure 2. The first splitting module 651 and the coupler 654 described in this embodiment may be located in two different outer housings, as shown in the foregoing structure 3 and structure 4. The first splitting module 651 described in this embodiment includes an input optical cable 652 and a light-transmitting sleeve 653 sleeved on an outer peripheral surface of the input optical cable 652. A first target optical signal transmitted by the input optical cable 652 described in this embodiment is a visible light signal, so that the first target optical signal has a multi-mode characteristic when being transmitted by the input optical cable 652, the first target optical signal may illuminate the light-transmitting sleeve 653, and the illuminated light-transmitting sleeve 653 transmits a first optical signal to a first light guide module.

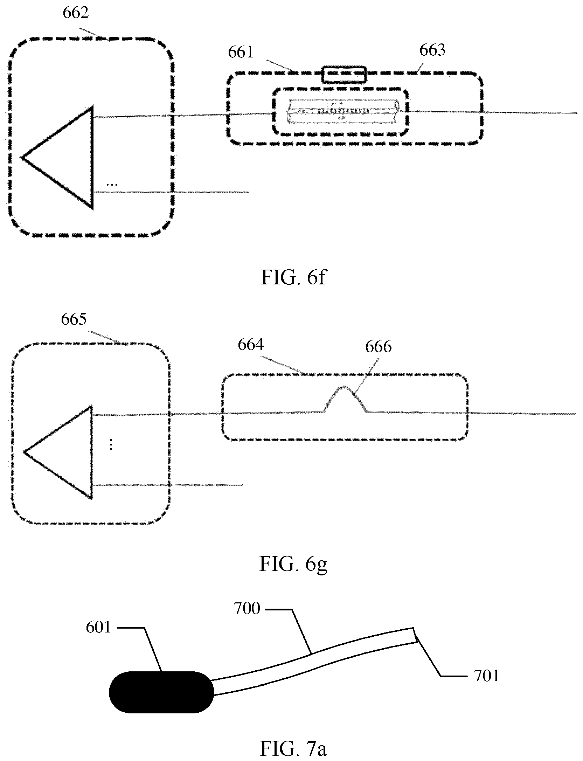

For another example, for a specific structure of the first splitting module described in this embodiment, alternatively refer to FIG. 6f.

A first splitting module 661 is connected to a coupler 662. The first splitting module 661 and the coupler 662 described in this embodiment may be located in a same outer housing, as shown in the foregoing structure 1 and structure 2. The first splitting module 661 and the coupler 662 described in this embodiment may be located in two different outer housings, as shown in the foregoing structure 3 and structure 4.

An input optical cable included by the first splitting module 661 described in this embodiment has a light-transmitting region 663, and by changing a grating period of a grating included by the light-transmitting region 663, the light-transmitting region 663 is enabled to split the first optical signal from the first target optical signal.

For another example, for a specific structure of the first splitting module described in this embodiment, alternatively refer to FIG. 6g.

A first splitting module 664 is connected to a coupler 665. The first splitting module 664 and the coupler 665 described in this embodiment may be located in a same outer housing, as shown in the foregoing structure 1 and structure 2. The first splitting module 664 and the coupler 665 described in this embodiment may be located in two different outer housings, as shown in the foregoing structure 3 and structure 4.

The first splitting module 664 described in this embodiment includes a light guide cable 666 in a bent state. Optionally, a curvature of a part of a transmission cable may be changed to form the light guide cable 666. Optionally, a radius of a part of a transmission cable may be changed to form the light guide cable 666. For example, a radius of the light guide cable 666 is less than a radius of the transmission cable.

The light guide cable is a single-mode optical fiber, and the first target optical signal has a multi-mode characteristic in the single-mode optical fiber, so that the first target optical signal presented as visible light has a greater bending loss in the light guide cable 666 relative to the first service optical signal, to enable the light guide cable 666 in the bent state to split the first optical signal from the first target optical signal.

It can be learned from the foregoing descriptions that the first splitting module can split, from first target optical signals from different ONUs, first optical signals that have different display statuses. The following describes a specific manner of displaying the first optical signal by the optical splitter.

The first splitting module described in this embodiment is connected to the first light guide module. The first light guide module described in this embodiment is configured to receive a first optical signal from the first splitting module, and display a display status of the first optical signal on a surface of the box 520. The following describes an optional structure of the first light guide module.

FIG. 7a is an example diagram of a structure of a first embodiment of a first light guide module according to this application. In this embodiment, an example in which a first splitting module is a branch optical splitter is used for description.

The first light guide module described in this embodiment includes a light guide body 700, and a first end surface of the light guide body 700 is connected to a first output port of the first splitting module. Optionally, if the first splitting module described in this embodiment is shown in the foregoing structure 2, the first end surface of the light guide body 700 is connected to a second output port of the first splitting module.

Optionally, with reference to FIG. 6e to FIG. 6g, the first end surface of the light guide body 700 is connected to an out-light region of the first splitting module, and the out-light region may be the light-transmitting sleeve 653 shown in FIG. 6e, the light-transmitting region 663 shown in FIG. 6f, or the light guide cable 666 shown in FIG. 6g.

A second end surface of the light guide body 700 forms an out-light surface 701. The light guide body 700 described in this embodiment is made of a light guide material. For example, the light guide body 700 described in this embodiment may be a section of optical cable.

Specifically, the light guide body 700 receives a first optical signal from a first splitter 601 through the first output port, and the first optical signal is transmitted through the light guide body 700 until being transmitted to the out-light surface 701 of the light guide body 700, where the out-light surface 701 is configured to display the first optical signal.

It should be clarified that in this embodiment, an example in which the light guide body 700 is directly connected to the first output port of the first splitting module is used for description. In another example, another medium such as air may exist between the light guide body 700 and the first output port, provided that the first optical signal output from the first output port can be successfully transmitted to the light guide body 700, and transmitted to the out-light surface 701 through the light guide body 700.

The out-light surface 701 described in this embodiment is configured to display the first optical signal. The following describes a specific location of the out-light surface 701.

The out-light surface 701 described in this embodiment passes through the box 520 and is located on a surface of the box 520. For example, as shown in FIG. 5, the box 520 of the optical splitter described in this embodiment includes a socket 501, a socket 502, a socket 503, and a socket 504. Then, to be able to bind display statuses of different first optical signal to different sockets, the surface of the box 520 of the optical splitter described in this embodiment includes an out-light surface corresponding to each socket. For example, an example of the optical splitter shown in FIG. 5 includes four first light guide modules that are respectively connected to four first splitting modules. Out-light surfaces of the four first light guide modules are respectively an out-light surface 531, an out-light surface 532, an out-light surface 533, and an out-light surface 534. First optical signals from four different ONUs are respectively displayed through the four out-light surfaces, so that the four different ONUs connected to the optical splitter are differentiated through different display statuses of the four out-light surfaces.

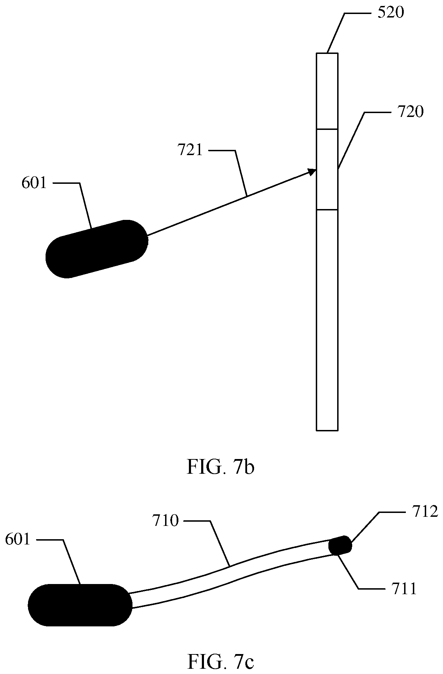

It should be clarified that the description of the structure of the light guide module in this embodiment is an optional example and is not limited, provided that the light guide module can display the first optical signal from the first splitting module on the surface of the box 520, for example, as shown in FIG. 7b. FIG. 7b is an example diagram of a structure of a second embodiment of a first light guide module according to this application.

The first light guide module 720 described in this embodiment is a through hole disposed through a surface of a box 520. A first optical signal from a first output port described in this embodiment can be transmitted along an optical path 721 to the first light guide module 720 and displayed on the surface of the box 520. Optionally, the first light guide module 720 may further include a converging lens disposed in the through hole. The converging lens is configured to converge the first optical signal from the first output port, so as to display the first optical signal on the surface of the box 520. Optionally, with reference to FIG. 6e to FIG. 6g, the optical path 721 is located between the out-light region and the first light guide module 720, and the out-light region may be the light-transmitting sleeve 653 shown in FIG. 6e, the light-transmitting region 663 shown in FIG. 6f, or the light guide cable 666 shown in FIG. 6g.

An objective of the identification system described in this embodiment is to create the first target correspondence, where the first target correspondence includes a correspondence between the identifier of the optical splitter, the identifier of the target socket, and the identifier of the target ONU. The target ONU is an ONU connected to a target socket through a target optical cable. The description of the first target correspondence described in this embodiment is an optional example and is not limited. For example, the first target correspondence may further include only a correspondence between the identifier of the target socket and the identifier of the target ONU.

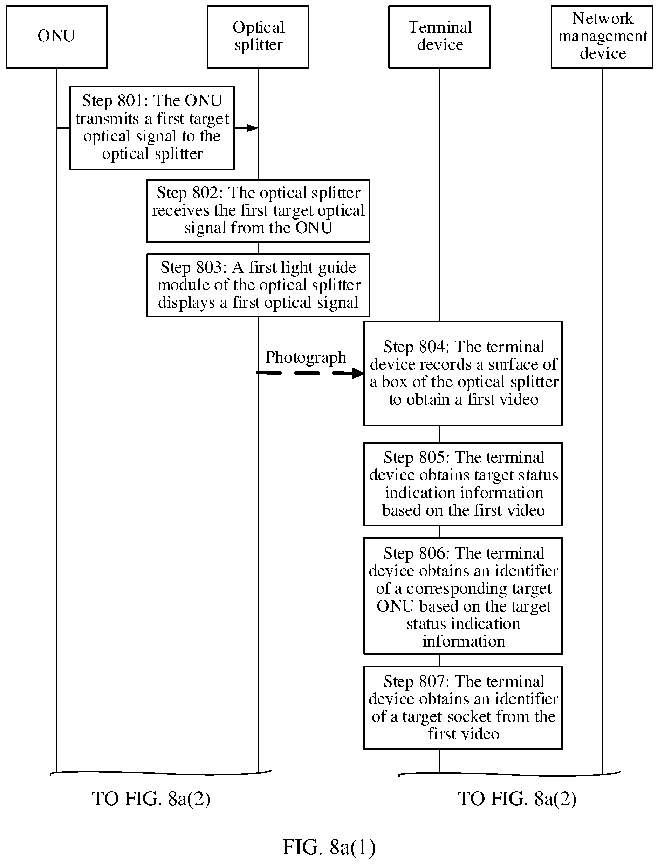

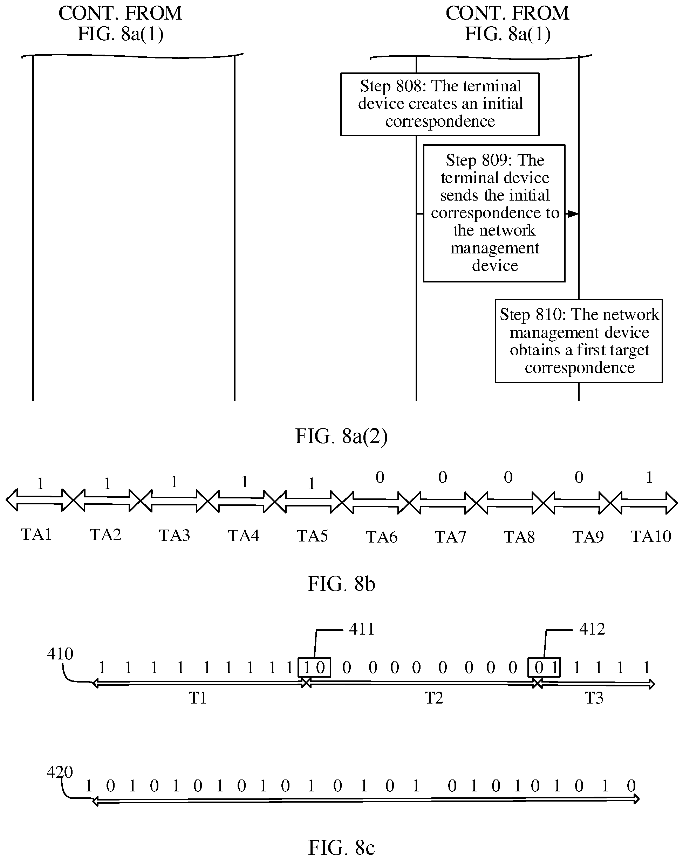

Based on the description of the structure of the identification system described in this embodiment, the following describes an execution process of the identification method provided in this application with reference to FIG. 8a(1) and FIG. 8a(2). FIG. 8a(1) and FIG. 8a(2) are a step flowchart of a first embodiment of an identification method according to this application.

For better understanding, the method shown in FIG. 8a(1) and FIG. 8a(2) is briefly described first. In the embodiment shown in FIG. 8a(1) and FIG. 8a(2), a terminal device creates the first target correspondence, and then the terminal device sends the first target correspondence to a network management device.

Step 801: An ONU transmits a first target optical signal to an optical splitter.

The network management device described in this embodiment may deliver a work order to the terminal device, where the work order indicates the ONU to be installed by an operation and maintenance engineer, and the operation and maintenance engineer completes the installation of the ONU on a user side based on the indication of the work order, and connects the ONU and the optical splitter through the target optical cable shown above.

After the installation of the ONU is completed, the ONU may transmit the first target optical signal to the optical splitter. For descriptions of the first target optical signal, refer to the foregoing descriptions. Details are not described again.

It should be clarified that a manner in which the ONU in this embodiment sends the first target optical signal may be that the ONU periodically transmits, to the optical splitter, the first target optical signal that includes a first identification optical signal and a first service optical signal. In another example, the ONU may randomly transmit the first identification optical signal to the optical splitter.

Step 802: The optical splitter receives the first target optical signal from the ONU.

The optical splitter described in this embodiment is connected to a plurality of ONUs. To determine that each ONU is specifically connected to a socket included by the optical splitter, the optical splitter described in this embodiment receives respective first target optical signals of the plurality of ONUs. In addition, display statuses of first optical signals included by the first target optical signals from the different ONUs are different. For descriptions of the first optical signals, refer to the foregoing descriptions, and details are not described again.

Step 803: A first light guide module of the optical splitter displays a first optical signal.

For descriptions of a specific structure of the optical splitter, refer to the foregoing descriptions. Details are not described again. It can be learned that the optical splitter displays the first optical signal through an out-light surface located on a surface of a box.

Step 804: The terminal device records a surface of a box of the optical splitter to obtain a first video.

If the identification system described in this embodiment aims to obtain the first target correspondence, the terminal device included by the identification system needs to record the surface of the box to obtain the first video.

The terminal device described in this embodiment imposes no limitation on a specific location of recording on the surface of the box, provided that identifiers of all sockets and all out-light surfaces included on the surface of the box are located within a photographing range of a camera of a terminal device.

Step 805: The terminal device obtains target status indication information based on the first video.

Specifically, the terminal device in this embodiment obtains status indication information corresponding to a display status of each first optical signal of display statuses of a plurality of first optical signals included by the first video, where the target status indication information in this embodiment is any one of a plurality of pieces of status indication information obtained by the terminal device.

Because identification electrical signals obtained by different ONUs are generated by performing encoding in different preset encoding manners, it can be learned that, in the first video, display statuses of first optical signals displayed on different out-light surfaces are different.

After obtaining the first video, the terminal device in this embodiment may determine a frame header of a transmission period. For descriptions of the transmission period, refer to the foregoing descriptions. Details are not described again. The terminal device decodes, at a frame header location of the transmission period, the display status of the first optical signal displayed on the out-light surface included by the video, to obtain the target status indication information. Specifically, the terminal device performs sampling on each transmission period through M consecutive sampling periods. For example, as shown in FIG. 8b, the terminal device performs decoding on each transmission period through 10 sampling periods, that is, TA1, and TA2 to TA10.

If the terminal device determines, in the sampling period TA1, that the display status of the first optical signal is an on state, a bit obtained through decoding is "1". The rest can be deduced by analogy. If the terminal device determines, in the sampling period TA6, that the display status of the first optical signal is an off state, a bit obtained through decoding is "0". It can be learned that in the example shown in FIG. 8b, the target status indication information corresponding to the transmission period is " 1111100000".

Duration of the first video in this embodiment is longer than duration of one transmission period in which any ONU sends the first target optical signal to the optical splitter, so as to ensure that the first video can completely display a display status of a first optical signal included by at least one transmission period.

In this embodiment, corresponding status indication information may be further determined based on colors displayed by different first optical signals. For example, a first optical signal having a first wavelength and a first optical signal having a second wavelength correspond to different status indication information.

It can be learned that different display statuses of first optical signals described in this embodiment may mean that different first optical signals have different first display statuses, different first optical signals have different first display statuses and second display statuses, or different first optical signals have different second display statuses. In this embodiment, different display statuses of different first optical signals mean that different first optical signals have different first display statuses and second display statuses.

Still referring to FIG. 5, the terminal device can obtain four different pieces of status indication information based on the first video, that is, first status indication information corresponding to the display status of the first optical signal displayed by the out-light surface 531, second status indication information corresponding to the display status of the first optical signal displayed by the out-light surface 532, third state indication information corresponding to the display status of the first optical signal displayed by the out-light surface 533, and fourth state indication information corresponding to the display status of the first optical signal displayed by the out-light surface 534. Because display statuses of first optical signals displayed on different out-light surfaces are different from each other, the four pieces of status indication information are also different from each other.

The following describes how to effectively ensure that the terminal device can successfully obtain display statuses of first identification optical signals from different out-light surfaces.

The first identification optical signal displayed through the out-light surface in this embodiment may be obtained by performing optical splitting on the first target optical signal by the splitting module, or may be obtained by demultiplexing the first target optical signal by the splitting module. For details, refer to the foregoing descriptions. Details are not described again.

A frequency of a jumpy bit included by the first identification optical signal displayed on the out-light surface in a transmission period is less than or equal to a frame rate of a camera of the terminal device, so as to ensure that a display status of the first identification optical signal can be collected in each sampling period of the terminal device, where a frequency of a jumpy bit included by the first identification optical signal in a transmission period is a quantity of times of bit jumps in the transmission period. Continue to refer to FIG. 8c. FIG. 8c is an example diagram of encoding of an embodiment of a target optical signal according to this application.

A transmission period 410 shown in FIG. 8c is used to transmit a first identification optical signal. The transmission period 410 includes a first period T1, a second period T2, and a third period T3. For specific descriptions, refer to FIG. 4. Details are not described again.

A value of a last bit transmitted through the first period T1 is different from a value of a first bit transmitted through the second period T2. As shown in a jump region 411, it can be learned that the bit jumps from "1" to "0". In this case, the quantity of times of bit jumps in the transmission period 410 is counted as 1. A value of a last bit transmitted through the second period T2 is different from a value of a first bit transmitted through the third period T3. As shown in a jump region 412, it can be learned that the bit jumps from "0" to "1". In this case, the quantity of times of bit jumps in the transmission period is counted as 2. If transmission is completed in the transmission period 410, a frequency of a jumpy bit included in the transmission period is 2.

In this embodiment, it is required that the terminal device can obtain a display status of each first identification optical signal, and therefore, it is required that frequencies of jumpy bits included in respective first identification optical signals from a plurality of ONUs in a transmission period are all less than a frame rate of the terminal device. In this way, it can be effectively ensured that the camera of the terminal device can successfully record the display status of each first identification optical signal.

It can be learned from the foregoing descriptions that, if the first splitting module is a branch optical splitter, the first optical signal includes a part of the first service optical signal and a part of the first identification optical signal that are from the ONU. The following describes a process of how to prevent display of the first service optical signal on the out-light surface from causing interference to the display status of the first identification optical signal on the out-light surface:

A frequency of a jumpy bit included by the first service optical signal in this embodiment in a transmission period is greater than the frame rate of the camera of the terminal device.

In comparison with the transmission period 410 and the transmission period 420 shown in FIG. 8c, the first identification optical signal is transmitted in the transmission period 410, and the first service optical signal is transmitted in the transmission period 420. Both the first identification optical signal transmitted through the transmission period 410 and the first service optical signal transmitted through the transmission period 420 are displayed on the out-light surface.

If jumping times of the first service optical signal in the transmission period 420 is greater than a quantity of jump times of the first identification optical signal in the transmission period 410, and a frequency of a jumpy bit included by the first service optical signal in the transmission period 420 is greater than the frame rate of the camera of the terminal device, the camera cannot record a display status of the first service optical signal, thereby preventing the display status of the first service optical signal from causing interference to the display status of the first identification optical signal.

It can be learned that when the first optical signal displayed by the out-light surface includes the first identification optical signal and the first service optical signal, because the camera of the terminal device cannot record a display status of the first service optical signal. The camera can record only the display status of the first identification optical signal, and the first service optical signal displayed by the out-light surface does not interfere with the display status of the first identification optical signal displayed by the out-light surface, thereby effectively improving accuracy of obtaining, by the terminal device, the display status of the first identification optical signal.

An example in which the terminal device obtains the target status indication information through the first video is used for description. In another example, the terminal device may alternatively continuously photograph the surface of the box for a plurality of times to obtain a plurality of target photos, where each target photo includes the surface of the box, and a time interval between any two times of photographing described in this embodiment is less than a preset time segment, thereby ensuring that the plurality of target photos can completely reflect the display status of the first optical signal, and the terminal device may obtain the target status indication information based on the plurality of target photos.

Step 806: The terminal device obtains an identifier of a corresponding target ONU based on the target status indication information.

The terminal device described in this embodiment has stored a first preset correspondence. For the first preset correspondence described in this embodiment, refer to the following optional relationships:

### Optional relationship 1

In this example, the first preset correspondence includes correspondences between different status indication information and different ONU identifiers.

For the first preset correspondence described in this embodiment, refer to the following Table 1-1.

**Table 1-1**

| Status indication information | ONU identifier |
|---|---|
| First status indication information | ONU ID1 |
| Second status indication information | ONU ID2 |
| Third status indication information | ONU ID3 |
| Fourth status indication information | ONU ID4 |

In this embodiment, for example, four different ports included by the optical splitter are connected to four different ONUs, and identifiers of the four ONUs are respectively ONU ID 1, ONU ID2, ONU ID3, and ONU ID4. An example in which each of the four ONUs is connected to the optical splitter through an optical cable is used for description. For the four ONUs, the first preset correspondence prestored in the terminal device includes correspondences between different status indication information and different ONU identifiers.

It can be learned from step 805 that if the first video obtained by the terminal device includes the display status of the first optical signal from the ONU1, the terminal device obtains the first status indication information based on the first video, and determines, by querying the first preset correspondence shown in Table 1-1, that the ONU identifier corresponding to the first state indication information is ONU ID1. The rest can be deduced by analogy. Specific content of different IDs is not limited in this embodiment provided that different ONUs correspond to different IDs.

The first preset correspondence described in this embodiment may be received by the terminal device from a network management device, or may be pre-stored in the terminal device. Details are not described in this embodiment.

### Optional relationship 2

In this example, the first preset correspondence includes correspondences between different status indication information and different ONU types.

For the first preset correspondence described in this embodiment, refer to the following Table 1-2.

**Table 1-2**

| Status indication information | ONU type |
|---|---|
| First status indication information | ONU type 1 |
| Second status indication information | ONU type 2 |
| Third status indication information | ONU type 1 |
| Fourth status indication information | ONU type 2 |

In this embodiment, that four different ports included by the optical splitter are connected to four different ONUs is used as an example. Types of the four ONUs are respectively type 1, type 2, type 1, and type 2. It can be learned that the first state indication information and the third state indication information correspond to ONUs of a same type, the second state indication information and the fourth state indication information correspond to ONUs of a same type, the first state indication information and the second state indication information correspond to ONUs of different types, and the third state indication information and the fourth state indication information correspond ONUs of different types. For the four ONUs, the terminal device prestores the first preset correspondence shown in Table 1-2.

A type of an ONU is not limited in this embodiment. For example, the ONU type 1 is used to indicate that the ONU belongs to an enterprise domain, and the ONU type 2 is used to indicate that the ONU belongs to a home domain. The ONU belonging to the enterprise domain means that the ONU is used by an enterprise user, and the ONU belonging to the home domain means that the ONU is used by a home user.

It can be learned from step 805 that if the first video obtained by the terminal device includes the display status of the first optical signal from the ONU1, the terminal device obtains the first status indication information based on the first video, and determines, by querying the first preset correspondence shown in Table 1-2, that the ONU type corresponding to the first state indication information is ONU type 1. The rest can be deduced by analogy.

The first preset correspondence described in this embodiment may be received by the terminal device from a network management device, or may be pre-stored in the terminal device. Details are not described in this embodiment.

### Optional relationship 3

In this example, the first preset correspondence includes correspondences between different status indication information, different ONU identifiers, and different ONU types.

For the first preset correspondence described in this embodiment, refer to the following Table 1-3.

**Table 1-3**

| Status indication information | ONU identifier | ONU type |
|---|---|---|
| First status indication information | ONU ID1 | ONU type 1 |
| Second status indication information | ONU ID2 | ONU type 2 |
| Third status indication information | ONU ID3 | ONU type 1 |
| Fourth status indication | ONU ID4 | ONU type 2 |
| information | | |

For descriptions of the ONU identifiers and the ONU types in this example, refer to the foregoing optional relationship. Details are not described again.

It can be learned from step 805 that if the first video obtained by the terminal device includes the display status of the first optical signal from the ONU1, the terminal device obtains the first status indication information based on the first video, determines, by querying the first preset correspondence shown in Table 1-3, that the ONU type corresponding to the first state indication information is ONU type 1, and can further determine that the corresponding ONU is represented as ONU ID1. The rest can be deduced by analogy.

In this embodiment, an example in which the first preset correspondence is the foregoing optional relationship 1 is used for description.

Step 807: The terminal device obtains an identifier of a target socket from the first video.

The terminal device in this embodiment can directly obtain the identifier of the target socket from the first video; or the terminal device obtains a target image from the first video, where the target image is any frame of image included in the first video, and the terminal device can obtain the identifier of the target socket based on the target image. In this embodiment, an example in which the terminal device obtains the identifier of the target socket based on the target image included in the first video is used for description.

The terminal device in this embodiment identifies the target socket in the target image, where the target socket is one of a plurality of sockets included on the surface of the box, and the target socket and the target status indication information satisfy a first identification condition, where the first identification condition may be one or more of the following:

The target socket is close to a location of a target out-light surface on the surface of the box, or the target out-light surface is located in a first orientation of the target socket on the surface of the box, where the terminal device decodes a display status of the target out-light surface to obtain the target status indication information.

Optionally, the first identification condition is that the target socket is close to a location of a target out-light surface on the surface of the box and the target out-light surface is located below the target socket on the surface of the box (that is, the first orientation is below). It should be clarified that the description of the first identification condition in this example is an optional example, and is not limited, provided that the terminal device can identify, from the target image based on the first identification condition, the target out-light surface that uniquely corresponds to the target socket.

For better understanding, taking FIG. 5 as an example, if the target socket is the socket 501, it is determined that the out-light surface 531 close to the socket 501 and located below the socket 501 is the target out-light surface. The rest can be deduced by analogy. If the target socket is the socket 504, it is determined that the out-light surface 534 close to the socket 504 and located below the socket 504 is the target out-light surface.

After the terminal device obtains the target socket from the target image, the terminal device identifies the identifier of the target socket from the target image, where the identifier of the target socket and the target socket satisfy a second identification condition, where the second identification condition may be one or more of the following:

The identifier of the target socket is close to a location of the target socket on the surface of the box, or the identifier of the target socket is located in a second orientation of the target socket on the surface of the box.

The identifier of the target socket described in this embodiment may be a two-dimensional code, a unique identifier, a bar code, digital text information, or the like. This is not specifically limited in this embodiment, provided that the identifier of the target socket can uniquely identify the target socket. That is to say, identifiers of sockets included on the surface of the box are different from each other. In this embodiment, an example in which the identifier of the target socket is a two-dimensional code is used for description.

Optionally, the second identification condition is that the identifier of the target socket is close to a location of the target socket on the surface of the box and the identifier of the target socket is above the target socket (that is, the second orientation is above). It should be clarified that the description of the second identification condition in this example is an optional example, and is not limited, provided that the terminal device can identify, from the target image based on the second identification condition, the identifier of the target socket that uniquely corresponds to the target socket.

Still referring to FIG. 5, for example, if the target socket is the socket 501, it is determined that a two-dimensional code 541 close to the socket 501 and located above the socket 501 is an identifier of the target socket. The rest can be deduced by analogy. If the target socket is the socket 504, it is determined that a two-dimensional code 544 close to the socket 504 and located above the socket 504 is an identifier of the target socket.

In this embodiment, an example in which the target out-light surface corresponding to the target socket and the identifier of the target socket are at different locations on the surface of the box is used for description. In another example, the target out-light surface and the identifier of the target socket may overlap. For example, the target out-light surface is located in a center region of the identifier of the target socket.

In this embodiment, an example in which the identifier of the target socket is directly obtained from the target image included in the first video is used for description. In another example, the terminal device may alternatively photograph the surface of the box in advance to obtain an identification image, and establish a correspondence between location information of each socket in the identification image and an identifier of the socket. The location information of each socket may be a relative location of each socket in a socket array, for example, specific row number and column number of the socket in the socket array. For another example, the location information of each socket may be a relative location of each socket on the surface of the box, which is not specifically limited in this embodiment.

After the terminal device obtains the target image, the terminal device obtains target location information of the target socket in the target image, for example, obtains specific row number and column number of the target socket in the socket array included in the target image, and the terminal device obtains the corresponding identifier of the target socket based on the target location information.

In this embodiment, an example in which the identifier of the target socket is disposed on the surface of the box is used for description. In another example, the identifier of the target socket may alternatively be disposed on an outer surface of a target optical fiber connector. The target optical fiber connector is inserted into the target socket to transmit an optical signal.

Step 808: The terminal device creates an initial correspondence.

It can be learned that based on the foregoing steps, when the terminal device obtains the identifier of the target socket corresponding to the target socket and the identifier of the target ONU, the terminal device may create the initial correspondence. The initial correspondence includes a correspondence between the identifier of the target socket and the identifier of the target ONU. It can be learned from the initial correspondence that the ONU having the identifier of the target ONU is connected to the target socket having the identifier of the target socket through an optical cable.

Optionally, the initial correspondence described in this embodiment may further include an identifier of the optical splitter. For an identifier type of the optical splitter identifier, refer to the foregoing descriptions of the identifier type of the target socket identifier, which is not specifically limited in this embodiment. In this embodiment, an example in which the identifier of the optical splitter is a two-dimensional code is used for description.

In this embodiment, the terminal device determines, in a target image, an identifier that satisfies a third identification condition as an identifier of an optical splitter, where the third identification condition may be that the identifier of the optical splitter is in a preset location on the surface of the box. The preset location is not limited in this embodiment, provided that the preset location does not cause interference to the identifier of the target socket and identification of the target out-light surface, for example, the identifier of the optical splitter is far away from an identifier of any socket and any out-light surface on the surface of the box, so as not to identify the identifier of the optical splitter as the identifier of the socket.

For example, as shown in FIG. 5, the third identification condition described in this embodiment is that the identifier of the optical splitter is located in an upper left corner of the surface of the box (that is, the preset location is the upper left corner of the surface of the box). It can be learned that after obtaining the target image, the terminal device may determine that the two-dimensional code 550 located in the upper left corner of the surface of the box 520 is the identifier of the optical splitter.

It can be learned that with reference to the example shown in FIG. 5, the initial correspondence established on the terminal device side may be shown in the following Table 2.

**Table 2**

| Optical splitter identifier | Socket identifier | ONU identifier |
|---|---|---|
| Identifier 550 | Identifier 541 | ONU ID1 |
| | Identifier 542 | ONU ID2 |
| | Identifier 543 | ONU ID3 |
| | Identifier 544 | ONU ID4 |

It can be learned that, if that the first preset correspondence is shown in Table 1-1 shown above is used an example, the initial correspondence established on the terminal device side includes a correspondence between the identifier of the optical splitter, the identifier of the socket, and the identifier of the ONU. Optionally, if that the first preset correspondence is shown in Table 1-2 shown above is used an example, the initial correspondence established on the terminal device side includes a correspondence between the identifier of the optical splitter, the identifier of the socket, and the type of the ONU. Optionally, if that the first preset correspondence is shown in Table 1-3 shown above is used an example, the initial correspondence established on the terminal device side includes a correspondence between the identifier of the optical splitter, the identifier of the socket, the identifier of the ONU, and the type of the ONU.

Step 809: The terminal device sends the initial correspondence to a network management device.

Step 810: The network management device obtains a first target correspondence.

Optionally, after receiving the initial correspondence created by the terminal device, the network management device may add a new correspondence to the initial correspondence, so as to obtain the first target correspondence.

Specifically, the network management device has stored a second preset correspondence, where the second preset correspondence includes a correspondence between an identifier of a target ONU and a target PON port number of an OLT. The target ONU is any ONU connected to the optical splitter, and the target PON port number is used to indicate a target PON port on an OLT side configured to receive a first service optical signal from the target ONU. The target PON port number is used to identify the target PON port, and the target PON port is located on a target service board of a target subrack of the OLT. The target subrack is one of a plurality of subracks included by the OLT, and the target service board is a service board into which the target subrack is inserted.

For the second preset correspondence stored in the network management device described in this embodiment, refer to the following Table 3.

**Table 3**

| ONU identifier | PON port number |
|---|---|
| ONU ID1 | A1/B1/C1 |
| ONU ID2 | A2/B2/C2 |
| ONU ID3 | A3/B3/C3 |
| ONU ID4 | A4/B4/C4 |

The PON port number A1/B1/C1 corresponding to the ONU ID1 means that the first service optical signal from the ONU ID1 is transmitted to the port C1 of the service board B1 of the subrack A1 of the OLT. The rest can be deduced by analogy. The first service optical signal from the ONU ID4 is transmitted to the port C4 of the service board B4 of the subrack A4 of the OLT.

The description of the second preset correspondence in this embodiment is an optional example. In another example, one PON port number may alternatively correspond to identifiers of a plurality of ONUs. For example, if the identifiers of the ONUs corresponding to the PON port number A1B1/C1 are ONU ID1, ONU ID2, and ONU ID3, it indicates that the first service optical signal from the ONU ID1, the first service optical signal from the ONU ID2, and the first service optical signal from the ONU ID3 are all transmitted to the port C1 of the service board B1 of the subrack A1 of the OLT.

It can be learned that for the first target correspondence created by the network management device in this embodiment, refer to the following Table 4.

**Table 4**

| Optical splitter identifier | Socket identifier | ONU identifier | PON port number |
|---|---|---|---|
| Identifier 550 | Identifier 541 | ONU ID1 | A1/B1/C1 |
| | Identifier 542 | ONU ID2 | A2/B2/C2 |
| | Identifier 543 | ONU ID3 | A3/B3/C3 |
| | Identifier 544 | ONU ID4 | A4/B4/C4 |

It can be learned that, if that the first preset correspondence is shown in Table 1-1 shown above is used an example, the first target correspondence established on the network management device side includes a correspondence between the identifier of the optical splitter, the identifier of the socket, the identifier of the ONU, and the PON port number. Optionally, if that the first preset correspondence is shown in Table 1-2 shown above is used an example, the first target correspondence established on the network management device side includes a correspondence between the identifier of the optical splitter, the identifier of the socket, the type of the ONU, and the PON port number. Optionally, if that the first preset correspondence is shown in Table 1-3 shown above is used an example, the first target correspondence established on the network management device side includes a correspondence between the identifier of the optical splitter, the identifier of the socket, the identifier of the ONU, the type of the ONU, and the PON port number.

The network management device described in this embodiment may implement digital management based on the first target correspondence. Digital management may mean that the first video may be obtained by recording a surface of a box, and an identifier of an ONU connected to each of a plurality of sockets included by the box may be obtained by analyzing an image of the first video, a quantity of sockets included on the surface of the box, and an identifier of each socket, so that specific conditions of all sockets included by the box can be digitalized and visualized, and operation and maintenance costs of network nodes can be effectively reduced through digital management.

In the process of creating the first target correspondence described in this embodiment, the operation and maintenance engineer only needs to record the surface of the box through the terminal device to obtain the first video, and does not need to manually participate in too many processes. Therefore, a disadvantage of low accuracy of creating the first target correspondence due to participation of the operation and maintenance engineer is effectively avoided.

In addition, identifiers of ONUs connected to different sockets can be determined on a side of the optical splitter based on different display statuses displayed on different out-light surfaces, and an operation and maintenance engineer does not need to obtain the identifiers of the ONUs at the ONUs, thereby improving efficiency and accuracy of creating a first target correspondence.

In the process of obtaining the first target correspondence, the first target correspondence may be created through the first video recorded by the terminal device, so as to implement a process of digital management of the box, thereby implementing digital recording and management of socket resources of the box. The operation and maintenance engineer does not need to manually view and record insertion relationships between sockets and optical fiber connectors one by one on site, thereby effectively improving accuracy and efficiency of managing the socket resources of the box.

### Embodiment 2

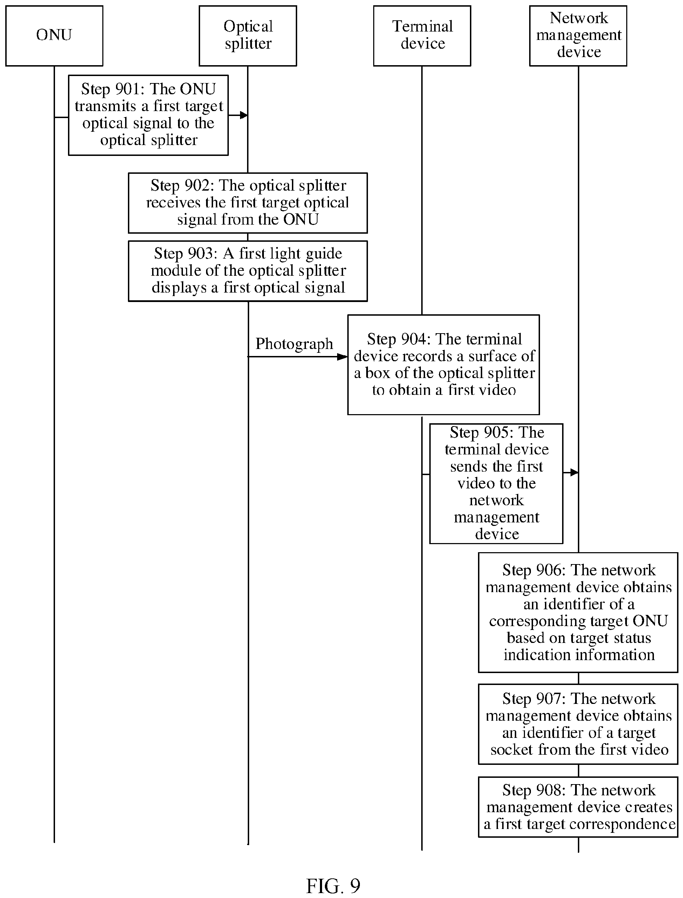

Based on the identification system described in Embodiment 1, the following describes an execution process of another identification method according to this application with reference to FIG. 9. FIG. 9 is a step flowchart of a second embodiment of an identification method according to this application.

In the identification method described in Embodiment 1, the terminal device sends the created initial correspondence to the network management device, and then the network management device creates the first target correspondence based on the initial correspondence. However, in the identification method described in Embodiment 2, a network management device directly creates a first target correspondence based on a first video. For a specific execution process, refer to FIG. 9.

Step 901: An ONU transmits a first target optical signal to an optical splitter.

Step 902: The optical splitter receives the first target optical signal from the ONU.

Step 903: A first light guide module of the optical splitter displays a first optical signal.

Step 904: The terminal device records a surface of a box of the optical splitter to obtain a first video.

For descriptions of the execution process of step 901 to step 904 described in this embodiment, refer to step 801 to step 804 described in Embodiment 1. Details of the specific execution process are not described in this embodiment.

Step 905: The terminal device sends the first video to a network management device.

Step 906: The network management device obtains an identifier of a corresponding target ONU based on target status indication information.

Step 907: The network management device obtains an identifier of a target socket from the first video.

For descriptions of the execution process of step 905 to step 907 described in this embodiment, refer to the descriptions of a process of performing step 806 and step 807 by the terminal device in Embodiment 1. Details of the specific execution process are not described.

Step 908: The network management device creates a first target correspondence.

It can be learned that as shown in the foregoing steps, the network management device can obtain, based on the first video, an identifier of each socket that corresponds to each socket included on the surface of the box and an identifier of an ONU, and determine the identifier of the optical splitter. For a specific obtaining process, refer to the process of creating the preset correspondence by the terminal device shown in step 808 in Embodiment 1. A specific creation process is not described in detail in this embodiment.

The network management device described in this embodiment creates the first target correspondence based on an identifier of each socket that corresponds to each socket included on the surface of the box and an identifier of an ONU, and the identifier of the optical splitter. For descriptions of a process of creating the first target correspondence, refer to the process of creating the first target correspondence shown in step 810 in Embodiment 1, and details are not described in this embodiment.

According to the identification method described in this embodiment, after recording the first video, the terminal device may directly send the first video to the network management device, and the network management device creates the first target correspondence. It can be learned that in the process of creating the first target correspondence, a calculation amount of the terminal device is reduced.

For specific descriptions of the advantageous effects described in this embodiment, alternatively refer to Embodiment 1. Details are not described in this embodiment.

### Embodiment 3

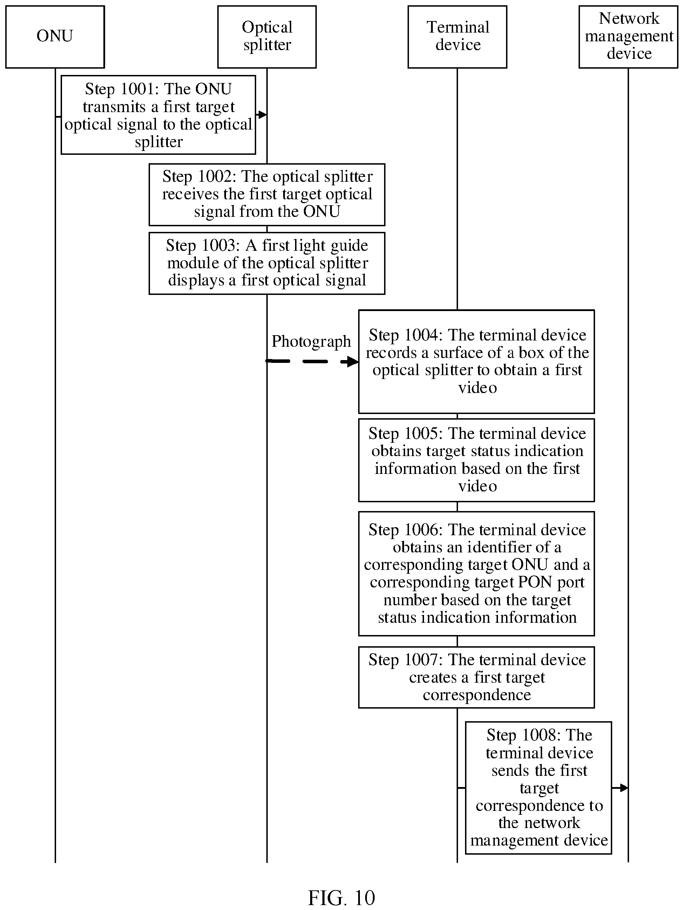

Based on the identification system described in Embodiment 1, the following describes an execution process of another identification method according to this application with reference to FIG. 10. FIG. 10 is a step flowchart of a third embodiment of an identification method according to this application. A difference between the method described in this embodiment and the method described in Embodiment 1 lies in that a process of obtaining a target PON port number in the method described in this embodiment is different, and is specifically described in the following steps:
Step 1001: An ONU transmits a first target optical signal to an optical splitter.
Step 1002: The optical splitter receives the first target optical signal from the ONU.
Step 1003: A first light guide module of the optical splitter displays a first optical signal.
Step 1004: The terminal device records a surface of a box of the optical splitter to obtain a first video.
Step 1005: The terminal device obtains target status indication information based on the first video.

For descriptions of the execution process of step 1001 to step 1005 described in this embodiment, refer to the descriptions of the process of step 801 to step 805 described in Embodiment 1. Details are not described in this embodiment.

Step 1006: The terminal device obtains an identifier of a corresponding target ONU and a corresponding target PON port number based on the target status indication information.

The terminal device in this embodiment has stored a third preset correspondence, the third preset correspondence includes correspondences between different status indication information and different ONU identifiers, and the third preset correspondence further includes correspondences between different status indication information and PON port numbers. For a specific description of the PON port, refer to Embodiment 1, and details are not described in this embodiment.

For the third preset correspondence described in this embodiment, refer to the following Table 5.

**Table 5**

| Status indication information | ONU identifier | PON port number |
|---|---|---|
| First status indication information | ONU ID1 | A1/B1/C1 |
| Second status indication information | ONU ID2 | A2/B2/C2 |
| Third status indication information | ONU ID3 | A3/B3/C3 |
| Fourth status indication information | ONU ID4 | A4/B4/C4 |

It can be learned that if the terminal device in this embodiment can perform decoding based on the display status of the first optical signal displayed on the target out-light surface to obtain the first status indication information, it is determined that the identifier of the ONU connected to the target socket corresponding to the target out-light surface is ONU ID1, and a first service optical signal sent by the ONU having the ONU ID1 needs to be transmitted to a PON port whose PON port number is A1/B1/C1 on the OLT side. The rest can be deduced by analogy. If the terminal device can perform decoding based on the display status of the first optical signal displayed on the target out-light surface to obtain the fourth status indication information, it is determined that the identifier of the ONU connected to the target socket corresponding to the target out-light surface is ONU ID4, and a first service optical signal sent by the ONU having the ONU ID4 needs to be transmitted to a PON port whose PON port number is A4/B4/C4 on the OLT side.

Step 1007: The terminal device creates a first target correspondence.

When obtaining the identifier of the optical splitter, the identifier of each socket, the identifier of the ONU connected to each socket, and the PON port number corresponding to the identifier of each ONU, the terminal device in this embodiment may create the first target correspondence shown in Table 4. For a specific description of the target correspondence, refer to the related description of Table 4 described in Embodiment 1. Details are not described in this embodiment again.

Step 1008: The terminal device sends the first target correspondence to a network management device.

In this embodiment, the terminal device may directly create the first target correspondence, the terminal device sends the created first target correspondence to the network management device, and the network management device may store the first target correspondence.

Optionally, an example in which the terminal device in this embodiment obtains the first target correspondence based on the first video and then sends the first target correspondence to the network management device is used for description. In another example, the terminal device may alternatively directly send the first video to the network management device, and the network management device obtains the first target correspondence based on the first video. For a specific process, refer to the foregoing description of the process in which the terminal device obtains the first target correspondence based on the first video. Details are not described again in this embodiment.

In the process of creating the first target correspondence described in this embodiment, the display status of the first optical signal displayed on the target out-light surface included by the first video may be directly decoded, to directly obtain the identifier of the ONU that corresponds to the target out-light surface and the target PON port number without determining the target PON port number in a query manner again. It can be learned that based on the identification method described in this embodiment, efficiency of creating the first target correspondence is effectively improved.

### Embodiment 4

That an ONU described in Embodiment 1 to Embodiment 3 includes one light-emitting component is used as an example. In this embodiment, an example in which an ONU included by an identification system includes a plurality of light-emitting components is used for description. For specific descriptions of a network management device, an OLT, an optical splitter, and a terminal device included in the identification system described in this embodiment, refer to Embodiment 1. Details are not described in this embodiment.

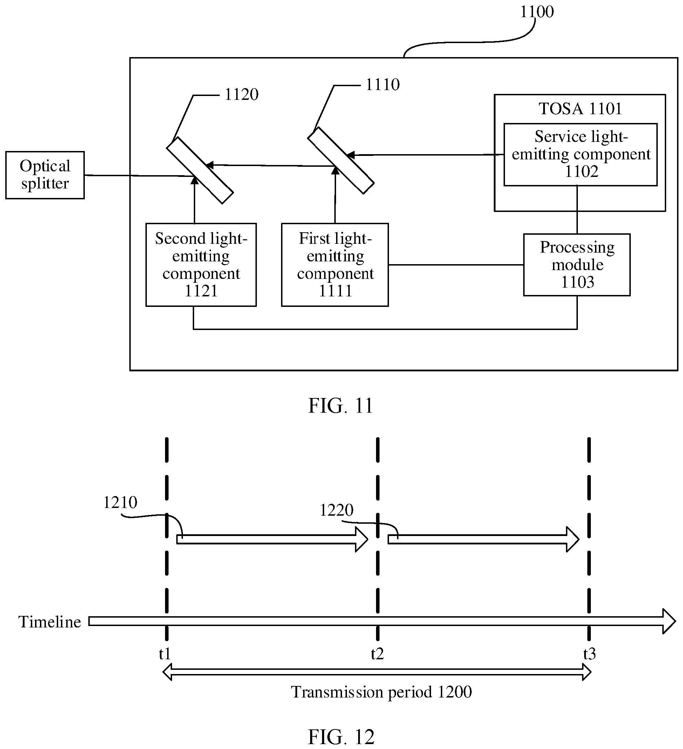

The following describes a structure of the ONU provided in this embodiment with reference to FIG. 11. FIG. 11 is an example diagram of a structure of a second embodiment of an identification system according to this application.

The ONU 1100 described in this embodiment includes a TOSA 1101, and the TOSA 1101 includes a service light-emitting component 1102 and a processing module 1103 that are connected to each other. For descriptions of a specific structure of the TOSA 1101, refer to Embodiment 1. Details are not described in this embodiment.

The ONU 1100 described in this embodiment includes a first light-emitting component 1111, a second light-emitting component 1121, a first combiner 1110, and a second combiner 1120, where both the first light-emitting component 1111 and the second light-emitting component 1121 are identification light-emitting components. The processing module 1103 is connected to each of the first light-emitting component 1111 and the second light-emitting component 1121, the first light-emitting component 1111 is connected to the first combiner 1110, and the second light-emitting component 1121 is connected to the second combiner 1120. For specific descriptions of the first light-emitting component 1111 and the second light-emitting component 1121, refer to the descriptions of the light-emitting component in Embodiment 1. For specific descriptions of the first combiner 1110 and the second combiner 1120, refer to the descriptions of the combiner in Embodiment 1. For specific descriptions of the processing module 1103, refer to the descriptions of the processing module in Embodiment 1. Details are not described in this embodiment.

When the ONU 1100 described in this embodiment includes two light-emitting components, the two light-emitting components need to send a second identification optical signal and a third identification optical signal respectively, and the second identification optical signal and the third identification optical signal are in a time-division display state on an optical splitter side. Therefore, the processing module 1103 described in this embodiment is configured to send a first identification electrical signal to the first light-emitting component 1111 and send a second identification electrical signal to the second light-emitting component 1121 in a time division mode.

A description is made below with reference to FIG. 12. FIG. 12 is an example diagram of encoding of a third embodiment of an identification electrical signal according to this application.

In the example shown in FIG. 12, transmission is performed for one transmission period 1200 on a timeline, and the transmission period 1200 includes two consecutive time segments. Duration of each time segment is not limited in this embodiment. A start moment and an end moment of a first time segment are respectively t1 and t2, and a start moment and an end moment of a second time segment are respectively t2 and t3. It can be learned that on the timeline, duration of the first time segment and duration of the second time segment are two adjacent time segments.

The processing module sends a second identification electrical signal 1210 to the first light-emitting component 1111 in the first time segment, and the processing module sends a third identification electrical signal 1220 to the second light-emitting component 1121 in the second time segment. For specific descriptions of the second identification electrical signal 1210 and the third identification electrical signal 1220, refer to the descriptions of the first identification electrical signal described in Embodiment 1. Details are not described in this embodiment. In this embodiment, first display statuses corresponding to the second identification electrical signal 1210 and the third identification electrical signal 1220 may be the same or may not be the same. This is not specifically limited in this embodiment.

When receiving the first identification electrical signal, the first light-emitting component 1111 may perform electrical-to-optical conversion to form a second identification optical signal. When receiving the second identification electrical signal, the second light-emitting component 1121 may perform electrical-to-optical conversion to form a third identification optical signal. It can be learned that the second identification optical signal and the third identification optical signal are transmitted to the optical splitter in a time division mode.

An objective of including two light-emitting components in the ONU in this embodiment is that, in a scenario in which a quantity of ONUs connected to the optical splitter is large, the optical splitter includes a large quantity of out-light surfaces corresponding to different ONUs. In order to enable display statuses of different out-light surfaces to correspond to different ONUs, a large quantity of out-light surfaces need to have different display statuses. In a manner of disposing a plurality of light-emitting components on the ONU side in this embodiment, when the optical splitter is connected to a large quantity of ONUs, it can be ensured that different display statuses of different ONUs are displayed on respective corresponding out-light surfaces. The following describes a specific reason.

In this embodiment, the first light-emitting component 1111 converts the first identification electrical signal into the second identification optical signal having a second wavelength, and the second light-emitting component 1121 converts the second identification electrical signal into the third identification optical signal having a third wavelength. In this embodiment, the second wavelength and the third wavelength are different from each other, and both the second identification optical signal having the second wavelength and the third identification optical signal having the third wavelength are visible light signals.

For example, in this embodiment, a color displayed by the second identification optical signal having the second wavelength on a corresponding out-light surface is "blue", while a color displayed by the third identification optical signal having the third wavelength on a corresponding out-light surface is "orange". Because the second identification optical signal and the third identification optical signal described in this embodiment are transmitted to the optical splitter in a time division mode, it is effectively ensured that only one of the first light-emitting component and the second light-emitting component is in an on state at a same moment.

It should be clarified that in this embodiment, an example in which both the second identification optical signal and the third identification optical signal are visible optical signals is used for description. In another example, at least one of the second identification optical signal and the third identification optical signal is an invisible light signal.

It can be learned that in this embodiment, a quantity of display statuses included when an ONU includes two light-emitting components is greater than a quantity of display statuses included when an ONU includes one light-emitting component, so that when the optical splitter described in this embodiment is connected to a large quantity of ONUs, it can also be ensured that different ONUs have different display statuses on respective corresponding out-light surfaces. For specific descriptions of the display statuses, refer to Embodiment 1. Details are not described in this embodiment.

Specific locations of the first combiner 1110 and the second combiner 1120 are described below:
The first combiner 1110 is in a location where an optical path of the first service optical signal emitted by the service light-emitting component 1102 intersects an optical path of the second identification optical signal emitted by the first light-emitting component 1111; and the second combiner 1120 is in a location where an optical path of the combined optical signal emitted by the first combiner 1110 intersects an optical path of the third identification optical signal emitted by the second light-emitting component 1121. For the descriptions of the first combiner 1110 and the second combiner 1120, refer to the descriptions of the combiner described in Embodiment 1. Details are not described in this embodiment.

Specifically, the first combiner 1110 receives and combines the first service optical signal from the service light-emitting component 1102 and the second identification optical signal from the first light-emitting component 1111 to form a combined optical signal. The second combiner 1120 receives and combines the combined optical signal and the third identification optical signal from the second light-emitting component 1121 to form the first target optical signal.

The second combiner 1120 is connected to the target optical cable, and the second combiner 1120 may transmit the first target optical signal to the optical splitter through the target optical cable. For descriptions of a specific connection manner, refer to the descriptions of the connection manner of the combiner and the optical splitter described in Embodiment 1. Details are not described again.

It should be clarified that in this embodiment, an example in which the ONU includes two light-emitting components configured to send identification optical signals is used for description. In another example, the ONU may include more than two light-emitting components provided that a plurality of different light-emitting components included by the ONU send identification optical signals to the optical splitter in a time sharing manner and wavelengths of the identification optical signals sent by the different light-emitting components are different, so as to ensure that the identification optical signals from the different light-emitting components are displayed in different colors on the out-light surface at the optical splitter. It can be learned that when the ONU includes a plurality of light-emitting components, only one of the plurality of light-emitting components included by the ONU is in an on state at a same moment.

For an execution process of creating the first target correspondence based on the identification system described in this embodiment, refer to any one of Embodiment 1 to Embodiment 3. Details are not described in this embodiment.

It can be learned that as described in this embodiment, because the ONU includes two or more light-emitting components, it can be effectively ensured that when the optical splitter is connected to a large quantity of ONUs, identification optical signals of different ONUs are displayed in different display statuses at the optical splitter, thereby effectively ensuring that the network management device can accurately create the first target correspondence.

### Embodiment 5

For descriptions of devices included in an identification system provided in this embodiment, refer to Embodiment 1. Details are not described in this embodiment.

A difference between Embodiment 5 and Embodiment 1 lies in that, a light-emitting component dedicated to sending an identification optical signal does not need to be added to an ONU described in this embodiment, and a light-emitting component described in this embodiment is configured to send an identification optical signal, and is also configured to send a first service optical signal. It can be learned that, the light-emitting component described in this embodiment is a service light-emitting component.

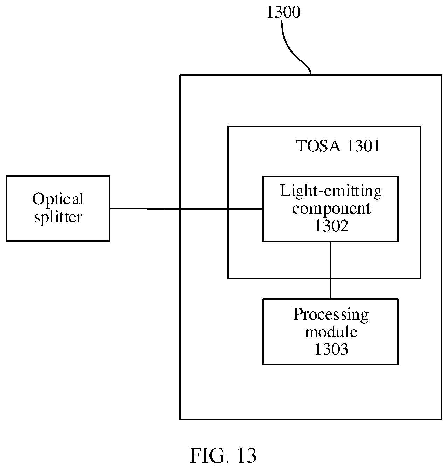

For a structure of the ONU described in this embodiment, refer to FIG. 13. FIG. 13 is an example diagram of a structure of a second embodiment of an optical network unit according to this application. The ONU 1300 described in this embodiment includes a TOSA 1301, and the TOSA 1301 specifically includes a light-emitting component 1302 and a processing module 1303. For descriptions of specific forms of the light-emitting component 1302 and the processing module 1303, refer to Embodiment 1. Details are not described in this embodiment.

The processing module 1303 described in this embodiment is configured to send a service electrical signal and an identification electrical signal to the light-emitting component 1302 in a time division mode. For specific descriptions of the service electrical signal and the identification electrical signal, refer to Embodiment 1, and details are not described in this embodiment. For descriptions of a process in which the processing module 1303 described in this embodiment sends the service electrical signal and the identification electrical signal to the light-emitting component 1302 in a time division mode, refer to the descriptions of a process in which the processing module described in Embodiment 4 sends the first identification electrical signal to the first light-emitting component and sends the second identification electrical signal to the second light-emitting component in a time division mode, and details are not described in this embodiment.

It can be learned that when the light-emitting component 1302 receives the identification electrical signal and the service electrical signal from the processing module 1303 in a time division mode, the light-emitting component 1302 can separately perform electrical-to-optical conversion on the identification electrical signal and the service electrical signal that are received in the time division mode, to obtain the first identification optical signal and the first service optical signal, and the light-emitting component 1302 can transmit the first target optical signal to the optical splitter through the target optical cable. The first target optical signal includes the first identification optical signal and the first service optical signal that are transmitted in the time division mode.

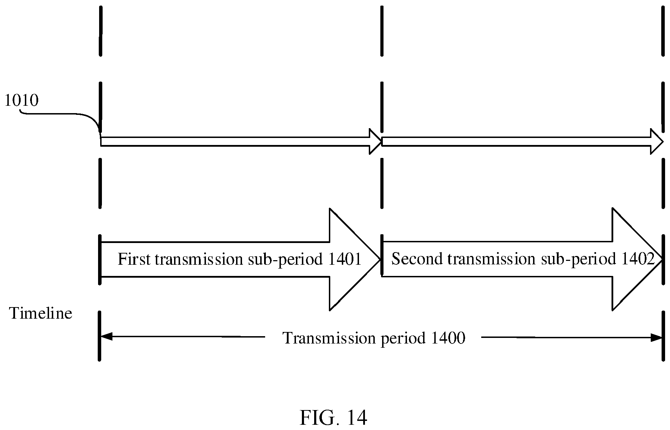

In this embodiment, the target socket of the optical splitter receives the first identification optical signal and the first service optical signal that are transmitted in the time division mode. For example, as shown in FIG. 14, the light-emitting component transmits the first target optical signal to the optical splitter in each transmission period. Each transmission period 1400 includes a first transmission sub-period 1401 and a second transmission sub-period 1402. The first transmission sub-period 1401 is used to transmit the first identification optical signal, and the second transmission sub-period 1402 is used to transmit the first service optical signal. Duration of the first transmission sub-period 1401 and duration of the second transmission sub-period 1402 are not limited in this embodiment.

It can be learned from Embodiment 1 that, there are two optional structures for the first splitting module of the optical splitter. In this embodiment, a structure of the first splitting module is the structure 1 of Embodiment 1, that is, the first splitting module is a branch optical splitter. It can be learned that the branch optical splitter can perform optical splitting on the first target optical signal described in this embodiment to obtain two optical signals, that is, a first optical signal and a second optical signal. For specific descriptions of optical splitting, refer to Embodiment 1. Details are not described in this embodiment.

For descriptions of a specific execution process of creating the first target correspondence by the identification system described in this embodiment, refer to any one of Embodiment 1 to Embodiment 3. Details are not described in this embodiment.

It can be learned that as described in this embodiment, a light-emitting component dedicated to sending an identification optical signal does not need to be disposed inside the ONU, and a structure of an existing ONU does not need to be changed. Therefore, it can be ensured that the light-emitting component included in the ONU can transmit the first service optical signal to the optical splitter, and can further transmit the first identification optical signal to the optical splitter. Because the structure of the existing ONU does not need to be changed, costs of applying the identification system described in this embodiment are reduced, and efficiency of creating the first target correspondence by the identification system described in this embodiment is improved. Because the structure of the ONU does not need to be changed, workload of an operation and maintenance engineer is greatly reduced, and difficulty of performing operation and maintenance on an identification system is reduced.

### Embodiment 6

An identification optical signal shown in any one of Embodiment 1 to Embodiment 5 is a visible light signal, but an identification optical signal described in this embodiment is an invisible light signal. For descriptions of a specific process in which an ONU described in this embodiment sends an identification optical signal, refer to a process in which the ONU shown in any one of Embodiment 1 to Embodiment 5 sends an identification optical signal. Details are not described in this embodiment.

If the ONU described in this embodiment sends a first target optical signal to an optical splitter, a first optical signal split from the first target optical signal by the optical splitter in a manner of optical splitting or demultiplexing is an invisible light signal.

In an identification system described in this embodiment, to create a first target correspondence, it is required that a terminal device can successfully record a display status of a first optical signal displayed by an out-light surface. If the first optical signal is an invisible light signal, through the terminal device described in Embodiment 1 to Embodiment 5, the display status of the first optical signal displayed by the out-light surface cannot be successfully recorded. Therefore, as described in this embodiment, the following optional manners may be used to ensure that the terminal device can record the display status of the first optical signal displayed by the out-light surface.

### Manner 1

FIG. 7c is an example diagram of a structure of a third embodiment of a first light guide module according to this application. The first light guide module described in this embodiment includes a light guide body 710, and a first end surface of the light guide body 710 is connected to a first output port or a second output port of a first splitting module. For specific descriptions, refer to Embodiment 1. Details are not described. A second end surface of the light guide body 710 forms an out-light surface 711. For specific descriptions of the light guide body 710 and the out-light surface 711 in this embodiment, refer to Embodiment 1, which is not specifically limited in this embodiment.

In this embodiment, a display status of the first optical signal presented as invisible light on the out-light surface 711 cannot be recorded by a camera of the terminal device. In this embodiment, a coating layer 712 may be disposed on an outer surface of the out-light surface 711. The coating layer 712 made of a fluorescent material is formed on the outer surface of the out-light surface 711, and the coating layer 712 is capable of converting the first optical signal into a visible light signal. The display status of the visible light signal obtained by performing conversion through the coating layer can be recorded by the camera of the terminal device.

### Manner 2

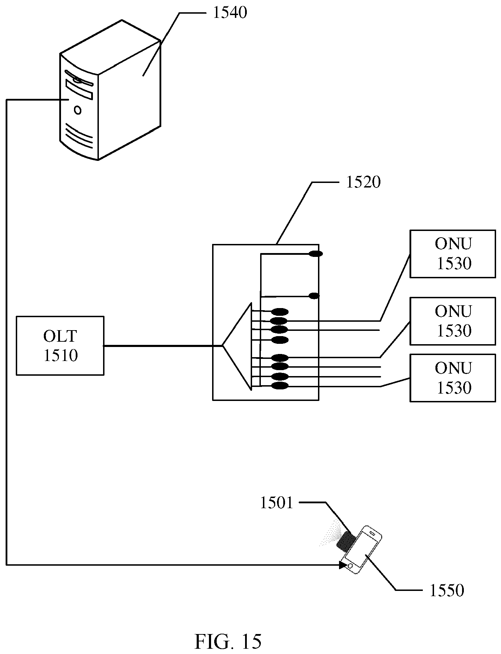

For a structure of an identification system shown in this manner, refer to FIG. 15. FIG. 15 is an example diagram of a structure of a third embodiment of an identification system according to this application.

For descriptions of structures of a network management device 1540, an OLT 1510, an optical splitter 1520, an ONU 1530, and a terminal device 1550 shown in FIG. 15, refer to Embodiment 1. Details are not described in this embodiment.

A camera of the terminal device 1550 described in this embodiment is a visible light camera. To ensure that the visible light camera can record a first optical signal presented as invisible light, the visible light camera of the terminal device 1550 described in this embodiment is connected to an infrared detector 1501. An implementation of the infrared detector 1501 is not limited in this embodiment, provided that the infrared detector 1501 can convert the first optical signal from invisible light to visible light.

The infrared detector 1501 can convert the first optical signal presented as invisible light from an out-light surface into the first optical signal presented as visible light. When a complementary metal oxide semiconductor (complementary metal oxide semiconductor, CMOS) or a charge-coupled device (charge-coupled device, CCD) sensor included by the camera of the terminal device 1550 can receive a display status of the first optical signal that is obtained by performing conversion through the infrared detector 1501 and that is presented as visible light, so as to obtain a first video. For specific descriptions of the first video, refer to Embodiment 1, and details are not described in this embodiment.

### Manner 3

Based on the identification system shown in FIG. 2, a camera of the terminal device 250 described in this embodiment is an infrared camera, and the infrared camera has a capability of recording the first optical signal presented as invisible light, thereby ensuring that the terminal device 250 can obtain a first video by recording, through the infrared camera, the display status of the first optical signal displayed by the out-light surface.

### Manner 4

As shown in FIG. 7b in Embodiment 1, it can be learned that the first light guide module may be a through hole disposed through a surface of the box 520. In this embodiment, a fluorescent module made of a fluorescent material may be disposed inside the through hole. In this way, the first optical signal that is presented as visible light and that is emitted by the fluorescent module can be recorded by a camera of the terminal device.

### Manner 5

For a structure of an identification system shown in this manner, also refer to FIG. 15. A camera of the terminal device is not limited in this manner. To ensure that the terminal device 1550 can record a first optical signal presented as invisible light, the terminal device 1550 described in this embodiment is connected to an infrared detector 1501. An implementation of the infrared detector 1501 is not limited in this embodiment, provided that the infrared detector 1501 can convert the first optical signal from invisible light to visible light.

The terminal device 1550 can collect the display status of the first optical signal through the infrared detector 1501, so as to obtain the first video. For specific descriptions of the first video, refer to Embodiment 1. Details are not described in this embodiment.

For an execution process of creating the first target correspondence based on the identification system described in this embodiment, refer to any one of Embodiment 1 to Embodiment 3. Details are not described in this embodiment.

For descriptions of a specific execution process of creating the first target correspondence by the identification system described in this embodiment after the first optical signal presented as invisible light is converted into the first optical signal presented as visible light, refer to any one of Embodiment 1 to Embodiment 3. Details are not described in this embodiment.

For descriptions of the advantageous effects described in this embodiment, refer to any one of Embodiment 1 to Embodiment 3. Details are not described in this embodiment.

### Embodiment 7

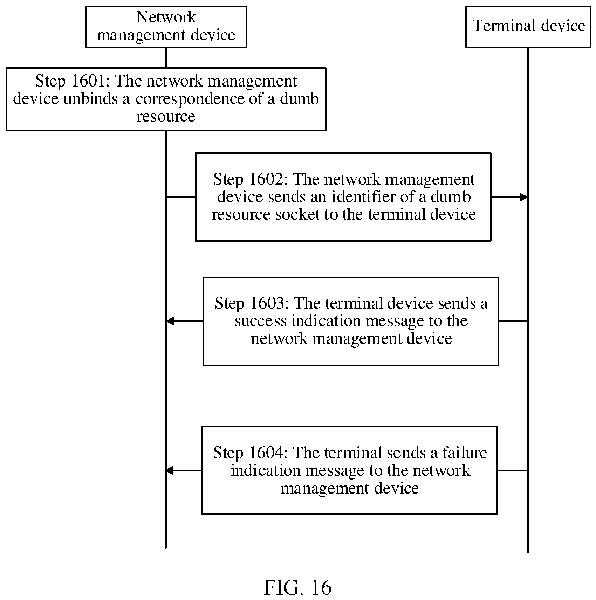

Based on Embodiment 1 to Embodiment 6, an identification method described in this embodiment can accurately and efficiently implement a dumb resource socket cleaning process, where the dumb resource socket cleaning described in this embodiment means that an optical cable is inserted into each socket of an optical splitter. If the other end of an optical cable is not connected to an ONU, the optical cable is a dumb resource optical cable. To improve utilization efficiency of sockets included by a box, an operation and maintenance engineer needs to be able to identify the dumb resource optical cable on a surface of the box in time and accurately, and pull out the dumb resource optical cable from the socket. For a specific implementation process, refer to FIG. 16.

Step 1601: A network management device unbinds a correspondence of a dumb resource.

The network management device described in this embodiment has stored a first target correspondence. For descriptions of a process of creating the first target correspondence, refer to Embodiment 1 to Embodiment 6. Details are not described in this embodiment.

After the operation and maintenance engineer disassembles a dumb resource ONU on a user side, the operation and maintenance engineer inputs an identifier of the dumb resource ONU to the network management device. Continue to refer to the first target correspondence shown in Table 4. If the identifier of the dumb resource ONU disassembled by the operation and maintenance engineer is ONU ID4, the operation and maintenance engineer sends the dumb resource ONU ID4 to the network management device.

That the network management device unbinds the correspondence of a dumb resource means that the network management device deletes, from the first target correspondence, a correspondence related to the dummy resource ONU ID4. It can be learned that the first target correspondence obtained after the network management device performs unbinding may be shown in Table 6.

**Table 6**

| Optical splitter identifier | Socket identifier | ONU identifier | PON port number |
|---|---|---|---|
| Identifier 550 | Identifier 541 | ONU ID1 | A1/B1/C1 |
| | Identifier 542 | ONU ID2 | A2/B2/C2 |
| | Identifier 543 | ONU ID3 | A3/B3/C3 |

In this case, although the network management device deletes, from the first target correspondence, the correspondence related to the dummy resource ONU ID4, an optical cable (namely, the dummy resource optical cable shown above) is still connected to a dummy resource jack. The dummy resource socket is a socket that is connected to the dummy resource ONU through an optical cable before the dummy resource ONU is disassembled. It can be learned that in this example, an identifier of the dummy resource socket is an identifier 544.

Step 1602: The network management device sends an identifier of a dumb resource socket to a terminal device.

In this embodiment, to implement dumb resource cleaning, the operation and maintenance engineer needs to accurately determine the identifier of the dumb resource socket on the surface of the box. In this embodiment, that the identifier of the dumb resource socket is the socket 504 is used as an example. The operation and maintenance engineer pulls out the dumb resource optical cable connected to the socket 504, so as to clean the dumb resource. Therefore, the network management device sends the identifier (that is, the identifier 544) of the dumb resource socket to the terminal device, to indicate the operation and maintenance engineer to pull out the dumb resource optical cable connected to the dumb resource socket indicated by the identifier 544.

In this embodiment, to improve the operation and maintenance engineer in determining a specific location of the dummy resource socket on the surface of the box, the network management device described in this embodiment may further send specific coordinates of the dummy resource socket to the terminal device. The coordinates of the dummy resource socket are used to indicate a row number and a column number of the dummy resource socket located in a socket array included on the surface of the box.

For example, the network management device prestores a location list, and the location list may be shown in Table 7.

**Table 7**

| Socket identifier | Socket coordinates |
|---|---|
| Identifier 541 | Row 1 and column 1 |
| Identifier 542 | Row 1 and column 2 |
| Identifier 543 | Row 1 and column 3 |
| Identifier 544 | Row 1 and column 4 |

It can be learned that if the socket array included on the surface of the box has one row and four columns, when obtaining the identifier of the dummy resource socket, the network management device may determine corresponding coordinates of the dummy resource socket based on the location list shown in Table 7. For example, socket coordinates corresponding to the dummy resource socket with the identifier 544 are row 1 and column 4. It should be clarified that a quantity of rows and a quantity of columns included on the surface of the box are not limited in this embodiment.

Optionally, in another example, the terminal device may prestore a location list. The location list may be shown in Table 7. Details are not described again. In this way, when receiving an identifier of a dumb resource socket, the terminal device can query corresponding coordinates of the dummy resource socket from the location list.

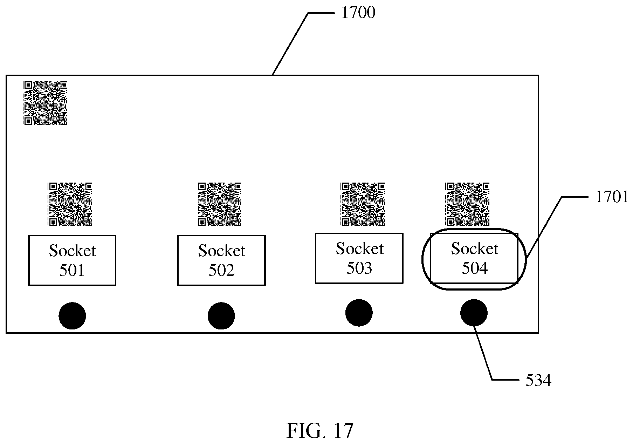

Optionally, the network management device may store an indication photo, where the indication photo is a frame of photo extracted from the first video. For the indication photo in this example, refer to FIG. 17. FIG. 17 is an example diagram of an embodiment of an indication photo according to this application. It can be learned that the indication photo includes a surface of a box.

When the network management device determines that the dumb resource socket is the socket 504, the network management device may delineate the socket 504 in the indication photo, for example, delineate the socket 504 through an indication box 1701 in the indication photo 1700, and the network management device sends the indication photo to the terminal device. When the terminal device displays the indication photo, the operation and maintenance engineer can quickly and accurately determine the dumb resource socket 504.

In another example, the terminal device may alternatively generate the indication photo. For a generation process, refer to a process in which the network management device generates the indication photo. Details are not described again.

Step 1603: The terminal device sends a success indication message to the network management device.

It can be learned that in the foregoing manner, the operation and maintenance engineer can accurately and quickly determine the dumb resource socket 504 in the box. In this embodiment, the operation and maintenance engineer further needs to determine whether a first optical signal is displayed on an out-light surface corresponding to the dumb resource socket 504. For specific descriptions of the first optical signal, refer to any one of the foregoing embodiments. Details are not described in this embodiment.

It can be learned from the foregoing embodiments that, if the ONU connected to the socket of the optical splitter through the optical cable is in a normal working state, the normally working ONU sends the first target optical signal to the optical splitter. Therefore, the first optical signal is displayed on the out-light surface corresponding to the socket connected to the ONU.

When the operation and maintenance engineer determines that no optical signal is displayed on the out-light surface 534 corresponding to the dumb resource socket 504, it indicates that the optical cable connected to the socket 504 is not connected to the ONU, and the ONU connected to the socket 504 has been disassembled. If the operation and maintenance engineer determines that the first optical signal is displayed on the out-light surface 534 corresponding to the dumb resource socket 504, it indicates that the optical cable connected to the socket 504 is connected to a normally working ONU, indicating that the optical cable connected to the socket 504 is not a dumb resource optical cable. To avoid interruption of service transmission, the operation and maintenance engineer cannot pull out the optical cable from the socket 504.

It can be learned that when the operation and maintenance engineer determines that no optical signal is displayed on the out-light surface 534 corresponding to the dumb resource socket 504, the operation and maintenance engineer inputs a success indication message to the terminal device, where the success indication message indicates that the dumb resource socket is successfully cleaned.

Step 1604: The terminal sends a failure indication message to the network management device.

When the operation and maintenance engineer determines that an optical signal is displayed on the out-light surface 534 corresponding to the dumb resource socket 504, the operation and maintenance engineer inputs a failure indication message to the terminal device, where the failure indication message indicates that the dumb resource socket is unsuccessfully cleaned. Therefore, the network management device needs to send an identifier of a dumb resource socket to the terminal device again.

It can be learned that through the method described in this embodiment, a dumb resource socket can be determined from the surface of the box, so that an operation and maintenance engineer pulls out an optical cable from the dumb resource socket, thereby improving accuracy and efficiency of cleaning a dumb resource.

### Embodiment 8

This embodiment provides an identification system, and the identification system described in this embodiment can establish a fourth target correspondence. The fourth target correspondence includes a correspondence between an OLT, N optical splitter, and an ONU. Specifically, the N optical splitters are N optical splitters sequentially connected between the OLT and the ONU. In this embodiment, N is a positive integer greater than or equal to 2. Specifically, the fourth target correspondence includes a correspondence between information about the OLT, identifiers of the N optical splitters, and an identifier and/or a type of the ONU. For specific descriptions of the identifier and/or the type of the ONU, refer to the foregoing embodiments. Details are not described again.

The information about the OLT includes one or more of the following:
a geographic location, an equipment room identifier, a rack number, a subrack number, line card number, a slot number, a port number, a type, or an identifier.

For the process of creating the fourth target correspondence by the identification system described in this embodiment, refer to the following steps:
Step A11: An electronic device creates a first target correspondence.

The first target correspondence includes a correspondence between the N optical splitters and the identifier and/or the type of the ONU.

For descriptions of a process of creating the first target correspondence, refer to the descriptions of creating a correspondence between an optical splitter and an identifier and/or a type of an ONU shown in the foregoing embodiments. Details are not described again.

Step A12: The electronic device obtains a second target correspondence.

The electronic device in this embodiment may be a network management device or a terminal device. For specific descriptions of the network management device or the terminal device, refer to the foregoing embodiments. Details are not described again.

The second target correspondence includes a correspondence between the information about the OLT and the N optical splitters.

Specifically, the OLT sequentially transmits a second target optical signal to the N optical splitters. A display status of the second target optical signal corresponds to the information about the OLT. For specific descriptions, refer to the foregoing descriptions about the correspondence between the display status of the first target optical signal and the identifier and/or the type of the ONU. Details are not described again.

It can be learned that, the electronic device may create the second target correspondence between the information about the OLT and the N optical splitters based on a display status of the second target optical signal at each optical splitter.

Step A13: The electronic device obtains a third target correspondence.

The third target correspondence includes a correspondence between the identifier and/or the type of the ONU and the information about the OLT. Optionally, if the electronic device described in this embodiment is a network management device, the network management device has prestored the third target correspondence. Optionally, if the electronic device described in this embodiment is a terminal device, the terminal device may receive the third target correspondence from a network management device.

The OLT establishes the third target correspondence in a process in which the ONU initiates a registration request and a go-online request to the OLT. The OLT may send the created third target correspondence to a terminal device or a network management device.

Step A14: The electronic device creates a fourth target correspondence based on the first target correspondence, the second target correspondence, and the third target correspondence.

The fourth target correspondence includes a correspondence between the information about the OLT, the identifiers of the N optical splitters, and the identifier and/or the type of the ONU.

It should be clarified that if the electronic device is a terminal device, the terminal device may send the created fourth target correspondence to a network management device. If the electronic device is a network management device, the network management device may directly store the fourth target correspondence.

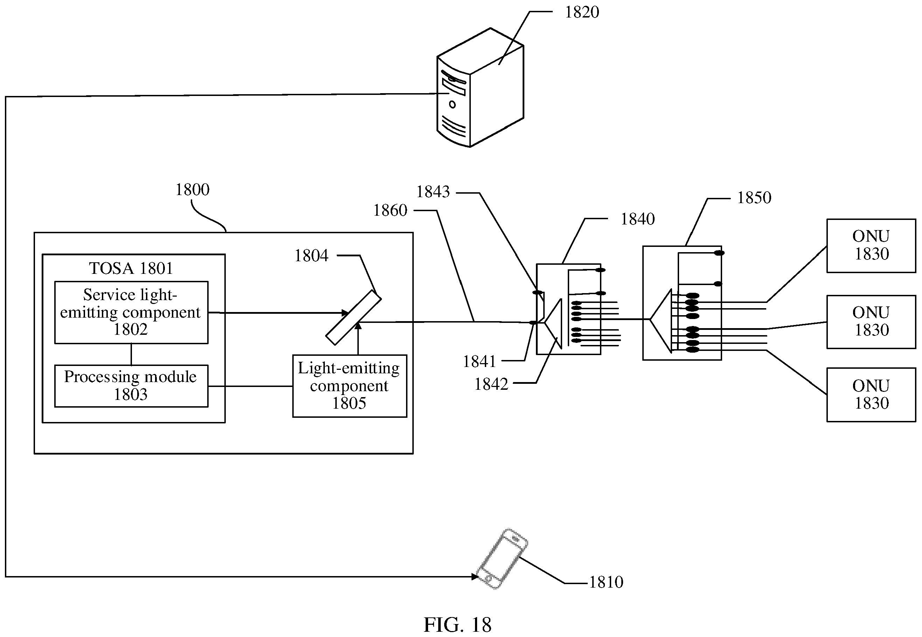

For better understanding, the following describes an example of a process in which the identification system in this embodiment creates the fourth target correspondence. For a structure of an identification system described in this embodiment, refer to FIG. 18. FIG. 18 is an example diagram of a structure of a fourth embodiment of an identification system according to this application.

The identification system described in this embodiment specifically includes a network management device 1820, an OLT 1800, a first optical splitter 1840, a second optical splitter 1850, an ONU 1830, and a terminal device 1810. For descriptions of structures of the network management device 1820, the second optical splitter 1850, the ONU 1830, and the terminal device 1810 in this embodiment, refer to any one of the foregoing embodiments. Details are not described in this embodiment.

In this embodiment, that the identification system is applied to a scenario of two-stage optical splitting is used as an example. Two-stage optical splitting in a transmission direction of a downlink optical signal means that the downlink optical signal sent by the OLT 1800 to the ONU 1830 is sequentially optically split by the first optical splitter 1840 and the second optical splitter 1850, and then transmitted to the ONU1830. Two-stage optical splitting in a transmission direction of an uplink optical signal means that the uplink optical signal sent by the ONU 1830 to the OLT 1800 is sequentially optically split by the second optical splitter 1850 and the first optical splitter 1840, and then transmitted to the OLT 1800.

In this embodiment, two-stage optical splitting is used as an example for description. In another example, one-stage optical splitting or optical splitting of more than two stages may alternatively be used. This is not specifically limited in this embodiment.

The OLT 1800 described in this embodiment includes a TOSA 1801, where the TOSA 1801 specifically includes a service light-emitting component 1802 and a processing module 1803 that are connected to each other, and the OLT 1800 further includes a light-emitting component 1805 that is connected to the processing module 1803. The OLT 1800 includes a combiner 1804. For descriptions of components included by the OLT 1800 described in this embodiment, refer to descriptions of components included by the ONU shown in FIG. 3. Details are not described in this embodiment.

A specific structure of the OLT 1800 is not limited in this embodiment, provided that the OLT 1800 can send the second target optical signal to the first optical splitter 1840. For example, for the structure of the OLT 1800, alternatively refer to FIG. 11. That is to say, the OLT 1800 may include a plurality of light-emitting components. For another example, for the structure of the OLT 1800, refer to FIG. 13. That is to say, the OLT 1800 does not need to be provided with a light-emitting component dedicated to sending the fourth identification optical signal.

Different PON ports included by the OLT shown in the identification system described in this embodiment are connected to different optical splitters. In this embodiment, a target PON port included by the OLT is connected to a master port of the first optical splitter 1840 shown in FIG. 18. The master port of the first optical splitter 1840 described in this embodiment is connected to the target PON port through a backbone optical cable 1860, and the target PON port is one of a plurality of PON ports included by the OLT.

The identification system described in this embodiment is configured to display the fourth identification optical signal from the target PON port at the first optical splitter 1840 in a specific display status, so that the information about the OLT corresponding to the display status of the fourth identification optical signal is easily identified at the first optical splitter. For description of the information about the OLT, refer to the foregoing descriptions, and details are not described again. In this embodiment, that the information about the OLT is a target PON port number is used as an example, where the target PON port number is a target PON port number of the target PON port connected to the master port. For specific descriptions of the PON port number, refer to Embodiment 1, and details are not described in this embodiment.

To identify, at the first optical splitter, the target PON port connected to the master port, fourth identification optical signals transmitted by different PON ports included by the OLT to different optical splitters need to have different display statuses. The identification system described in this embodiment may determine the corresponding target PON port number based on the display status of the fourth identification optical signal from the target PON port. For descriptions of the display status of the fourth identification optical signal, refer to the descriptions of the display status of the first identification optical signal described in Embodiment 1. Details are not described in this embodiment.

The following continues to describe a structure of the first optical splitter 1840 with reference to FIG. 18.

The optical splitter described in this embodiment includes a second splitting module. The second splitting module described in this embodiment has a second splitter 1841, an input port of the second splitter 1841 is connected to the backbone optical cable 1860, and the second splitter 1841 has a first output port and a third output port. For descriptions of the specific implementation structure of the second splitter 1841 in this embodiment, refer to the descriptions of the implementation structure of the first splitter described in Embodiment 1. Details are not described in this embodiment.

The second splitter 1841 in this embodiment receives, through the input port, the second target optical signal from the backbone optical cable 1860, and the second splitter 1841 is configured to split the second target optical signal to obtain a fourth identification optical signal and a second service optical signal. The second service optical signal described in this embodiment is a service optical signal sent by the OLT 1800 to the ONU.

The first output port of the second splitter 1841 is connected to the second light guide module 1843 through an optical cable, and the third output port of the second splitter 1841 is connected to the second optical splitter 1850 through an optical cable. The second light guide module 1843 is configured to receive a fourth identification optical signal from the second splitter 1841, and display the fourth identification optical signal on the surface of the box. For descriptions of the structure of the second light guide module 1843, refer to the descriptions of the structure of the first light guide module described in Embodiment 1, and details are not described in this embodiment.

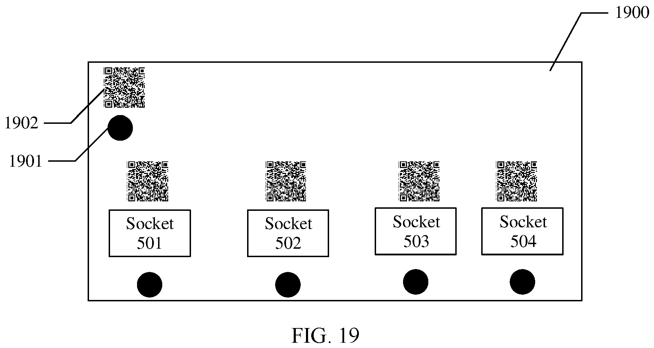

For example, FIG. 19 is an example diagram of a structure of a first embodiment a surface of a box of an optical splitter according to this application. A master port out-light surface 1901 and an identifier 1902 of a first optical splitter are disposed on a surface of a box 1900 of the first optical splitter.

For a type of the identifier 1902 of the first optical splitter, refer to Embodiment 1. Details are not described in this embodiment. An example in which the identifier 1902 of the first optical splitter is a two-dimensional code is used for description in this embodiment. For descriptions of a location of the identifier 1902 of the first optical splitter described in this embodiment on the surface of the box 1900, refer to the descriptions of the location of the identifier of the optical splitter described in Embodiment 1 on the surface of the box. This is not specifically limited in this embodiment.

A location relationship between the master port out-light surface 1901 and the identifier 1902 of the first optical splitter described in this embodiment may satisfy one or more of the following conditions:
The master port out-light surface 1901 is located in a third orientation of the identifier 1902 of the first optical splitter, a distance between the master port out-light surface 1901 and the identifier 1902 of the first optical splitter is short, or the master port out-light surface 1901 coincides with the identifier 1902 of the first optical splitter.

An example of this embodiment is described through an example in which the master port out-light surface 1901 shown in FIG. 19 is located in the third orientation of (below) the identifier 1902 of the first optical splitter and the distance between the master port out-light surface 1901 and the identifier 1902 of the first optical splitter is short.

The second demultiplexer 1842 is configured to demultiplex the received second service optical signal to obtain a plurality of downlink service optical signals, and the second demultiplexer 1842 is configured to transmit each downlink service optical signal to a next-hop optical splitter or ONU through a branch optical cable. For descriptions of the structure of the second demultiplexer 1842, refer to the descriptions of the structure of the first demultiplexer described in Embodiment 1. Details are not described in this embodiment.

As described in this embodiment, fourth identification optical signals transmitted by different PON ports to the optical splitter have different display statuses. For descriptions of how the first optical splitter displays the fourth identification optical signal, refer to the descriptions of displaying the first identification optical signal by the optical splitter described in Embodiment 1. Details are not described in this embodiment.

An objective of the identification system described in this embodiment is to create a fourth target correspondence, where the fourth target correspondence includes a correspondence between the information about the OLT, the identifier of the first optical splitter, the identifier of the second optical splitter, and the identifier and/or the type of the ONU. For example, the fourth target correspondence is a correspondence between a target PON port number, a master port of the first optical splitter, a master port of the second optical splitter, and an identifier and/or a type of the ONU.

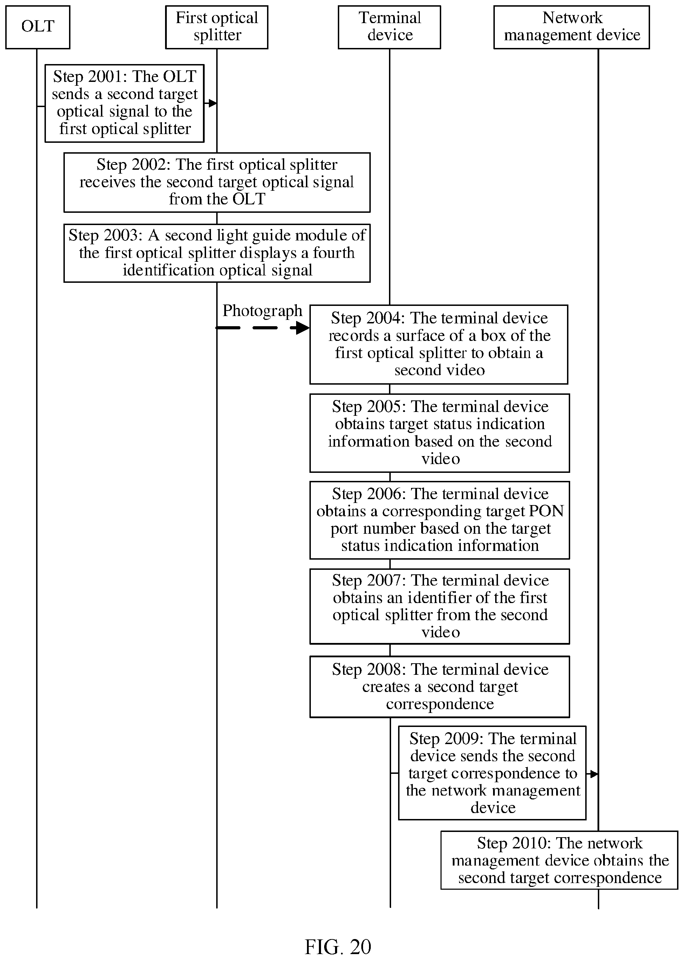

Based on the description of the structure of the identification system described in this embodiment, the following describes an execution process of the identification method provided in this application with reference to FIG. 20.

Step 2001: An OLT sends a second target optical signal to a first optical splitter.

A network management device described in this embodiment may deliver a work order to a terminal device, where the work order indicates an operation and maintenance engineer to connect a target PON port of the OLT to a master port of the first optical splitter through an optical cable. Subsequently, the OLT may periodically transmit the second target optical signal to the first optical splitter. For descriptions of the second target optical signal, refer to the foregoing descriptions. Details are not described again.

Step 2002: The first optical splitter receives the second target optical signal from the OLT.

The OLT described in this embodiment may be connected to a plurality of different first optical splitters through different PON ports. To determine a first optical splitter connected to each PON port included by the OLT, fourth identification optical signals sent by different PON ports have different display statuses.

Step 2003: A second light guide module of the first optical splitter displays a fourth identification optical signal.

For descriptions of a specific structure of the first optical splitter, refer to the foregoing descriptions. Details are not described again. It can be learned that the first optical splitter displays the fourth identification optical signal through a master port out-light surface located on a surface of a box.

Step 2004: A terminal device records a surface of a box of the first optical splitter to obtain a second video.

If the identification system described in this embodiment aims to obtain the second target correspondence, the terminal device included by the identification system needs to record the surface of the box of the first optical splitter to obtain the second video.

For descriptions of a specific process in which the terminal device obtains the second video in this embodiment, refer to the descriptions of a process in which the terminal device obtains the first video in step 804 in Embodiment 1. Details are not described again.

Step 2005: The terminal device obtains target status indication information based on the second video.

Specifically, the terminal device in this embodiment obtains the target status indication information corresponding to the fourth identification optical signal included by the second video.

Because fourth identification electrical signals sent by different PON ports have different display statuses, it can be learned that, in the second video, the display status of the fourth identification optical signal displayed on the master port out-light surface corresponds to the target PON port. Therefore, the terminal device obtains the second video, and decodes the display status of the fourth identification optical signal displayed on the master port out-light surface included by the second video, to obtain the target status indication information. For specific descriptions of a decoding process, refer to the descriptions of a process in which the terminal device decodes the first identification optical signal in step 805 in Embodiment 1. Details are not described in this embodiment.

Step 2006: The terminal device obtains a corresponding target PON port number based on the target status indication information.

The terminal device in this embodiment has stored a fourth preset correspondence, and the fourth preset correspondence includes correspondences between different status indication information and different PON port numbers.

For the fourth preset correspondence described in this embodiment, refer to the following Table 8.

**Table 8**

| Status indication information | PON port number |
|---|---|
| First status indication information | A1/B1/C1 |
| Second status indication information | A2/B2/C2 |
| Third status indication information | A3/B3/C3 |
| Fourth status indication information | A2/B2/C2 |

For descriptions of the PON port numbers shown in Table 8, refer to the descriptions of the PON port numbers described in Embodiment 1. Details are not described in this embodiment.

It can be learned that if the target status indication information determined by the terminal device in this embodiment based on the display status of the fourth identification optical signal displayed on the master port is the third status indication information shown in Table 8, the terminal device may determine that the number of the PON port connected to the master port of the first optical splitter is A3B3/C3.

Step 2007: The terminal device obtains an identifier of the first optical splitter from the second video.

For an identifier type of the identifier of the first optical splitter, refer to Embodiment 1. Details are not described in this embodiment. An example in which the identifier of the first optical splitter is a two-dimensional code is used for description in this embodiment. For descriptions of a specific process in which the terminal device in this embodiment obtains any frame of image from the second video and obtains the identifier of the first optical splitter from the image, refer to descriptions of a specific process in which the terminal device obtains the identifier of the optical splitter from the target image in step 808 described in Embodiment 1. Details are not described again.

Step 2008: The terminal device creates a second target correspondence.

For the second target correspondence created by the terminal device in this embodiment, refer to Table 9 shown below.

**Table 9**

| Identifier of an optical splitter | PON port number |
|---|---|
| Identifier of a first optical splitter | A3/B3/C3 |

It can be learned that the second target correspondence created by the terminal device includes the identifier of the first optical splitter and the PON port number of the target PON port connected to the master port of the first optical splitter.

Step 2009: The terminal device sends the second target correspondence to a network management device.

Step 2010: The network management device obtains the second target correspondence.

It should be clarified that this embodiment is described through an example in which the terminal device directly sends the created second target correspondence to the network management device. In another example, the terminal device may alternatively directly send the second video to the network management device, and the network management device creates the second target correspondence based on the second video. For descriptions of a specific process, refer to the foregoing descriptions of creating the second target correspondence by the terminal device. Details are not described again.

Optionally, the terminal device may transmit the target status indication information and the identifier of the first optical splitter that are included by the second video to the network management device, and the network management device creates the second target correspondence based on the target status indication information and the identifier of the first optical splitter. For descriptions of a specific process, refer to the foregoing descriptions of creating, by the terminal device, the second target correspondence based on the target status indication information and the identifier of the first optical splitter. Details are not described again.

The network management device described in this embodiment may further obtain the second correspondence including the identifier of the second optical splitter and the information about the OLT. For a specific process, refer to the foregoing steps, and details are not described again.

The network management device described in this embodiment may further obtain the first target correspondence. For descriptions of a specific process of obtaining the first target correspondence by the network management device described in this embodiment, refer to Embodiment 1, and details are not described in this embodiment. With reference to FIG. 18, it can be learned that the network management device may create the fourth correspondence based on the first target correspondence, the second target correspondence, and the third target correspondence. The fourth correspondence includes a correspondence between information about an OLT (for example, a PON port number), an identifier of the first optical splitter, an identifier of the second optical splitter, and an identifier of the ONU. For details, refer to Table 10:

**Table 10**

| PON port number | Identifier of a first optical splitter | Identifier of a second optical splitter | ONU identifier |
|---|---|---|---|
| A3/B3/C3 | 1840 | 1850 | ONU ID3 |

It can be learned based on the fourth target correspondence shown in Table 10 that, the downlink optical signal from the PON port number A3/B3/C3 is sequentially transmitted to the ONU corresponding to the ONU ID3 through the first optical splitter 1840 and the second optical splitter 1850 that are indicated by the multi-stage optical splitting correspondence.

In this embodiment, an example in which two-stage optical splitting is used to create the multi-stage optical splitting correspondence is used for description. In another example, the multi-stage optical splitting correspondence may include optical splitting of more than two stages.

The network management device described in this embodiment may implement digital management based on the fourth target correspondence. The digital management may mean that the second video may be obtained by recording a surface of a box, and the PON port connected to the master port of the first optical splitter can be obtained by analyzing an image of the second video, so that an identifier of the first optical splitter connected to each PON port in the plurality of PON ports included by the OLT can be determined, thereby implementing digital management on the PON port included by the OLT. Digital management effectively reduces operation and maintenance costs in the OLT phase.

In the process of creating the fourth target correspondence described in this embodiment, the operation and maintenance engineer only needs to record the surface of the box through the terminal device to obtain the second video, and does not need to manually participate in too many processes. Therefore, a disadvantage of low accuracy of creating the fourth target correspondence due to participation of the operation and maintenance engineer is effectively avoided.

In addition, the PON port connected to the master port can be determined on the first optical splitter side based on the display status of the master port out-light surface, and an operation and maintenance engineer does not need to obtain the PON port number at the OLT, thereby improving efficiency and accuracy of a process of creating the fourth target correspondence.

In the process of obtaining the fourth target correspondence, the fourth target correspondence may be created through the second video recorded by the terminal device, so as to implement a process of digital management of PON ports included by the OLT, thereby implementing digital recording and management of PON port resources of the OLT. There is no need for an operation and maintenance engineer to manually view and record connection relationships between PON ports of the OLT and different first optical splitters one by one on site, thereby effectively improving accuracy and efficiency of managing the PON port resources included by the OLT.

### Embodiment 9

Based on Embodiment 1 to Embodiment 7, when a connection of an identification system is completed, a network management device can store a first target correspondence including each socket identifier of an optical splitter. For a process of creating the first target correspondence, refer to Embodiment 1 to Embodiment 7. Details are not described in this embodiment.

The identification system described in this embodiment includes a network management device, an OLT, an optical splitter, and a terminal device. For specific descriptions, refer to any one of Embodiments 1 to 7. Details are not described again.

The following describes an application scenario of the identification system described in this embodiment.

The optical splitter described in this embodiment is connected to a large quantity of ONUs, and the large quantity of ONUs are densely deployed. If some ONUs have faults in the large quantity of ONUs connected to the optical splitter, it is difficult and inefficient to determine an ONU having a fault in the large quantity of densely deployed ONUs. However, through the identification system described in this embodiment, an ONU having a fault connected to the optical splitter can be quickly and accurately determined, so that an operation and maintenance engineer can accurately and efficiently disassemble the ONU having a fault on a user side. In this embodiment, that an ONU having a fault is referred to as a faulty ONU is used as an example for description.

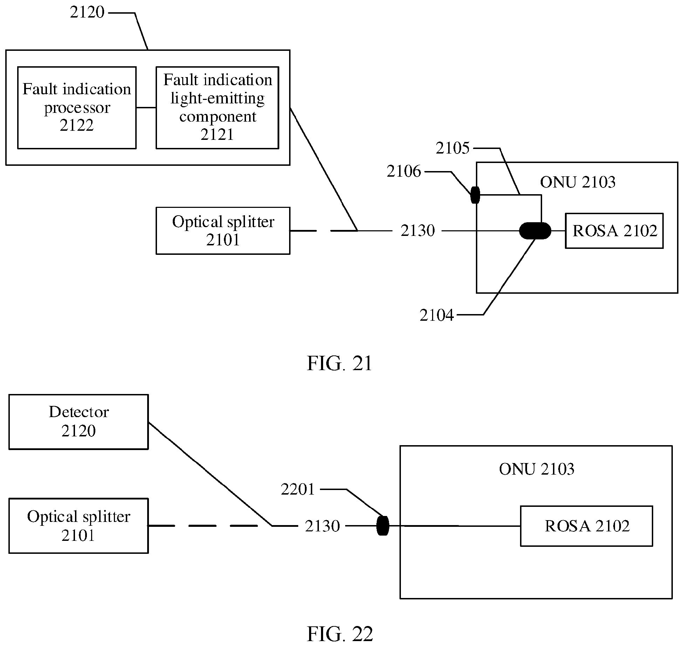

For a structure of an ONU included by the identification system described in this embodiment, refer to FIG. 21. FIG. 21 is an example diagram of a structure of a fifth embodiment of an identification system according to this application.

An ONU 2103 described in this embodiment includes an optical receiving subassembly (receiver optical subassembly, ROSA) 2102. The ROSA 2102 is configured to receive a downlink optical signal from an optical splitter 2101, and perform optical-to-electrical conversion on the downlink optical signal to obtain a downlink service optical signal. The ROSA 2102 may process the downlink service optical signal.

The ONU 2103 described in this embodiment further includes a third splitting module 2104, where the third splitting module 2104 is connected between the ROSA 2102 and the optical splitter 2101, and the third splitting module 2104 described in this embodiment may be located inside the ONU 2103. Alternatively, the third splitting module 2104 may be located outside the ONU 2103, which is not specifically limited in this embodiment.

For descriptions of the specific structure of the third splitting module 2104 described in this embodiment, refer to the descriptions of the structure of the first splitting module described in Embodiment 1. Details are not described in this embodiment. Specifically, an input port of the third splitting module 2104 described in this embodiment is connected to the optical splitter 2101 through an optical cable, a first output port of the third splitting module 2104 is connected to the ROSA 2102, and a second output port of the third splitting module 2104 is connected to a third light guide module 2105. For descriptions of a specific structure of the third light guide module 2105, refer to the descriptions of the structure of the first light guide module described in Embodiment 1. Details are not described in this embodiment.

The network management device determines an identifier of a faulty ONU having a fault. The network management device described in this embodiment has stored the first preset correspondence. For descriptions of the first preset correspondence, refer to Table 1-1 in Embodiment 1, and details are not described again.

The network management device may send the identifier of the faulty ONU to the terminal device or a detector 2120 described in this embodiment. After receiving the identifier of the faulty ONU, the terminal device or the detector 2120 may display the identifier of the faulty ONU. The operation and maintenance engineer may pull out, based on the identifier of the faulty ONU, the optical cable connected to the faulty ONU from the socket of the optical splitter. For descriptions of a specific process, refer to the process of cleaning the dumb resource optical cable described in Embodiment 7. Details are not described in this embodiment.

When the network management device obtains the identifier of the faulty ONU, the network management device may obtain fault state indication information corresponding to the identifier of the faulty ONU by querying the first preset correspondence shown in Table 1-1. For example, if the identifier of the faulty ONU is ONU ID1, it is determined that the corresponding fault state indication information is the first state indication information.

The network management device sends the fault state indication information corresponding to the faulty ONU to the detector 2120. The detector 2120 described in this embodiment includes a fault indication processor 2122 and a fault indication light-emitting component 2121 connected to the fault indication processor. For specific descriptions of the fault indication processor 2122 described in this embodiment, refer to the descriptions of the processor shown in the foregoing embodiments. For specific descriptions of the fault indication light-emitting component 2121 described in this embodiment, refer to the descriptions of the light-emitting component 2121 shown in the foregoing embodiments. Details are not described in this embodiment.

It should be clarified that in this embodiment, an example in which the identification system includes an independent detector 2120 is used for description, that is, an example in which the detector 2120 described in this embodiment and the terminal device are two independent devices is used for description. In another example, the detector 2120 and the terminal device may alternatively be a same device.

After obtaining the fault status indication information from the network management device, the fault indication processor 2122 may determine a fault wavelength based on the fault status indication information. For example, if a wavelength indicated by the fault status indication information corresponding to the faulty ONU is a first wavelength, for specific descriptions of the first wavelength, refer to Embodiment 1. Details are not described in this embodiment. The fault indication processor 2122 determines a fault wavelength based on the first wavelength, where the fault wavelength and the first wavelength are different from each other, and an optical signal having the fault wavelength is a visible light signal. For example, if a display color of an optical signal having the first wavelength is blue, a display color of the optical signal having the fault wavelength is red. The fault wavelength is not limited in this embodiment, provided that the fault wavelength and the first wavelength are different from each other.

The fault indication processor 2122 sends a fault indication electrical signal to the fault indication light-emitting component 2121. The fault indication light-emitting component 2121 performs electrical-to-optical conversion on the fault indication electrical signal to generate a fault indication optical signal, where a wavelength of the fault indication optical signal is the fault wavelength.

It can be learned from Embodiment 1 that, a target optical cable 2130 is connected between the optical splitter 2101 and the ONU 2103, and if the operation and maintenance engineer determines that the ONU 2103 has a fault, the operation and maintenance engineer pulls out the target optical cable 2130 from a box of the optical splitter 2101, and the operation and maintenance engineer connects the target optical cable 2130 to the fault indication light-emitting component 2121, so as to ensure that a fault indication optical signal emitted by the fault indication light-emitting component 2121 can be transmitted to the third splitting module 2104 through the target optical cable 2130. The third splitting module 2104 can split the fault indication optical signal, so as to transmit a part of the fault indication optical signal to a fault indication out-light surface 2106, where the fault indication out-light surface 2106 can display the fault indication optical signal. For example, if a fault indication optical signal having a fault wavelength is blue, the fault indication out-light surface 2106 can display a blue optical signal.

This embodiment is described through an example in which an end part of the third light guide module 2105 includes the fault indication out-light surface 2106. For descriptions of a structure of the fault indication out-light surface 2106, refer to the descriptions of the out-light surface described in Embodiment 1. Details are not described in this embodiment. Optionally, for the fault indication out-light surface described in this embodiment, refer to FIG. 22. FIG. 22 is an example diagram of a structure of a sixth embodiment of an identification system according to this application. A fault indication out-light surface 2201 shown in FIG. 22 is in a location on a target optical fiber 2130 close to an ONU 2103, and the fault indication out-light surface 2201 is formed by etching the target optical fiber 2130. That is to say, when being transmitted to the fault indication out-light surface 2201, a fault optical signal can leak out from the fault indication out-light surface 2201, so as to be viewed by an operation and maintenance engineer.

In a scenario in which a large quantity of ONUs are densely deployed, if the operation and maintenance engineer determines that an ONU for which a display status is blue is a faulty ONU, the operation and maintenance engineer can quickly identify, from the large quantity of ONUs, an ONU for which a display status of an optical signal is blue, and disassemble the ONU for which the display status is blue.

It can be learned that through the identification system described in this embodiment, in a scenario in which a large quantity of ONUs are connected to the optical splitter and the ONUs are densely deployed, an operation and maintenance engineer can quickly and accurately identify an ONU having a fault based on a display status of a fault indication optical signal. In this way, a physical location of the faulty ONU is accurately determined, and efficiency and accuracy of disassembling the faulty ONU are improved.

### Embodiment 10

As described in Embodiment 1 to Embodiment 8, an example in which the out-light surface is located on the surface of the box of the optical splitter is used for description. However, in this embodiment, an example in which an out-light surface is located on an outer surface of an optical fiber connector is used. For example, the out-light surface is in a location in which the optical fiber connector is connected to a target socket. If the out-light surface is located on a joint of the optical fiber connector, the joint is connected to the target socket, so as to connect the optical fiber connector to the target socket. The out-light surface may alternatively be located on a flange or a female/male joint of the optical fiber connector or be in another location, which is not specifically limited, provided that the identification system can collect a display status of the out-light surface.

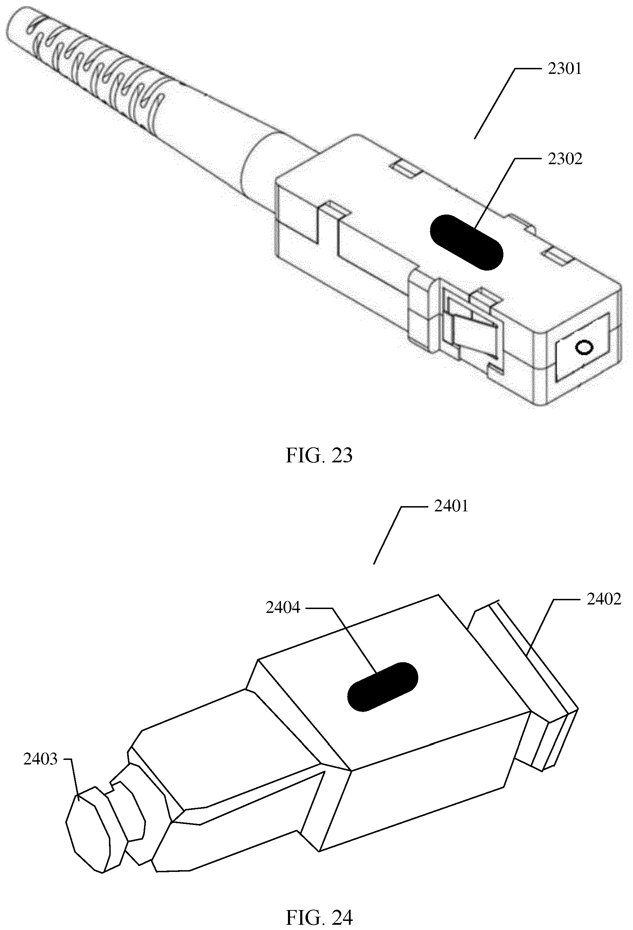

FIG. 23 is an example diagram of a structure of a first embodiment of an optical fiber connector according to this application.

The optical fiber connector 2301 described in this embodiment includes a splitting module and a light guide module, the splitting module is configured to receive a target optical signal from an optical network device and transmit the first optical signal to the light guide module, and the first optical signal is a partial optical signal of the target optical signal. For specific descriptions of the splitting module and the light guide module, refer to any one of the foregoing embodiments. Details are not described in this embodiment.

It can be learned that if the light guide module described in this embodiment is a through hole, the through hole is a through hole disposed through a surface of the optical fiber connector. For specific descriptions of the through hole, refer to Embodiment 1, and details are not described again.

An out-light surface 2302 of the light guide module is disposed on an outer surface of the optical fiber connector 2301 described in this embodiment. For specific descriptions of the out-light surface 2302, refer to the descriptions of the out-light surface in Embodiment 1, and details are not described again.

In this embodiment, when the optical fiber connector 2301 is inserted into a socket of an optical splitter and a terminal device records the optical fiber connector 2301, a display status of the out-light surface 2302 of the optical fiber connector 2301 can be collected, and a first target correspondence is obtained based on the display status of the out-light surface 2302 of the optical fiber connector 2301. For specific descriptions of a specific process, refer to the foregoing embodiments. Details are not described in this embodiment.

Alternatively, for a structure of the optical fiber connector described in this embodiment, refer to FIG. 24. FIG. 24 is an example diagram of a structure of a second embodiment of an optical fiber connector according to this application.

The optical fiber connector described in this embodiment includes a master optical fiber connector and a slave optical fiber connector 2401, and an optical network device sequentially performs transmission to an optical splitter through an optical cable, the master optical fiber connector, and the slave optical fiber connector 2401. For descriptions of a specific structure of the master optical fiber connector, refer to Embodiment 1. Details are not described in this embodiment.

The slave optical fiber connector 2401 described in this embodiment has a first end 2402 and a second end 2403 that are in communication with to each other. The first end 2402 is inserted into the master optical fiber connector. To achieve an objective that the first end 2402 can be connected to the master optical fiber connector, for descriptions of a specific structure of the first end 2402 described in this embodiment, refer to the descriptions of the structure of the socket of the adaptable optical fiber connector described in Embodiment 1. Details are not described in this embodiment.

The second end 2403 is inserted into a target socket. For descriptions of a structure of the second end 2403 described in this embodiment, refer to the descriptions of the FC-type optical fiber connector, the SC-type optical fiber connector, the LC-type optical fiber connector, the ST-type optical fiber connector, or the IFDD-type optical fiber connector described in Embodiment 1, which is not limited, provided that the second end 2403 described in this embodiment can be inserted into the target socket and transmit an optical signal.

The slave optical fiber connector 2401 includes a splitting module and a light guide module. For specific descriptions of the splitting module and the light guide module, refer to related descriptions shown in FIG. 23. Details are not described again. It can be learned that an out-light surface 2404 configured to display a display status of an identification optical signal is located on an outer surface of the slave optical fiber connector.

It can be learned that if the light guide module described in this embodiment is a through hole, the through hole is a through hole disposed through a surface of the slave optical fiber connector 2401. For specific descriptions of the through hole, refer to Embodiment 1, and details are not described again.

In this embodiment, when the master optical fiber connector and the slave optical fiber connector 2401 are connected and the slave optical fiber connector 2401 is inserted into the target socket, the terminal device records the surface of the optical fiber connector, and can collect the display status of the out-light surface 2404 of the slave optical fiber connector 2401 and obtain the first target correspondence based on the display status of the out-light surface 2404 of the slave optical fiber connector 2401. For specific descriptions of a specific process, refer to the foregoing embodiments. Details are not described in this embodiment.

As described in this embodiment, because a splitting module and a light guide module do not need to be disposed in the optical splitter, a quantity of components included in the optical splitter is reduced, integration of passive components in the optical splitter is avoided, and operation and maintenance of the optical splitter are simplified.

In conclusion, the foregoing embodiments are merely intended for describing the technical solutions of the present invention, but not for limiting this application. Although the present invention is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of the present invention.

## Claims

1. An identification method, wherein the method is applied to an optical splitting system, the optical splitting system comprises a splitting module and a light guide module, and the method comprises:
receiving, by the splitting module, a first target optical signal from an optical network device through a target socket, wherein the target socket is one of a plurality of sockets comprised on a surface of a box of the optical splitting system;
transmitting, by the splitting module, a first optical signal to the light guide module, wherein the first optical signal is a partial optical signal of the first target optical signal; and
displaying, by an out-light surface of the light guide module, the first optical signal, wherein a display status of the first optical signal corresponds to the optical network device.

2. The method according to claim 1, wherein the optical splitting system further comprises a branch optical splitter, the branch optical splitter comprises the splitting module, and before the transmitting, by the splitting module, a first optical signal to the light guide module, the method further comprises:
performing, by the branch optical splitter, optical splitting on the first target optical signal to obtain the first optical signal, wherein the first optical signal comprises a partial optical signal of an identification optical signal, and a display status of the identification optical signal corresponds to the optical network device.

3. The method according to claim 1, wherein the optical splitting system further comprises a branch demultiplexer, the branch demultiplexer comprises the splitting module, the splitting module is a demultiplexer, and before the transmitting, by the splitting module, a first optical signal to the light guide module, the method further comprises:
demultiplexing, by the demultiplexer, the first target optical signal to obtain the first optical signal, wherein the first optical signal is an identification optical signal, and a display status of the identification optical signal corresponds to the optical network device.

4. The method according to any one of claims 1 to 3, wherein the display status of the first optical signal in a target time segment comprises at least one of the following:
an on state that the first optical signal is in, an off state that the first optical signal is in, a state of switching between on and off of the first optical signal, duration in which the first optical signal is in an on state each time, duration in which the first optical signal is in an off state each time, an interval between two adjacent times that the first optical signal is in an on state, or a color displayed by the first optical signal.

5. The method according to any one of claims 1 to 4, wherein the display status of the first optical signal corresponds to an identifier and/or a type of the optical network device.

6. An identification method, wherein the method is applied to an optical network device, the optical network device comprises a processing module and a light-emitting component, and the method comprises:
encoding, by the processing module, an identifier and/or a type of the optical network device in a preset encoding manner to obtain an identification electrical signal, wherein the identification electrical signal corresponds to the identifier and/or the type of the optical network device;
converting, by the light-emitting component, the identification electrical signal from the processing module into an identification optical signal, wherein a display status of the identification optical signal corresponds to the identifier and/or the type of the optical network device; and
converting, by the light-emitting component, the identification electrical signal into an identification optical signal through electro-optical conversion, and sending the identification optical signal to an optical splitting system.

7. The method according to claim 6, wherein the light-emitting component comprises an identification light-emitting component, and the converting, by the light-emitting component, the identification electrical signal into an identification optical signal through electro-optical conversion comprises:
converting, by the identification light-emitting component, the identification electrical signal into a first identification optical signal having a first wavelength.

8. The method according to claim 7, wherein the light-emitting component further comprises a service light-emitting component, the optical network device further comprises a combiner, and the converting, by the light-emitting component, the identification electrical signal into an identification optical signal through electro-optical conversion, and sending the identification optical signal to an optical splitting system comprises:
transmitting, by the service light-emitting component, a service optical signal;
combining, by the combiner, the service optical signal and the first identification optical signal from the identification light-emitting component to form a first target optical signal; and
outputting, by the optical network device, the first target optical signal to the optical splitting system.

9. The method according to claim 6, wherein the light-emitting component comprises a plurality of identification light-emitting components, the plurality of identification light-emitting components comprise at least a first identification light-emitting component and a second identification light-emitting component, and the converting, by the light-emitting component, the identification electrical signal into an identification optical signal through electro-optical conversion comprises:
converting, by the first identification light-emitting component, a first identification electrical signal from the processing module into a second identification optical signal having a second wavelength; and
converting, by the second identification light-emitting component, a second identification electrical signal from the processing module into a third identification optical signal having a third wavelength, wherein the second wavelength and the third wavelength are different from each other.

10. The method according to claim 9, wherein the light-emitting component further comprises a service light-emitting component, the optical network device further comprises a first combiner and a second combiner, and the converting, by the light-emitting component, the identification electrical signal into an identification optical signal through electro-optical conversion, and sending the identification optical signal to an optical splitting system comprises:
combining, by the first combiner, the second identification optical signal from the first identification light-emitting component and a service optical signal to form a combined optical signal;
combining, by the second combiner, the combined optical signal and the third identification optical signal from the second identification light-emitting component to form a first target optical signal; and
sending, by the optical network device, the first target optical signal to the optical splitting system.

11. The method according to claim 6, wherein the light-emitting component comprises a service light-emitting component, and the method further comprises:
converting, by the processing module, service data into a service electrical signal;
converting, by the service light-emitting component, the service electrical signal into a service optical signal;
converting, by the service light-emitting component, the identification electrical signal into the identification optical signal; and
sending, by the service light-emitting component, the identification optical signal and the service optical signal to the optical splitting system in a time division mode.

12. The method according to any one of claims 6 to 11, wherein a bit change frequency of the identification optical signal is less than or equal to a frame rate of a camera, and the camera is configured to record the display status of the identification optical signal.

13. An identification method, wherein the method is applied to an electronic device, and the method comprises:
obtaining, by the electronic device, a display status of a first optical signal, wherein the first optical signal is a partial optical signal of a first target optical signal, and the first target optical signal is an optical signal from an optical network device;
obtaining, by the electronic device, a corresponding identifier and/or type of the optical network device based on the display status of the first optical signal; and
obtaining, by the electronic device, an identifier of a target socket, wherein the target socket is one of a plurality of sockets comprised on a surface of a box of an optical splitting system, the identifier of the target socket is for creating a first target correspondence, the first target correspondence comprises a correspondence between the identifier of the optical network device and the identifier of the target socket, and/or the first target correspondence comprises a correspondence between the type of the optical network device and the identifier of the target socket.

14. The method according to claim 13, wherein an out-light surface configured to display the first optical signal is located on the surface of the box, and the first target optical signal is an optical signal received by the optical splitting system from the optical network device through the target socket.

15. The method according to claim 13, wherein an out-light surface configured to display the first optical signal is located on an outer surface of an optical fiber connector, the optical fiber connector is connected to the target socket, and the first optical signal is an optical signal that is received from the optical network device and that is transmitted by the optical fiber connector.

16. The method according to any one of claims 13 to 15, wherein the obtaining, by the electronic device, a display status of a first optical signal comprises:
obtaining, by the electronic device, a video;
obtaining, by the electronic device, the display status of the first optical signal from the video; and
obtaining, by the electronic device, the identifier and/or the type of the optical network device from the display status of the first optical signal; and
the obtaining, by the electronic device, an identifier of a target socket comprises:
obtaining, by the electronic device, the identifier of the target socket from the video.

17. The method according to claim 16, wherein the first optical signal is invisible light, the electronic device is a terminal device, the terminal device is connected to an infrared detector, and the obtaining, by the electronic device, a video comprises:
recording, by the infrared detector, the display status of the first optical signal to obtain the video.

18. The method according to any one of claims 13 to 17, wherein if the display status of the first optical signal is a steady-off state, the steady-off state is for indicating that the target socket is not connected to the optical network device or the optical network device is in a non-operating state.

19. The method according to any one of claims 13 to 18, wherein the method further comprises:
obtaining, by the electronic device, a second target correspondence, wherein the second target correspondence comprises a correspondence between information about an optical line terminal and the optical splitting system, the electronic device obtains, based on a display status of a second target optical signal displayed at the optical splitting system, a correspondence between the optical splitting system and the information about the optical line terminal, and the second target optical signal is an optical signal from the optical line terminal;
obtaining, by the electronic device, a third target correspondence, wherein the third target correspondence comprises a correspondence between the optical network device and the information about the optical line terminal; and
creating, by the electronic device, a fourth target correspondence based on the first target correspondence, the second target correspondence, and the third target correspondence, wherein the fourth target correspondence comprises a correspondence between the information about the optical line terminal, the optical splitting system, and the optical network device.

20. The method according to claim 19, wherein the information about the optical line terminal comprises one or more of the following:
a geographic location, an equipment room identifier, a rack number, a subrack number, line card number, a slot number, a port number, a type, or an identifier.

21. An optical splitting system, wherein the optical splitting system comprises a surface of a box, the surface of the box comprises a plurality of sockets, and a target socket is one of the plurality of sockets comprised on the surface of the box; the optical splitting system further comprises a splitting module and a light guide module, the splitting module is configured to receive a first target optical signal from an optical network device through the target socket and transmit the first optical signal to the light guide module, and the first optical signal is a partial optical signal of the first target optical signal; and an out-light surface of the light guide module is configured to display the first optical signal, and a display status of the first optical signal corresponds to an identifier and/or a type of the optical network device.

22. The optical splitting system according to claim 21, wherein the splitting module is located in a branch optical splitter configured to perform optical splitting on the first target optical signal, or the splitting module is located in a branch demultiplexer configured to demultiplex the first target optical signal.

23. The optical splitting system according to claim 21 or 22, wherein the splitting module comprises a splitter, a first input optical cable, and a first output port, and the first input optical cable is connected to the target socket; and
the splitter is configured to receive the first target optical signal through the first input optical cable, the splitter is configured to perform optical splitting on the first target optical signal to obtain the first optical signal, the first optical signal comprises a partial optical signal of an identification optical signal, a display status of the identification optical signal corresponds to the identifier and/or the type of the optical network device, and the light guide module is configured to receive the first optical signal through the first output port.

24. The optical splitting system according to claim 21 or 22, wherein the splitting module comprises a demultiplexer, a second input optical cable, and a second output port, and the second input optical cable is connected to the target socket; and
the demultiplexer is configured to receive the first target optical signal through the second input optical cable, the demultiplexer is configured to demultiplex the first target optical signal to obtain the first optical signal, the first optical signal is an identification optical signal, a display status of the identification optical signal corresponds to the identifier and/or the type of the optical network device, and the light guide module is configured to receive the first optical signal through the second output port.

25. The optical splitting system according to any one of claims 21 to 24, wherein the light guide module comprises a light guide body, two end surfaces of the light guide body are an in-light surface and the out-light surface, the out-light surface passes through the box and is located on the surface of the box, and the light guide body is configured to receive the first optical signal through the in-light surface and is configured to transmit the first optical signal to the out-light surface.

26. The optical splitting system according to any one of claims 21 to 25, wherein the splitting module comprises a light-transmitting sleeve sleeved on an outer peripheral surface of an input optical cable, the first target optical signal transmitted by the input optical cable is for illuminating the light-transmitting sleeve, and the illuminated light-transmitting sleeve transmits the first optical signal to the light guide module; or the splitting module comprises a grating, wherein the grating is configured to separate the first optical signal from the first target optical signal, or the splitting module comprises a light guide cable in a bent state, wherein the light guide optical cable in the bent state is configured to separate the first optical signal from the first target optical signal.

27. The optical splitting system according to any one of claims 21 to 26, wherein an outer surface of the out-light surface has a coating layer made of a fluorescent material, and the coating layer is configured to convert the first optical signal into a visible light signal.

28. An optical network device, wherein the optical network device comprises a processing module and a light-emitting component connected to the processing module, wherein
the processing module is configured to encode an identifier and/or a type of the optical network device in a preset encoding manner to obtain an identification electrical signal, wherein the identification electrical signal corresponds to the identifier and/or the type of the optical network device; and
the light-emitting component is configured to convert the identification electrical signal from the processing module into an identification optical signal, wherein a display status of the identification optical signal corresponds to the identifier and/or the type of the optical network device; and the light-emitting component is further configured to convert the identification electrical signal into an identification optical signal through electro-optical conversion, and send the identification optical signal to an optical splitting system.

29. The optical network device according to claim 28, wherein the light-emitting component comprises an identification light-emitting component, configured to convert the identification electrical signal into a first identification optical signal having a first wavelength.

30. The optical network device according to claim 29, wherein the light-emitting component further comprises a service light-emitting component, the optical network device further comprises a combiner, and the service light-emitting component is configured to transmit a service optical signal; the combiner is configured to combine the service optical signal and the first identification optical signal from the identification light-emitting component to form a first target optical signal; and the combiner is further configured to output the first target optical signal to the optical splitting system.

31. The optical network device according to claim 28, wherein the light-emitting component comprises a plurality of identification light-emitting components, the plurality of identification light-emitting components comprise at least a first identification light-emitting component and a second identification light-emitting component that are connected to the processing module; and the first identification light-emitting component is configured to convert a first identification electrical signal from the processing module into a second identification optical signal having a second wavelength, and the second identification light-emitting component is configured to convert a second identification electrical signal from the processing module into a third identification optical signal having a third wavelength, wherein the second wavelength and the third wavelength are different from each other.

32. The optical network device according to claim 31, wherein the light-emitting component further comprises a service light-emitting component, the optical network device further comprises a first combiner and a second combiner, the first combiner is configured to combine the second identification optical signal from the first identification light-emitting component and a service optical signal form a combined optical signal, and the second combiner is configured to combine the combined optical signal and the third identification optical signal from the second identification light-emitting component to form a first target optical signal, and the second combiner is configured to output the first target optical signal to the optical splitting system.

33. The optical network device according to claim 28, wherein the light-emitting component comprises a service light-emitting component, and the processing module is configured to convert service data into a service electrical signal; and the service light-emitting component is configured to:
convert the service electrical signal into a service optical signal;
convert the identification electrical signal into the identification optical signal; and
send the identification optical signal and the service optical signal to the optical splitting system in a time division mode.

34. An optical fiber connector, wherein the optical fiber connector comprises a splitting module and a light guide module, the splitting module is configured to receive a first target optical signal from an optical network device and transmit the first optical signal to the light guide module, and the first optical signal is a partial optical signal of the first target optical signal; and an out-light surface of the light guide module is located on an outer surface of the optical fiber connector, the out-light surface is configured to display the first optical signal, and a display status of the first optical signal corresponds to an identifier and/or a type of the optical network device.

35. An electronic device, comprising a processing module and a memory, wherein the processing module is configured to read and execute a computer program stored in the memory, to perform the method according to any one of claims 13 to 20.

36. An identification system, comprising the optical splitting system according to any one of claims 21 to 27, the optical network device according to any one of claims 28 to 33, and the electronic device according to claim 35.

37. An identification system, comprising the optical network device according to any one of claims 21 to 27, the optical fiber connector according to claim 34, and the electronic device according to claim 35.
